# EUROPEAN PATENT SPECIFICATION

(11) **EP 0 774 477 B1**
(45) Date of publication and mention of the grant of the patent: **13.08.2003**
(21) Application number: 96118389.4
(22) Date of filing: 15.11.1996
(51) Int. Cl.: C08G 63/20, C08G 63/80, C08G 63/668

(54) **Copolyesters and molded articles comprising the same**
Copolyester und daraus geformte Gegenstände
Copolyesters et articles moulés comprenant ce copolyester

(30) Priority: 16.11.1995 JP 32130995; 01.12.1995 JP 31456495; 27.12.1995 JP 34054195
(43) Date of publication of application: 21.05.1997
(73) Proprietor: KURARAY CO., LTD., Kurashiki-City Okayama Prefecture 710 (JP)
(72) Inventor: Shinji, Tai, c/o Kuraray Co., Ltd., Kurashiki-City, Okayama-Pref. (JP); Tetsuya, Hara, c/o Kuraray Co., Ltd., Kurashiki-City, Okayama-Pref. (JP); Tsugunori, Kashimura, c/o Kuraray Co., Ltd., Kurashiki-City, Okayama-Pref. (JP)
(74) Representative: VOSSIUS & PARTNER

(56) References cited:
- GB-A- 2 073 225
- STOYKO FAKIROV ET AL: "POLYETHYLENETEREPHTHALATE WITH INCREASED VISCOSITY BY CHEMICAL CROSSLINKING" ANGEWANDTE MAKROMOLEKULARE CHEMIE, vol. 161, 1 July 1988, pages 33-45, XP000133372

## Description

The present invention relates to copolyesters, processes for producing the same, to molded articles obtained from the same, and to processes for producing the moled articles. More specifically, the present invention relates to copolyesters having a high melt viscosity and the non-Newtonian characteristics of exhibiting low viscosity at high shear rates and high viscosity at low shear rates and being provided with the excellent features on molding of generating no shark-skin flow or like melt fracture phenomena, suppressing the rate of crystallization and forming no gels, to processes for producing the same and to molded articles obtained from the same. Use of the copolyesters of the present invention for producing molded articles by extrusion blow molding or like melt molding processes insures smooth production of high-quality molded articles having excellent transparency, appearance and tactility and mechanical properties such as impact strength, as well as excellent heat resistance, moisture resistance and chemical resistance. In particular, the copolyesters of the present invention are suitably processed by extrusion blow molding.

Resins of polyesters including polyethylene terephthalate are excellent in various features such as transparency, mechanical properties, gas barrier properties and flavor barrier properties and, causing little worry with respect to residual monomers and toxic additives, in hygiene and safety, when molded into shaped articles. The resins have therefore become widely used in recent years, while replacing polyvinyl chloride resin, for hollow containers to be filled with juices, soft drinks, relishes, oil, cosmetics, cleansers and similar items.

Two representative processes for producing hollow shaped articles such as plastic containers may be extrusion blow molding which comprises extruding a melt plasticized resin through a die-orifice into cylindrical parisons and, while holding the parison as they are still softened, blowing a fluid such as air into the parison; and injection blow molding which comprises injecting a melted resin into a die to mold closed parisons (preforms) once and, after inserting them into a blow die, blowing a fluid such as air into the preforms.

Of the above processes, the former, i.e. extrusion blow molding, is more simple than the latter, i.e. injection blow molding, and needs no high techniques in preparing dies and for molding, and hence only requires low costs of equipment and die preparation. The extrusion blow molding is therefore suitable for multiple-product-small-quantity production and, further, has the advantage of being capable of producing thin, thick or large articles and complex-shaped articles having a knob or like irregular fittings.

Various attempts have therefore been made to conduct extrusion blow molding with general-purpose polyesters, such as polyethylene terephthalate and polybutylene terephthalate. However, general-purpose polyesters generally have low melt viscosity, so that, when they are extrusion blow molded, the parisons extruded markedly sag (drawdown) and become difficult to shape. In addition, crystallization tends to occur on blowing after extrusion, thereby deteriorating the transparency or shapability. These disadvantages of conventional polyesters as caused by their low melt viscosity and ready crystallizability are more marked when they are extrusion blow molded into long parisons having a length of, generally, at least 30 cm, which is required for producing large-size hollow molded shaped articles. As a result, it becomes very difficult to obtain shaped articles, in particular large hollow ones, having a uniform shape and size and, at the same time, good transparency from conventional polyesters by extrusion blow molding.

For the above reason, in conducting extrusion blow molding, there have been used polyvinyl chloride and polyolefin resins, which have high melt viscosity and cause the extruded parisons in a melted condition to sag only to a small extent. However, extrusion blow molded articles from polyvinyl chloride resin have some problems in hygiene or safety with respect to elution of toxic additives such as plasticizers and metal-containing stabilizers and, further, in that incineration of waste of the molded articles generates toxic gases. Their use has therefore been decreasing in Europe and other areas. Extrusion blow molding with polyolefins such as polyethylene results in that the resulting shaped articles become white turbid originating from crystals, so that the articles tend to have poor transparency and appearance.

In view of the above, several proposals with respect to polyester resins applicable to extrusion blow molding have therefore been made, for instance:
① US-A-5,182,359, EP-A-0 532 943 and JP-A-5-125165/1993 disclose a process for producing modified polyesters, which comprises using, on producing polyesters by reacting a dicarboxylic acid or ester-forming derivatives thereof with a diol component, the diol component containing an ethylene oxide adduct of bisphenol A.
② Comparative Example of the above EP-A-0 532 943 and JP-A-7- 207003/1995 disclose a process for producing copolyesters, which comprises, on producing polyesters by reacting a dicarboxylic acid or ester-forming derivatives thereof with a diol component, using the diol component of cyclohexanedimethanol or the like.
③ United States Defensive Publication T954,005 discloses a process for producing branched polyesters, which comprises using terephthalic acid, ethylene glycol, 1,4-cyclohexanedimethanol and a small amount of multi-functional branching agent compound.
④ US-A-4,161,579, 4,219,527 and 4,234,708 disclose a process for producing copolyesters to be processed by extrusion blow molding, which comprises using, besides a dicarboxylic acid component such as terephthalic acid or ester-forming derivatives thereof and a diol component such as ethylene glycol, a general-purpose multi-functional component such as trimethylolpropane, pentaerythritol or trimellitic acid and a chain terminator such as benzoic acid or stearic acid.
⑤ US-A-4,182,841 JP-A-55- 92730/1980 disclose a process for producing copolyesters processable by extrusion blow molding, which comprises subjecting a dicarboxylic acid component such as terephthalic acid or ester-forming derivatives thereof and a diol component such as ethylene glycol to esterification or transesterification to obtain a low-polymerization-degree compound, conducting polymerization of the compound with a conventional crosslinking agent such as trimethylolpropane, pentaerythritol or trimellitic acid to prepare a prepolymer and subjecting the prepolymer to solid phase polymerization.
⑥ US-A-4,554,329 discloses a process for producing copolyesters processable by extrusion blow molding, which comprises using terephthalic acid, isophthalic acid, a branching agent such as pentaerythritol and a terminating agent such as m-anisic acid.
⑦ US-A-3,558,557, 4,188,357 and 4,196,275 disclose a process for producing branched polyesters, which comprises using terephthalic acid, ethylene glycol, bisphenol A diglycol ether or bis[4-(2-hydroxyethoxy)phenyl] sulfone and a small amount of multi-functional branching agent compound.

With the prior art processes of the above ① and ②, the copolymerization of bisphenol A ethylene oxide adduct or cyclohexanedimethanol decreases the melting point of the resulting copolyesters. As a result, the melt extrusion temperature can be set at temperatures lower than before, so that the melt viscosity on extrusion blow molding can be increased. Even then, however, the melt viscosity is not high enough to conduct extrusion blow molding and hence the parison extruded sags severely and can hardly shaped neatly, so that extrusion blow molding cannot run smoothly. As another disadvantage in conducting molding at low temperatures, extrusion blow molded articles such as bottles generate a finely roughened surface, thereby deteriorating the appearance and tactility. In addition, the copolyesters obtained by the above prior art processes of ① and ② sometimes cannot undergo solid phase polymerization due to their low melting point. Or, if they can ever be solid phase polymerized, the rate of solid phase polymerization becomes very low and the degree of polymerization does not increase sufficiently. In this case the melt viscosity can hardly increase sufficiently and molded articles obtained from such polyesters tend to have poor transparency or large thickness variation.

With the above prior art process ③, where 1,4-cyclohexanedimethanol is copolymerized in a high ratio of 10 to 40 mole % based on total diol units, low-temperature molding is possible due to the lowered melting point or to the copolymer having been made amorphous. Besides, the melt viscosity tends to become higher than that of copolyesters obtained by the above processes ① and ② thanks to the branched structure formed by the multi-functional branching agent compound. However, the literature ③ does not mention solid phase polymerization at all. In fact, the copolyester obtained by the process ③, which is what is known an amorphous polymer or, if it be crystalline, has too low a melting point, cannot undergo solid phase polymerization. If the copolyester could be subjected to solid phase polymerization, the low melting point causes chips or pellets to stick together or the rate of polymerization becomes too low, so that a sufficiently high molecular weight cannot be achieved. Consequently, the melt viscosity of the obtained copolyester is not high enough to conduct extrusion blow molding, so that the extruded parison sags severely and cannot be shaped neatly and extrusion blow molding cannot be carried out smoothly. In addition, the process ③, like the above prior art processes ① and ②, tends to cause, suffering the disadvantage on molding at low temperatures, the obtained extrusion blow molded articles to have a finely roughened surface, which deteriorates their appearance or tactility. Furthermore, high-temperature drying of the copolyester before molding leads to sticking together of chips or pellets and hence the drying should necessarily be conducted at a low temperature, which requires a long-time drying with a large-scale drying apparatus such as vacuum dryer and thus decreases the productivity. If the copolyester is amorphous, its chips or pellets tend to stick together at the bottom part of the hopper of extruder, which would stop extrusion operation.

The copolyester obtained by the prior process ④, where a crosslinking agent comprising a multi-functional compound and a chain terminator such as benzoic acid or stearic acid are used in combination, has a higher melt viscosity and melt strength as compared with ethylene-terephthalate homopolymer but has a higher rate of crystallization. The copolyester therefore forms spherulites on extrusion, so that the obtained extrusion blow molded articles undergo severe whitening and have poor transparency. In addition, on production of long parisons having a length of 30 cm or more by extrusion blow molding to produce large-size hollow articles, the bottom part of the parisons solidifies due to crystallization, so that the pinch-off part of the bottom part of the obtained bottles or like containers becomes poorly sealed. Besides, the obtained molded articles tend to have, like with the above processes ① through ③, a minutely roughened surface, thereby showing poor appearance and tactility. With respect to the productivity of the copolyester, because the degree of crystallization increases sharply, the diffusion of ethylene glycol in the polymer, which is necessary for increasing the rate of polymerization, is hindered and hence it becomes difficult to produce the desired copolyester smoothly. Furthermore, the copolyester obtained by the process ④, which has an unusually high degree of crystallization, frequently forms, in the extrusion step of extrusion blow molding, unmelted agglomerates, thereby hardly yielding good molded articles. These various disadvantages become more marked when the rate of resin extrusion is set at high levels, as is the case for the production of large-size hollow molded articles.

The copolyester obtained by the above prior art process ⑤ has, like the one obtained by the above process ④, higher rate of crystallization as compared with ethylene terephthalate homopolymer. The copolyester therefore forms spherulites on extrusion of parison, so that the obtained extrusion blow molded articles undergo severe whitening and have poor transparency. In addition, on production of long parisons having a length of 30 cm or more by extrusion blow molding to produce large-size hollow articles, the lower part of the parisons solidifies due to crystallization, so that the pinch-off part of the bottom part of the obtained bottles or like containers becomes poorly sealed. Besides, the degree of crosslinking of the copolyester cannot be controlled suitably, leading to formation of an over-crosslinked state, which causes gels to generate as agglomerates in molded articles and deteriorates the appearance. Furthermore, the obtained molded articles tend to have, like with the above processes ① through ④, a minutely roughened surface, thereby showing poor appearance and tactility. The above U.S.P. 4,182,841 and Japanese Patent Application Laid-open No. 92730/1980, which are mentioned above as the prior art, describe that a small amount of isophthalic acid or neopentyl glycol can be copolymerized. In this case, the crystallization rate of the copolyester is suppressed, so that the early solidification of the bottom part of parison on producing hollow molded articles and the whitening of the hollow molded articles are reduced to some extent. The over-crosslinked state will, however, still cause gels to generate and molded articles to have roughened surface.

The above prior art process ⑥ describes that copolymerization of a branching agent such as pentaerythritol and a terminating agent such as m-anisic acid, followed by solid phase polymerization, leads to production of copolyesters having a high melt viscosity and a high shear sensitivity of melt viscosity and generating less gels caused by over-crosslinkage. Besides, copolymerization of a bifunctional component of isophthalic acid suppresses the crystallization rate of the copolyester, thereby lowering its crystallization rate at the bottom part of parison on production of hollow molded articles. Then, the solidification of the bottom part of parison on producing hollow molded articles and the whitening of the hollow molded articles tend to be reduced to some extent. However, on extrusion of the copolyester of the process ⑥ into a long parison having a length of 30 cm or more to produce large-size hollow molded articles, the bottom part of the parison extruded at first crystallizes, which whitens the bottom part of the hollow molded articles. Furthermore, the process ⑥ causes, like with the above processes ① through ⑤, the obtained molded articles to have minute roughening of the surface, which deteriorates the appearance and tactility markedly. In particular, where the throughput exceeds 20 kg/hr, as is the case of producing large-sized hollow molded articles by extruding a long parison having a length of 30 cm or more, the minute surface roughening becomes more marked and, at the same time, unmelted agglomerates tend to generate in the molded articles due to difficult melting of crystals.

With the above prior art ⑦, which comprises copolymerizing bisphenol A diglycol ether or bis[4-(2-hydroxyethoxy)phenyl] sulfone, low-temperature molding is possible thanks to the amorphous state or decrease in the melting point. In addition, the obtained copolyester tends to have a higher melt viscosity as compared with the copolyesters obtained by the prior art processes ① and ② thanks to the branched structure formed by the multi-functional branching agent compound used. However, the prior art ⑦ never mention solid phase polymerization, like the prior art ③. The copolyester obtained by the process ⑦, with the degree of polymerization increased only by melt polymerization, should have a low maximum achievable molecular weight. The copolyester therefore has an insufficiently high melt viscosity, which causes, on extrusion blow molding of large-size hollow articles requiring extrusion of a long parison having a length of 30 cm or more, the extruded parison to undergo severe drawdown. It is difficult to shape such a parison suitably and further to conduct extrusion blow molding operation smoothly. One may attempt, in order to obtain a copolyester having a high intrinsic viscosity by melt polymerization, to use large amounts of bisphenol A diglycol ether or bis[4-(2-hydroxyethoxy)phenyl] sulfone and a multi-functional branching agent compound. This would cause, on the melt polymerization, the copolyester to be exposed to high temperature for a long period of time, leading to thermal decomposition of bisphenol A diglycol ether, bis[4-(2-hydroxyethoxy)phenyl] sulfone and the like. The copolyester would then have a poor color tone and the melt viscosity would not be controlled properly. The copolyester would, when subjected to extrusion blow molding, give molded articles with deteriorated appearance and tactility and could hardly be molded smoothly. Besides, the process ⑦ tends, like with the above processes ① through ③ , to have the disadvantage inherent to low-temperature molding of causing the obtained molded articles to have a minutely roughened surface, which deteriorates the appearance and tactility. Furthermore, where the amount of bisphenol A diglycol ether or bis [4-(2-hydroxyethoxy)phenyl] sulfone copolymerized has been increased and the crystallinity of the resulting chips has decreased, drying the copolyester at a high temperature before molding causes the chips or pellets to stick together, so that they have to be dried at a low temperature. This requires long-time drying with a large-size apparatus such as vacuum dryer, thereby decreasing the productivity. Where the copolyester is amorphous, the obtained chips or pellets tend to stick together at the bottom part of the hopper of extruder and render it impossible to continue extrusion operation.

Furthermore, the copolyesters obtained by the above processes ① through ⑦, as well as molded articles therefrom, cannot be said to have sufficiently high mechanical properties such as falling impact strength. While hollow molded articles such as bottles should have a falling impact strength of at least 1 m, our experiments of extrusion blow molding bottles from the copolyesters obtained by the processes ① through ⑦ showed that all of the bottles had a falling impact strength of less than 1 m, thus proving to have problems for practical purposes. In particular, bottles having a capacity of 1 liter or more, which would receive a large fracture energy, tended to break readily. Bottles from the copolyesters obtained by the prior art process ⑥ are particularly inferior in the falling impact strength, which fact is considered to be due to decrease in the mechanical properties of the copolyester as caused by copolymerization of isophthalic acid.

The present inventors also conducted, separate from the prior art processes ① through ⑦, a follow-up experiment to produce by solid phase polymerization a polyethylene terephthalate having a high degree of polymerization. However, it was found that the rate of the solid phase polymerization was very low, so that it was impossible to produce, in a short period of time and efficiently, a polyethylene terephthalate having a sufficiently high degree of polymerization and melt viscosity suitable for extrusion blow molding and like processes. This method is hence not applicable in practice from the viewpoint of productivity.

Accordingly, an object of the present invention is to solve the above problems and provide a polyester having the following features:
(1) having a sufficiently high melt viscosity, thereby causing, on extrusion blow molding, the extruded parison to undergo no drawdown and be shaped into hollow articles smoothly;
(2) having a low crystallization rate, so that the parison extruded forms no spherulites and the obtained extrusion blow molded articles and like molded articles to suffer no whitening and thus have good transparency;
(3) not causing, on molding large-size hollow articles by extruding long parisons having a length of 30 cm or more, the bottom part of the parisons to undergo solidification, so that the obtained bottles and like shaped articles do not suffer poor sealing of the pinch-off part at their bottom;
(4) being capable of yielding various molded articles having excellent appearance and tactility with no finely roughened surface;
(5) forming only few unmelted crystals or gels resulting from over-crosslinkage and thus being capable of yielding molded articles having no spots or agglomerates and having good transparency and appearance;
(6) being capable of yielding molding articles with excellent impact strength; and
(7) having high rate of solid phase polymerization and good productivity;
thus having excellent melt moldability, in particular extrusion melt moldability and being capable of yielding, at high precision and smoothly, high-quality molded articles having good dimensional stability, size precision, appearance, tactility and transparency.

Another object of the present invention is to provide a process for producing, in a short period of time and with good productivity, the polyester having the above excellent features.

Still another object of the present invention is to provide a process for producing shaped articles by melt molding, in particular extrusion blow molding, the polyester having the above excellent features.

Yet another object of the present invention is to provide molded articles by the above molding process.

Under the above situation, various attempts have been made, while centering on the above-described high performance of polyester resins and their ever developing end-uses, in particular those related to extrusion blow molding to produce large-size hollow articles, to create new copolyesters based on polyethylene terephthalate. One of the attempts has succeeded in obtaining a high-polymerization-degree polyester in a short period of time by the following process. The process comprises conducting esterification of a dicarboxylic acid component comprising terephthalic acid and a diol component comprising ethylene glycol and a small amount of bisphenol A ethylene oxide adduct, then conducting polymerization in a melted state to obtain a prepolymer and subjecting the prepolymer to solid phase polymerization. This polyester has been found to be able to exhibit high melt viscosity on extrusion blow molding and yield hollow articles having excellent transparency and appearance. See JP-A-6-99476/1994 and JP-A-7-258396/1995.

The present inventors have further studied while taking the above findings into account, to find the following fact.

That is, solid phase polymerization of a polyester principally comprising terephthalic acid units and ethylene glycol units and, further, specific amounts of units from a specific bifunctional compound, units from a specific tri- or more multi-functional compound and units from a specific monofunctional compound can yield, in as short a period of time as with the process of the above JP-A-6-99476/1994 and JP-A-7-258396/1995, a copolyester having a high degree of polymerization and having the non-Newtonian properties of exhibiting a high viscosity at low shear rates and a low viscosity at high shear rates. The copolyester can be melt molded by various processes more smoothly than by the processes of the above JP-A-6-99476/1994 and JP-A-7-258396/1995.

The copolyester is particularly suitable for processing by extrusion blow molding, which comprises extruding a long parison having a length of 30 cm or more, into large-size hollow articles. On extrusion blow molding, the copolyester has a sufficiently high melt viscosity, thereby causing no drawdown of extruded parison and smoothly yielding hollow articles having excellent transparency, color shade, appearance and tactility.

It has also been found that this copolyester developed by the present inventors has a low crystallization rate and, on extrusion of parison during extrusion blow molding, forms no spherulites. The obtained blow molded articles then suffer no whitening and have excellent transparency. On extrusion of a long parison having a length of 30 cm or more to produce large-size hollow articles, the parison does not undergo solidification by crystallization at its lower part and causes no poor sealing at the pinch-off part of the bottom part of the resulting bottles or like shaped articles. It has further been found that the copolyester exhibits an appropriate shear stress on melt molding, thereby yielding shaped articles having excellent appearance and tactility with no surface roughening. Because the degree of crosslinkage of the copolyester has been well adjusted, the obtained molded articles have no gels as caused by over-crosslinkage and thus have excellent transparency and, at the same time, have good mechanical properties.

The present inventors have also found that the copolyester, having a high rate of solid phase polymerization, can be produced at a good productivity and economically.

The present invention provides:
(1) a copolyester consisting essentially of terephthalic acid units and ethylene glycol units,
(2) said copolyester further comprising:
   (i) at least one group of units (a₁) from an alicyclic or aliphatic bifunctional compound selected from the group consisting of alicyclic or aliphatic dicarboxylic acids, diols and hydroxycarboxylic acids other than ethylene glycol, in an amount of 1 to 4 mole % based on the moles of total constituting units of said copolyester;
   (ii) units (b₁) from at least one multi-functional compound having at least 3 carboxyl groups, hydroxyl groups and/or ester-forming groups of the foregoing, in an amount of 0.005 to 1 mole % based on the moles of total constituting units of said copolyester; and
   (iii) units (c) from at least one monofunctional compound selected from the group consisting of monocarboxylic acids, monohydric alcohols and ester-forming derivatives of the foregoing, in an amount satisfying the following formula (α):${\text{{20 x (p - 2) x b}}_{\text{1}} {\text{} ≧ c ≧ {0.1 x (p - 2) x b}}_{\text{1}} \text{}}$ where:
      - b₁ =: content (mole %) of units (b₁) from said multi-functional compound in said copolyester
      - c =: content (mole %) of units (c) from said monofunctional compound in said copolyester
      - p =: average number of functional groups of said multi-functional compound deriving said units (b₁).

Hereinafter this copolyester is sometimes referred to as "copolyester (A)".

The present invention also provides a process for producing the above copolyester (A), which comprises:
(1) subjecting to esterification or transesterification starting materials consisting essentially of a dicarboxylic acid component comprising terephthalic acid or ester-forming derivatives thereof and a diol component comprising ethylene glycol, said starting materials further comprising:
   (a) at least one alicyclic or aliphatic bifunctional compound selected from the group consisting of alicyclic or aliphatic dicarboxylic acids, hydroxycarboxylic acids and ester-forming derivatives of the foregoing and alicyclic or aliphatic diols other than ethylene glycol;
   (b) at least one multi-functional compound having at least 3 carboxyl groups, hydroxyl groups and/or ester-forming groups of the foregoing; and
   (c) at least one monofunctional compound selected from the group consisting of monocarboxylic acids, monohydric alcohols and ester-forming derivatives of the foregoing;
      ① the content of said alicyclic or aliphatic bifunctional compound in said starting materials being such that the ratio between units (a₁) from said alicyclic or aliphatic bifunctional compound and total constituting units of the resulting copolyester becomes 1 to 4 mole % based on the moles of the total constituting units;
      ② the content of said multi-functional compound in said starting materials being such that the ratio between units (b₁) from said multi-functional compound and total constituting units of the resulting copolyester becomes 0.005 to 1 mole % based on the moles of the total constituting units; and
      ③ the content of said monofunctional compound in said starting materials being such that the ratio between units (c) from said monofunctional compound and total constituting units of the resulting copolyester based on the moles of total constituting units satisfies the following formula (α)${\text{{20 x (p - 2) x b}}_{\text{1}} {\text{} ≧ c ≧ {0.1 x (p - 2) x b}}_{\text{1}} \text{}}$ where:
         - b₁ =: content (mole %) of units (b₁) from said multi-functional compound in the resulting copolyester
         - c =: content (mole %) of units (c) from said monofunctional compound in the resulting copolyester
         - p =: average number of functional groups of said multi-functional compound deriving said units (b₁);
(2) melt polycondensing the ester obtained in the above step (1) to prepare a polyester prepolymer; and
(3) subjecting said polyester prepolymer obtained in the above step (2) to solid phase polymerization.

The present invention further provides:
(1) a copolyester consisting essentially of terephthalic acid units and ethylene glycol units,
(2) said copolyester further comprising:
   (i) at least one group of bifunctional compound units (a₂) selected from the group consisting of:
      (a) diol units (I) each represented by the following formula (I) 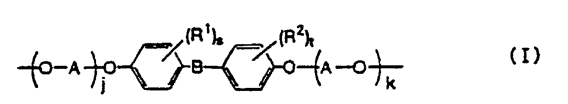 wherein A is a group represented by formula -CH₂CH₂- or formula -CH(CH₃)CH₂-, B is a divalent hydrocarbon group, a carbonyl group, a sulfonyl group, an oxygen atom or a direct bond (-), R¹ and R² are each, independently, an inert substituent, j and k are each independently an integer of 0 to 8 and s and t are each, independently, an integer of 0 to 4; and
      (b) diol units (II) each represented by the following formula (II) 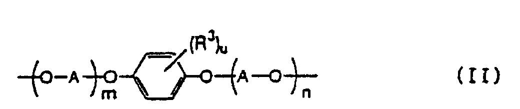 wherein A is a group represented by formula -CH₂CH₂- or formula -CH(CH₃)CH₂-, R³ is an inert substituent, m and n are each, independently, an integer of 0 to 8 and u is an integer of 0 to 4;
         in an amount of 0.5 to 7 mole % based on the moles of total constituting units of said copolyester;
   (ii) multi-functional compound units (b₁) derived from at least one multi-functional compound having at least 3 carboxyl groups, hydroxyl groups and/or ester-forming groups of the foregoing, in an amount of 0.005 to 1 mole % based on the moles of total constituting units of said copolyester; and
   (iii) monofunctional compound units (c) derived from at least one monofunctional compound selected from the group consisting of monocarboxylic acids, monohydric alcohols and ester-forming derivatives of the foregoing, in an amount satisfying the following formula (α) :${\text{{20 x (p - 2) x b}}_{\text{1}} {\text{} ≧ c ≧ {0.1 x (p - 2) x b}}_{\text{1}} \text{}}$ where:
      - b₁ =: content (mole %) of units (b₁) from said multi-functional compound in said copolyester
      - c =: content (mole %) of units (c) from said monofunctional compound in said copolyester
      - p =: average number of functional groups of said multi-functional compound deriving said units (b₁).

Hereinafter this copolyester is sometimes referred to as "copolyester (B)".

The present invention still further provides a process for producing the above copolyester (B), which comprises:
(1) subjecting to esterification or transesterification starting materials consisting essentially of a dicarboxylic acid component comprising terephthalic acid or ester-forming derivatives thereof and a diol component comprising ethylene glycol, said starting materials further comprising:
   (i) at least one bifunctional compound selected from the group consisting of:
      (a) diols (III) represented by the following formula (III) 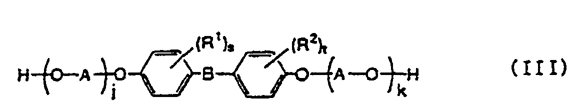 wherein A is a group represented by formula -CH₂CH₂- or formula -CH(CH₃)CH₂-, B is a divalent hydrocarbon group, a carbonyl group, a sulfonyl group, an oxygen atom or a direct bond (-), R¹ and R² are each, independently, an inert substituent, j and k are each independently an integer of 0 to 8 and s and t are each, independently, an integer of 0 to 4;
      (b) diols (IV) represented by the following formula (IV) 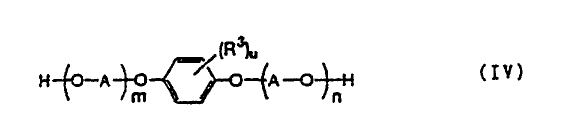 wherein A is a group represented by formula -CH₂CH₂- or formula -CH(CH₃)CH₂-, R³ is an inert substituent, m and n are each, independently, an integer of 0 to 8 and u is an integer of 0 to 4; and
      (c) ester-forming derivatives of the above (a) and (b) ;
   (ii) at least one multi-functional compound having at least 3 carboxyl groups, hydroxyl groups and/or ester-forming groups of the foregoing; and
   (iii) at least one monofunctional compound selected from the group consisting of monocarboxylic acids, monohydric alcohols and ester-forming derivatives of the foregoing;
      ① the content of said bifunctional compound in said starting materials being such that the ratio between diol units (I) and/or diol units (II), and total constituting units of the resulting copolyester becomes 0.5 to 7 mole % based on the moles of the total constituting units;
      ② the content of said multi-functional compound in said starting materials being such that the ratio between units (b₁) from said multi-functional compound and total constituting units of the resulting copolyester becomes 0.005 to 1 mole % based on the moles of the total constituting units; and
      ③ the content of said monofunctional compound in said starting materials being such that the ratio between units (c) from said monofunctional compound and total constituting units of the resulting copolyester based on the moles of the total constituting units satisfies the following formula (α)${\text{{20 x (p - 2) x b}}_{\text{1}} {\text{} ≧ c ≧ {0.1 x (p - 2) x b}}_{\text{1}} \text{}}$ where:
         - b₁ =: content (mole %) of units (b₁) from said multi-functional compound in the resulting copolyester
         - c =: content (mole %) of units (c) from said monofunctional compound in the resulting copolyester
         - p =: average number of functional groups of said multi-functional compound deriving said units (b₁);
(2) melt polycondensing the ester obtained in the above step (1) to prepare a polyester prepolymer; and
(3) subjecting said polyester prepolymer obtained in the above step (2) to solid phase polymerization.

The present invention yet further provides:
(1) a copolyester consisting essentially of terephthalic acid units and ethylene glycol units,
(2) said copolyester further comprising:
   (i) at least one group of bifunctional compound units (a₃) selected from the group consisting of units from a condensed ring type aromatic dicarboxylic acid and units from a ring assembly type aromatic dicarboxylic acid, in an amount of 0.5 to 7 mole % based on the moles of total constituting units of said copolyester;
   (ii) multi-functional compound units (b₁) derived from at least one multi-functional compound having at least 3 carboxyl groups, hydroxyl groups and/or ester-forming groups of the foregoing, in an amount of 0.005 to 1 mole % based on the moles of total constituting units of said copolyester; and
   (iii) monofunctional compound units (c) from at least one monofunctional compound selected from the group consisting of monocarboxylic acids, monohydric alcohols and ester-forming derivatives of the foregoing, in an amount satisfying the following formula (α):${\text{{20 x (p - 2) x b}}_{\text{1}} {\text{} ≧ c ≧ {0.1 x (p - 2) x b}}_{\text{1}} \text{}}$ where:
      - b₁ =: content (mole %) of units (b₁) from said multi-functional compound in said copolyester
      - c =: content (mole %) of units (c) from said monofunctional compound in said copolyester
      - p =: average number of functional groups of said multi-functional compound deriving said units (b₁).

Hereinafter this copolyester is sometimes referred to as "copolyester (E)".

The present invention yet further provides a process for producing the above copolyester (E), which comprises:
(1) subjecting to esterification or transesterification starting materials consisting essentially of a dicarboxylic acid component comprising terephthalic acid or ester-forming derivatives thereof and a diol component comprising ethylene glycol, said starting materials further comprising:
   (a) at least one bifunctional compound selected from condensed ring type aromatic dicarboxylic acids and ring assembly type aromatic dicarboxylic acids;
   (b) at least one multi-functional compound having at least 3 carboxyl groups, hydroxyl groups and/or ester-forming groups of the foregoing; and
   (c) at least one monofunctional compound selected from the group consisting of monocarboxylic acids, monohydric alcohols and ester-forming derivatives of the foregoing;
      ① the content of said bifunctional compound in said starting materials being such that the ratio between units (a₃) from said bifunctional compound and total constituting units of the resulting copolyester becomes 0.5 to 7 mole % based on the moles of the total constituting units;
      ② the content of said multi-functional compound in said starting materials being such that the ratio between units (b₁) from said multi-functional compound and total constituting units of the resulting copolyester becomes 0.005 to 1 mole % based on the moles of the total constituting units; and
      ③ the content of said monofunctional compound in said starting materials being such that the ratio between units (c) from said monofunctional compound and total constituting units of the resulting copolyester based on the moles of the total constituting units satisfies the following formula (α )${\text{{20 x (p - 2) x b}}_{\text{1}} {\text{} ≧ c ≧ {0.1 x (p - 2) x b}}_{\text{1}} \text{}}$ where:
         - b₁ =: content (mole %) of units (b₁) from said multi-functional compound in the resulting copolyester
         - c =: content (mole %) of units (c) from said monofunctional compound in the resulting copolyester
         - p =: average number of functional groups of said multi-functional compound deriving said units (b₁) ;
(2) melt polycondensing the ester obtained in the above step (1) to prepare a polyester prepolymer; and
(3) subjecting said polyester prepolymer obtained in the above step (2) to solid phase polymerization.

The present invention also relates to molded articles, in particular extrusion blow molded articles, comprising any one of the above copolyesters (A), (B) and (E).

The present invention also relates to processes for producing molded articles, which comprise conducting extrusion blow molding of the above copolyesters (A), (B) and (E).

The present invention is now described in detail.

The copolyesters (A), (B) and (E) of the present invention (hereinafter sometimes referred to simply as "copolyesters of the present invention") consist essentially of terephthalic acid units and ethylene glycol units and further comprise other copolymerization units.

It is generally preferred that the copolyesters of the present invention contain terephthalic acid units and ethylene glycol units in an amount in total of about 70 to 98 mole % based on the moles of total constituting units of the copolyesters, more preferably 90 to 98 mole % on the same basis. With a total content of terephthalic acid units and ethylene glycol units in the copolyesters of less than 70 mole %, the copolyesters become amorphous and hence hardly achieve high degree of polymerization by solid phase polymerization. On the other hand, with the total content exceeding 98 mole %, the crystals of the copolyesters cannot be melted easily, so that molded articles tend to have many unmelted agglomerates.

The copolyester (A) of the present invention contains, in addition to terephthalic acid units and ethylene glycol units, at least one group of units (a₁) from an alicyclic or aliphatic bifunctional compound selected from the group consisting of alicyclic or aliphatic dicarboxylic acids, alicyclic or aliphatic diols other than ethylene glycol and alicyclic or aliphatic hydroxycarboxylic acids, in an amount of 1 to 4 mole % based on the moles of total constituting units of the copolyester (A).

With the copolyester (A), it is necessary as described above that the bifunctional compound units (a₁) be units from an alicyclic or aliphatic compound. If, for instance, the bifunctional compound units (a₁) are isophthalic acid units, hydroxybenzoic acid units or the like, the resulting copolyester will give, when extrusion blow molded, bottles and like molded articles having finely roughened surface, which markedly impairs their appearance and tactility. In particular, on molding large-size bottles or like shaped articles at a throughput of 20 kg/hr or more, the surface roughening becomes more severe and, also, the molded articles have poor impact strength.

As the alicyclic or aliphatic bifunctional compound units (a₁), any alicyclic or aliphatic dicarboxylic acid or diol units other than ethylene glycol units or any hydroxycarboxylic acid units may be used. Preferred examples of the units (a₁) from an alicyclic or aliphatic bifunctional compound are those from aliphatic dicarboxylic acids, e.g. malonic acid, succinic acid, adipic acid, azelaic acid and sebacic acid; alicyclic acids, e.g. decalindicarboxylic acid and cyclohexanedicarboxylic acid; ester-forming derivatives of the foregoing; aliphatic diols, e.g. 1,3-propanediol, tetramethylene glycol, hexamethylene glycol, neopentyl glycol and 2-butyl-2-ethyl-propanediol; alicyclic diols, e.g. cyclohexanedimethanol; hydroxycarboxylic acids (lactonic acids), e.g. glycolic acid, hydroxyacrylic acid and hydroxypropionic acid; and ester-forming derivatives of the foregoing. The copolyester (A) of the present invention may contain, as the alicyclic or aliphatic bifunctional compound units (a₁), either only one of the above structural unit or two or more thereof.

With the copolyester (A) of the present invention, if the alicyclic or aliphatic acid units (a₁) are cylcohexanedimethanol units and/or cyclohexanedicarboxylic acid units, the copolyester (A) will become readily producible and give molded articles having higher impact strength.

The term "cyclohexanedimethanol units" herein means at least one group of units selected from the group consisting of 1,2-cyclohexanedimethanol units, 1,3-cyclohexanedimethanol units and 1,4-cyclohexanedimethanol units. The term "cyclohexanedicarboxylic acid units" means at least one group of units selected from the group consisting of 1,2-cyclohexanedicarboxylic acid units, 1,3-cyclohexanedicarboxylic acid units and 1,4-cyclohexanedicarboxylic acid units. It is more preferred to select, as the alicyclic or aliphatic bifunctional compound units (a₁), 1,4-cyclohexanedimethanol units and/or 1,4-cyclohexanedicarboxylic acid units, which are readily available and which provide the copolyester (A) and molded articles therefrom with still higher impact strength.

With the copolyester (A) of the present invention, it is necessary that the alicyclic or aliphatic bifunctional compound units (a₁) be contained in an amount (when 2 or more groups of units from alicyclic or aliphatic compounds are contained, the sum of these units) of 1 to 4 mole % based on the moles of total constituting units of the copolyester (A).

If less than 1 mole % of the bifunctional compound units (a₁) is contained, the resulting copolyester may have too high a crystallization rate, thereby generating spherulites on melt molding, which cause whitening to impair the transparency of molded articles therefrom. Besides, on molding large-size hollow articles requiring extrusion of a long parison having a length of at least 30 cm, the bottom part of the parison solidifies at an early stage due to crystallization, so that the pinch-off part at the bottom of bottles or like molded articles become poorly sealed. Too high a crystallinity also causes, on melt molding, molded articles to form unmelted agglomerates and have poor appearance.

On the other hand, if the content of the alicyclic or aliphatic bifunctional compound units (a₁) exceeds 4 mole %, the resulting copolyester may have too low a melting point and hence become unable to undergo solid phase polymerization. If solid phase polymerization can ever be conducted in this case, the rate of solid phase polymerization will become extremely low, so that the degree of polymerization cannot increase to a desired level and the obtained copolyester and molded articles therefrom have poor mechanical strength.

The content of the alicyclic or aliphatic bifunctional compound units (a₁) in the copolyester (A) is preferably in a range of 2 to 4 mole % based on the moles of total constituting units of the copolyester (A). This range insures that the resulting copolyester (A) can be produced at high productivity and that the copolyester (A) exhibits a sufficiently high melt viscosity, thereby undergoing melt molding such as extrusion blow molding more smoothly and yielding molded articles having still better transparency and mechanical properties.

The copolyesters (B) of the present invention contains, in addition to terephthalic acid units and ethylene glycol units, at least one group of bifunctional compound units (a₂) selected from the group consisting of diol units each represented by the above general formula (I) and diol units each represented by the above general formula (II), in an amount of 0.5 to 7 mole % based on the moles of total constituting units of the copolyesters. If, for instance, the bifunctional compound units (a₂) are isophthalic acid units, hydroxybenzoic acid units or the like, the resulting copolyester will give, when extrusion blow molded, bottles and like molded articles having finely roughened surface, which markedly impairs their appearance and tactility. In particular, on molding large-size bottles or like shaped articles at a throughput of 20 kg/hr or more, the surface roughening becomes more severe and, also, the molded articles have poor impact strength.

In the diol units (I) and/or diol units (II) of the copolyester (B) of the present invention, the group A is a group (ethylene group) represented by formula -CH₂CH₂- or a group (1,2-propylene group) represented by formula -CH(CH₃)CH₂-. With the copolyester (B) of the present invention and with the diol units (I) and/or diol units (II) contained therein, all of the group A may be ethylene group, all of the group A may be 1,2-propylene group, or part of the group A may be ethylene group with the rest being 1,2-propylene group. Among these cases, it is desirable that the group A in the diol units (I) and/or diol units (II) in the copolyester (B) be ethylene group in view of easiness of production of the copolyesters and production cost.

The group B in the diol units (I) is a divalent hydrocarbon group, a carbonyl group, a sulfonyl group, an oxygen atom or a direct bond (-). Where the group B is a divalent hydrocarbon group, the group is desirably an alkylene group or alkylidene group having 1 to 8 carbon atoms or a divalent aromatic group. Concrete examples of desirable divalent hydrocarbon groups are methylene group, dichloromethylene group, ethylene group, ethylidene group, 1,2-propylene group, propylidene group, trimethylene group, isopropylidene group, butylidene group, ethylethylene group, tetramethylene group, 1-methylpropylidene group, 1,2-dimethylethylene group, pentylidene group, 1-methylbutylidene group, pentamethylene group, 1-ethyl-2-methylethylene group, 1,3-dimethyltrimethylene group, 1-ethylpropylidene group, trimethylethylene group, isopropylmethylene group, 1-methylbutylidene group, 2,2-dimethylpropylidene group, hexamethylene group, 1-ethylbutylidene group, 1,2-diethylethylene group, 1,3-dimethylbutylidene group, ethyltrimethylethylene group, heptamethylene group, octamethylene group, 1,1-cyclopentylidene group, 1,1-cyclohexylidene group, 1,1-cycloheptylidene group, 1,1-cyclooctylidene group, benzylidene group and 1-phenylethylidene group.

With the copolyester (B) of the present invention, the group B contained in the diol units (I) present in the copolyesters may be the same or different. Among the above, the group B in the diol units (I) of the copolyester (B) of the present invention is preferably isopropylidene group, sulfonyl group and/or 1,1-cyclohexylidene group, which leads to good thermal stability of the copolyesters on melting.

With the copolyesters (B) of the present invention, j, k, m and n in the diol units (I) and/or diol units (II) are each independently an integer of 0 to 8. The j, k, m and n may therefore be the same or different. It is desirable that, in particular, j, k, m and n be each independently an integer of 1 or 2, more preferably each an integer of 1, which ensures easy production of the copolyesters, good thermal stability of the copolyesters on melting and good color shade of molded articles obtained from the copolyesters.

In the diol units (I) and/or diol units (II) of the copolyester (B) of the present invention, the benzene ring may be substituted with an inert substituent (R¹ through R³). Preferred examples of the inert substituent R¹, R² and R³ are lower alkyl groups, e.g. methyl, ethyl and propyl and halogen atoms, e.g. chlorine, bromine and iodine. With diol units (I) and/or diol units (II), s, t and u, which represent the number of inert substituents are each preferably 0 to 2, more preferably 0.

Examples of the diol units (I) which may constitute the copolyester (B) of the present invention are, while any of the above diol units may be used, diol units from 2,2-bis[4-(2-hydroxyethoxy)phenyl]propane, 2-(4-[2-(2-hydroxyethoxy)ethoxy]phenyl}-2-[4'-(2-hydroxyethoxy)phenyl]-propane, 2,2-bis(4-[2-(2-hydroxyethoxy)ethoxy]phenyl}-propane, bis[4-(2-hydroxyethoxy)phenyl] sulfone, {4-[2-(2-hydroxyethoxy)ethoxy]phenyl}-[4'-(2-hydroxyethoxy)phenyl] sulfone, bis{4-[2'-(2-hydroxyethoxy)ethoxy]phenyl} sulfone, 1,1-bis[4-(2-hydroxyethoxy)phenyl]cyclohexane, 1-{4-[2-(2-hydroxyethoxy)ethoxy]phenyl}-1-[4'-(2-hydroxyethoxy) phenyl]-cyclohexane, 1,1-bis{4-[2-(2-hydroxyethoxy)ethoxy]phenyl}-cyclohexane and 2,2-bis[4-(2-hydroxyethoxy)-2,3,5,6-tetrabromophenyl]propane. Among these, 2,2-bis[4-(2-hydroxyethoxy)phenyl]propane units or bis [4-(2-hydroxyethoxy)phenyl] sulfone units are preferably used as the diol units (I), in view of easy production of the copolyesters, good thermal stability of the copolyesters on melting and good color shade of molded articles obtained from the copolyesters.

Preferred examples of the diol units (II) which may constitute the copolyester (B) of the present invention are, while any of the above diol units may be used, diol units from 1,4-bis(2-hydroxyethoxy)benzene, 1-(2-hydroxyethoxy)-4-[2-(2-hydroxyethoxy)ethoxy]benzene and 1,4-bis[2-(2-hydroxyethoxy)ethoxy]benzene. Among these, use of 1,4-bis(2-hydroxyethoxy)benzene units as the diol units (II) is more preferred, since this leads to easy production of the copolyesters, higher melt stability of the copolyesters and good color shade of molded articles therefrom.

The copolyester (B) of the present invention may contain either one or both of the above diol units (I) and diol units (II).

With the copolyester (B) of the present invention, it is necessary that the diol units (I) and/or diol units (II) be contained, as described above, in an amount (when 2 or more groups of diol units (I) and/or diol units (II) are contained, the sum of these units) of 0.5 to 7 mole % based on the moles of total constituting units of the copolyester. If less than 0.5 mole % of diol units (I) and/or diol units (II) is contained, the resulting copolyester may have too high a crystallization rate, thereby generating spherulites on melt molding, which cause whitening to impair the transparency of molded articles therefrom. Besides, on molding large-size hollow articles requiring extrusion of a long parison having a length of at least 30 cm, the bottom part of the parison solidifies at an early stage due to crystallization, so that the pinch-off part at the bottom of bottles or like molded articles become poorly sealed. Too high a crystallinity may cause, on melt molding, molded articles to form unmelted agglomerates and have poor appearance.

On the other hand, if the content of diol units (I) and/or diol units (II) exceeds 7 mole %, the resulting copolyester may have too low a melting point and hence become unable to undergo solid phase polymerization. If solid phase polymerization can ever be conducted in this case, the rate of solid phase polymerization will become extremely low, so that the degree of polymerization cannot increase to a desired level and the obtained copolyester and molded articles therefrom have poor mechanical strength.

The content of diol units (I) and/or diol units (II) in the copolyester (B) is preferably in a range of 1.5 to 5 mole % based on the moles of total constituting units of the copolyester (B). This range insures that the resulting copolyesters can be produced at high productivity and that the copolyesters exhibit a sufficiently high melt viscosity, thereby undergoing melt molding such as extrusion blow molding more smoothly and yielding molded articles having still better transparency and mechanical properties.

The copolyester (E) of the present invention contains, in addition to terephthalic acid units and ethylene glycol units, at least one group of units (a₃) from a bifunctional compound selected from the group consisting of condensed ring type aromatic dicarboxylic acids and ring assembly type aromatic dicarboxylic acids, in an amount of 0.5 to 7 mole % based on the moles of total constituting units of the copolyesters. If, for instance, the bifunctional compound units (a₃) are isophthalic acid units, hydroxybenzoic acid units or the like, the resulting copolyester gives, when extrusion blow molded, bottles and like molded articles having finely roughened surface, which markedly impairs their appearance and tactility. In particular, on molding large-size bottles or like shaped articles at a throughput of 20 kg/hr or more, the surface roughening becomes more severe and, also, the molded articles have poor impact strength.

Examples of units from a condensed ring type aromatic dicarboxylic acid which may constitute the bifunctional compound units (a₃) are those from 1,4-naphthalenedicarboxylic acid, 2,3-naphthalenedicarboxylic acid, 2,6-naphthalenedicarboxylic acid, 2,7-naphthalenedicarboxylic acid, 1,6-phenanthrenedicarboxylic acid, 2,7-phenanthrenedicarboxylic acid, 3,6-indoledicarboxylic acid and ester-forming derivatives of the foregoing. Among these, 2,6-naphthalenedicarboxylic acid is preferred in view of productivity and production cost.

Examples of units from a ring assembly type aromatic dicarboxylic acid which may constitute the bifunctional compound units (a₃) are those from 4,4'-biphenyldicarboxylic acid, 3,4'-biphenyldicarboxylic acid and ester-forming derivatives of the foregoing. Among these, 4,4'-biphenyldicarboxylic acid is preferred in view of productivity and production cost.

With the copolyester (E) of the present invention, it is necessary that the bifunctional compound units (a₃) be contained, as described above, in an amount of 0.5 to 7 mole % based on the moles of total constituting units of the copolyesters. If less than 0.5 mole % of the bifunctional compound units (a₃) is contained, the resulting copolyesters may have too high a crystallization rate, thereby generating spherulites on melt molding, which cause whitening to impair the transparency of molded articles therefrom. Besides, on molding large-size hollow articles requiring extrusion of a long parison having a length of at least 30 cm, the bottom part of the parison solidifies at an early stage due to crystallization, so that the pinch-off part at the bottom of bottles or like molded articles become poorly sealed. Too high a crystallinity also causes, on melt molding, molded articles to form unmelted agglomerates and have poor appearance.

On the other hand, if the content of the bifunctional compound units (a₃) exceeds 7 mole %, the resulting copolyesters may have too poor crystallizability and too low a melting point and hence become unable to undergo solid phase polymerization. If solid phase polymerization can ever be conducted in this case, the rate of solid phase polymerization will become extremely low, so that the degree of polymerization cannot increase to a desired level and the obtained copolyesters and molded articles therefrom have poor mechanical strength.

The content of the bifunctional compound units (a₃) in the copolyesters (E) is preferably in a range of 1.5 to 5 mole % based on the moles of total constituting units of the copolyesters. This range ensures that the resulting copolyesters can be produced at high productivity and that the copolyesters exhibit a sufficiently high melt viscosity, thereby undergoing melt molding such as extrusion blow molding more smoothly and yielding molded articles having still better transparency and mechanical properties.

By the way, during production of the copolyesters of the present invention, diethylene glycol which is the dimer of ethylene glycol is by-produced in a small amount, thereby permitting a small amount of diethylene glycol units to be contained in the resulting copolyesters. Presence of a large amount of diethylene glycol units in the copolyesters decreases their glass transition temperature, thereby creating the problems of worsening the thermal stability and discoloration. Molded articles from such copolyesters will have poor heat resistance, mechanical properties and color shade. It is therefore recommended to minimize the content of diethylene glycol units in the copolyesters. The content is preferably less than 1.5 mole % based on the moles of total constituting units of the copolyesters, more preferably not more than 1.4 mole % and most preferably not more than 1.3 mole % on the same basis. Units from polyalkylene glycols such as polyethylene glycol also cause similar problems to the copolyesters and are hence desirably not contained in the copolyesters of the present invention. The above content of 1 to 4 mole % of the alicyclic or aliphatic bifunctional compound units (a₁) in copolyester (A) therefore means the value excluding that of diethylene glycol units and polyalkylene glycol units.

The copolyesters (A), (B) and (E) of the present invention contain multi-functional compound units (b₁) derived from at least one multi-functional compound having at least 3 carboxyl groups, hydroxyl groups and/or ester-forming groups of the foregoing, in an amount (when 2 or more groups of multi-functional compound units are contained, the sum of these units) of 0.005 to 1 mole % based on the moles of total constituting units of the copolyesters. If less than 0.005 mole % of the multi-functional compound units (b₁) is contained, the resulting copolyesters may not have a sufficiently high melt viscosity and hence will not exhibit non-Newtonian properties, thereby having poor moldability on melt molding such as extrusion blow molding. In particular, extrusion blow molding is conducted, extruded parisons will sag severely and generate clogging or collapse, so that hollow molded articles having good shape cannot be produced. Further with the content of the multi-functional compound units (b₁) being less than 0.005 mole %, the rate of solid phase polymerization on producing the copolyesters becomes very low, so that the productivity of the copolyesters decrease. On the other hand, if the content of the multi-functional compound units (b₁) exceeds 1 mole %, the resulting copolyesters may have too much crosslinkage, which causes gels to generate. As a result, the resulting molded articles suffer the problems of generating agglomerates and whitening, thereby impairing the transparency, appearance and tactility. One may attempt to decrease the degree of polymerization in order not to cause generation of gels, which attempt however leads to a decrease in the level of intermolecular entanglement and thus to poor mechanical properties. Further with the content of the multi-functional units (b₁) exceeding 1 mole %, the crystallization rate becomes too high on producing molded articles, so that spherulites generate to whiten the molded articles and impair their transparency. In this case, the shapeability becomes worse and, on extrusion blow molding, parisons tend to crystallize to impair the blow moldability.

The content of the multi-functional compound units (b₁) in the copolyesters (A), (B) and (E) is preferably in a range of 0.01 to 0.5 mole % based on the moles of total constituting units of the copolyesters. This range ensures that the resulting copolyesters exhibit a sufficiently high melt viscosity, thereby undergoing melt molding such as extrusion blow molding more smoothly, preventing molded articles therefrom from whitening and poor shaping and providing them with still better mechanical properties.

The multi-functional compound units (b₁) may be, with no specific limitation, any group of units from a multi-functional compound having at least 3 groups selected from the group consisting of carboxyl groups, hydroxyl groups and ester-forming groups of the foregoing. The multi-functional compound to derive the multi-functional compound units (b₁) may have at least 3 carboxyl groups only, at least 3 hydroxyl groups only or at least 3 groups of carboxyl groups and hydroxyl groups in combination.

Preferred examples of the multi-functional compound units (b₁) are units from aromatic carboxylic acids, e.g. trimesic acid, trimellitic acid, 1,2,3-benzenetricarboxylic acid, pyromellitic acid and 1,4,5,8-naphthalenetetracarboxylic acid; aromatic polyhydric alcohols, e.g. 1,3,5-trihydroxybenzene; aliphatic polyhydric alcohols, e.g. trimethylolpropane, trimethylolethane, pentaerythritol, glycerin, 1,2,4-butanetriol and 3-methyl-1,3,5-pentanetriol; alicyclic polyhydric alcohols, e.g. 1,3,5-cyclohexanetriol, 1,2,4-cyclohexanetrimethanol, 1,3,5-cyclohexanetrimethanol, 1,2,4,5-cyclohexanetetramethanol, 1,3,7-decalinetrimethanol and 2,3,6-decalinetrimethanol; aromatic hydroxycarboxylic acids, e.g. 4-hydroxyisophthalic acid, 3-hydroxyisophthalic acid, 2,3-dihydroxybenzoic acid, 2,4-dihydroxybenzoic acid, 2,5-dihydroxybenzoic acid, 2,6-dihydroxybenzoic acid, protocatechuic acid, gallic acid and 2,4-dihydroxyphenylacetic acid; aliphatic hydroxycarboxylic acids, e.g. tartaric acid and malic acid; and ester-forming derivatives of the foregoing. The copolyesters (A), (B) and (E) of the present invention may contain either only one group of the above multi-functional compound units (b₁) or 2 or more thereof.

It is desirable that the copolyesters (A), (B) and (E) of the present invention contain as the multi-functional compound units (b₁), among the above examples, units from at least one multi-functional compound selected from the group consisting of trimellitic acid, pyromellitic acid, trimesic acid, trimethylolpropane and pentaerythritol, in view of easiness and cost of production of the copolyesters. In particular, trimellitic acid units and trimesic acid units are more preferred, since these units suppress gelation.

The copolyesters (A) , (B) and (E) of the present invention further contain, in addition to the above-described bifunctional compound units (a₁), (a₂) or (a₃) and the multi-functional compound units (b₁), monofunctional compound units (c) derived from at least one monofunctional compound selected from monocarboxylic acids, monohydric alcohols and ester-forming derivatives of the foregoing.

With the copolyesters (A), (B) and (E), the monofunctional compound units (c) act as terminating compound units and block the molecular chain terminal and/or branched chain terminal of the copolyesters, thereby preventing the copolyesters from generating excess crosslinkage and gels. The monofunctional compound units (c) may be, with no specific limitation, any group of units from at least one member selected from the group consisting of monocarboxylic acids, monohydric alcohols and ester-forming derivatives of the foregoing.

Preferred examples of the monofunctional compound units (c) are units from aromatic monocarboxylic acids, e.g. benzoic acid, o-methoxybenzoic acid, m-methoxybenzoic acid, p-methoxybenzoic acid, o-methylbenzoic acid, m-methylbenzoic acid, p-methylbenzoic acid, 2,3-dimethylbenzoic acid, 2,4-dimethylbenzoic acid, 2,5-dimethylbenzoic acid, 2,6-dimethylbenzoic acid, 3,4-dimethylbenzoic acid, 3,5-dimethylbenzoic acid, 2,4,6-trimethylbenzoic acid, 2,4,6-trimethoxybenzoic acid, 3,4,5-trimethoxybenzoic acid, 1-naphthoic acid, 2-naphthoic acid, 2-biphenylcarboxylic acid, 1-naphthaleneacetic acid and 2-naphthalenecarboxylc acid; aliphatic monocarboxylic acids, e.g. n-octanoic acid, n-nonanoic acid, myristic acid, pentadecanoic acid, stearic acid, oleic acid, linoleic acid and linolenic acid; ester-forming derivatives of these monocarboxylic acids; aromatic monohydric alcohols, e.g. benzyl alcohol, 2,5-dimethylbenzyl alcohol, 2-phenethyl alcohol, phenol, 1-naphthol and 2-naphthol; and aliphatic or alicyclic monohydric alcohols, e.g. pentadecyl alcohol, stearyl alcohol, polyethylene glycol monoalkyl ethers, polypropylene glycol monoalkyl ethers, polytetramethylene glycol monoalkyl ethers, oleyl alcohol and cyclododecanol. These groups of units may either be contained singly or in combination of 2 or more as the monofunctional compound units (c) in the copolyesters (A), (B) and (E) of the present invention.

It is desirable that the copolyesters (A), (B) and (E) of the present invention contain as the monofunctional compound units (c), among the above examples, at least one group of units from a monofunctional compound selected from the group consisting of benzoic acid, 2,4,6-trimethoxybenzoic acid, 2-naphthoic acid, stearic acid and stearyl alcohol, in view of easiness and cost of production of the copolyesters.

It is necessary that the copolyesters (A), (B) and (E) of the present invention contain the above monofunctional compound units (c) in such an amount (when 2 or more monofunctional compound units (c) are contained, the sum of these units) based on the moles of total constituting units of the copolyesters as to satisfy the following formula (α)${\text{{20 x (p - 2) x b}}_{\text{1}} {\text{} ≧ c ≧ {0.1 x (p - 2) x b}}_{\text{1}} \text{}}$ where:
- b₁ =: content (mole %) of units (b₁) from the multi-functional compound in the copolyesters
- c =: content (mole %) of units (c) from the monofunctional compound in the copolyesters
- p =: average number of functional groups of the multi-functional compound deriving the units (b₁).

In the above formula (α), the average number of functional groups p of a multi-functional compound deriving the multi-functional compound units (b₁) means the average number of the functional groups of total multi-functional compounds used for producing the copolyesters. For example, where only a trifunctional compound is used as the multi-functional compound, p = 3. Where a trifunctional compound and a tetrafunctional compound are used in a molar ratio of 50:50, p = 3 x 0.5 + 4 x 0.5 = 3.5. Where the above two are used in a molar ratio of 20:80, p = 3 x 0.2 + 4 x 0.8 = 3.8.

Let us take further example, which is not limitative, of the multi-functional compound units (b₁) being trifunctional compound units derived from a trifunctional compound and the content of the multi-functional compound units (b₁) in the copolyester being 0.1 mole %. This means that, in the above formula (α), P = 3 and b₁ = 0.1 (mole %) and hence the formula becomes 2 (mole %) ≧ c ≧ 0.01 (mole %). Thus the necessary range of the content of the monofunctional compound units (c) becomes 0.01 to 2 mole % based on the moles of total constituting units of the copolyester.

If the content of the monofunctional compound units (c) in the copolyesters (A), (B) and (E) is less than the lower limit, i.e. {0.1 x (p - 2) x b₁} (mole %), of the formula (α), the resulting copolyesters will have over-crosslinkage. These copolyesters tend to generate gels on melt molding, so that the obtained molded articles sometimes suffer the troubles of generating agglomerates and whitening and hence have poor appearance and transparency. On the other hand, if the content of the monofunctional compound units (c) in the copolyesters exceeds the upper limit, i.e. {20 x (p - 2) x b₁} (mole %), of the formula (α ), the rate of solid phase polymerization on producing the copolyesters tend to become low, so that their productivity sometimes decreases. It is desirable that the content of the monofunctional compound units (c) in the copolyesters (A), (B) and (E) be in a range satisfying:${\text{{10 x (p - 2) x b}}_{\text{1}} {\text{} ≧ c ≧ {0.5 x (p - 2) x b}}_{\text{1}} \text{}.}$

The copolyesters of the present invention may contain copolymerization units other than the above-described groups of constituting units, in such small amounts (generally not more than 3 mole % based on the moles of total constituting units) as not to impair the properties of the copolyesters. Examples of the copolymerization units are those derived from aromatic dicarboxylic acids, e.g. isophthalic acid, phthalic acid, diphenyl ether dicarboxylic acid, diphenyl sulfone dicarboxylic acid, diphenyl ketone dicarboxylic acid and sodium sulfoisophthalate; and aromatic hydroxycarboxylic acids, e.g. hydroxybenzoic acid and mandelic acid.

Further as examples of the above copolymerization units, there can be mentioned: for the copolyester (A), structural units mentioned as bifunctional compound units (a₂) and (a₃); for the copolyester (B), those mentioned as bifunctional compound units (a₁) and (a₃); and for the copolyester (E), those mentioned as bifunctional compound units (a₁) and (a₂).

The intrinsic viscosity of the copolyesters (A), (B) and (E) of the present invention is, varying according to the type of melt molding employed, desirably in a range of 0.8 to 1.5 dl/g when they are to be subjected to melt molding accompanying melt extrusion, in particular extrusion blow molding. The intrinsic viscosity is more preferably in a range of 1.0 to 1.4 dl/g, in view of the mechanical strength and appearance of extrusion blow molded articles and the moldability and productivity on producing molded articles. In particular, if the intrinsic viscosity is less than 0.8 dl/g, parisons formed on extrusion blow molding will sag to a significant extent, thereby causing poor shaping and, further, the obtained molded articles will tend to have low mechanical strength. On the other hand, on conducting molding operations accompanying melt extrusion, in particular on extrusion blow molding, if the copolyesters have an intrinsic viscosity exceeding 1.5 dl/g, the melt viscosity will become too high, so that, on melt extrusion, in particular extrusion blow molding, the molded articles will tend to form weld lines and, further, have poor appearance. Besides, there occur molding troubles, such as nonuniform throughput due to high torque on the extrusion. Furthermore, the copolyesters having an intrinsic viscosity exceeding 1.5 dl/g require a long time for the extrusion thereof, so that the productivity of molded articles tend to decrease. The above relationship between the intrinsic viscosity of the copolyesters and the moldability thereof and the physical properties of molded articles obtained therefrom appears particularly markedly when they are extrusion blow molded. However, similar tendency is, not limited to extrusion blow molding, observed on melt molding processes accompanying melt extrusion in general, such as extrusion molding and injection-extrusion blow molding.

The copolyesters of the present invention desirably have a melt viscosity (η 1) at a shear rate of 0.1 rad/sec and at a temperature of 270°C of 5 x 10⁴ to 5 x 10⁶ poises. Then, the copolyesters will, when melt molded by for example extrusion blow molding, cause only little curl-back, thereby preventing occurrence of poor molding almost completely and suppressing melt fracture, die swell and like phenomena markedly. As a result, molded articles having particularly excellent appearance and mechanical properties can be obtained.

The copolyesters of the present invention also desirably have a melt viscosity (η 2) at a shear rate of 100 rad/sec and at a temperature of 270°C of 5 x 10³ to 5 x 10⁵ poises. Then, the copolyesters will, when melt molded by for example extrusion blow molding, smoothly prevent extrudates in a softened state, such as parisons, from deforming by drawdown or drooping, so that the productivity becomes high. Furthermore, the polyesters do not undergo thermal decomposition or cause uneven extrusion or occurrence of weld lines.

It is particularly desirable that the copolyesters of the present invention satisfy not only the elements of the melt viscosity (η 1) at a shear rate of 0.1 rad/sec and at a temperature of 270°C and the melt viscosity (η 2) at a shear rate of 100 rad/sec and at a temperature of 270°C, but the following condition (β ) :${\text{-0.7 ≦ (1/3)log}}_{\text{10}} \text{(η 2/η 1) ≦ -0.2}$ With satisfaction of the above condition (β ), the copolyesters, exhibiting appropriate non-Newtonian behaviors, show a moderately low melt viscosity at high shear rates and a moderately high melt viscosity at low shear rates, thereby having excellent formability of parisons when subjected to, in particular, extrusion blow molding, injection-extrusion blow molding or like melt molding processes.

To achieve still better formability of parisons, it is more preferred that the value of (1/3)log₁₀ (η 2/η 1) in the above formula (β) be in a range of -0.60 to -0.25. In the above formula (β), the value (1/3)log₁₀ (η 2/η 1) can be obtained as the gradient of a straight line connecting the 2 points of the melt viscosities (η 1) and (η 2) in a log-log graph with the ordinate representing the melt viscosity and the abscissa the shear rate.

The melt viscosities (η 1) and (η 2) herein mean values as determined in the manner described in Examples to be given later herein.

It is also desirable that the copolyesters of the present invention have a shark-skin critical shear stress (σ ss) at a temperature of 270°C of at least 1 x 10⁶ dyne/cm² and a shear stress (σ 100) at a shear rate of 100 /sec and at a temperature of 270°C of not more than the shark-skin critical shear stress (σ ss). The present inventors have found that also the shear stress of copolyesters on melt molding is closely related to the afore-described surface roughening of obtained molded articles. Where the shark-skin critical shear stress (σ ss) at a temperature of 270°C is at least 1 x 10⁶ dyne/cm² and the shear stress (σ 100) at a shear rate of 100 /sec and at a temperature of 270°C is not more than the value of the shark-skin critical shear stress (σ ss), the surface roughening on melt molding such as extrusion blow molding is markedly suppressed, so that molded articles having excellent transparency, appearance and tactility can be obtained. This is considered to be due to, with the copolyesters having the above shear stress characteristics, marked release of the elastic normal stress is suppressed between the copolymer melts and the extruder die used.

The shark-skin critical shear stres (σ ss) and the shear stress (σ 100) at a shear rate of 100 /sec herein mean shear stresses exhibited when a copolyester is extruded through a capillary nozzle into a strand, and the details are as set forth in Examples to be described later herein.

It is further desirable that the copolyesters of the present invention have a glass transition temperature of at least 60°C. It is more preferred that the glass transition temperature be at least 70°C, which prevents more effectively molded articles obtained by extrusion blow molding or like melt molding processes from shrinking. With the copolyesters having a glass transition temperature of less than 60°C, the resulting molded articles, in particular extrusion blow molded articles, sometimes shrink after being taken out from dies due to relaxation of residual stress, thereby impairing their appearance.

It is further desirable that the copolyesters of the present invention have a terminal carboxyl group concentration of not more than 30 µequivalent/g. It is more preferred that the terminal carboxyl group concentration be not more than 20 µequivalent/g from the viewpoints of the melt stability, prevention of discoloring and suppression of wall roughening of hollow articles on extrusion blow molding, of the copolyesters. If the terminal carboxyl group concentration of the copolyesters exceeds 30 µequivalent/g, the copolyesters will yield molded articles, in particular extrusion blow molded articles, being discolored severely and having markedly decreased molecular weight.

It is further desirable that the copolyesters of the present invention have a melt flow rate (hereinafter sometimes referred to as "MFR") at a temperature of 270°C of 0.3 to 7.5 g/10 min, more preferably 0.5 to 5 g/10 min, from the viewpoints of shapability on melt molding such as extrusion blow molding, the uniformity of obtained molded articles and the productivity on molding.

It is further desirable that the copolyesters of the present invention have a crystallinity of 20 to 40%. With the crystallinity of copolyesters being less than 20%, pellets or chips of the copolyesters tend to stick together on solid phase polymerization, so that it becomes difficult to conduct solid phase polymerization smoothly. Besides, on molding, pellets or chips cause blocking with each other, thereby disturbing smooth molding. On the other hand, with the crystallinity exceeding 40%, pellets or chips cannot be melted easily. Then, there occurs resin shrieking (sound generation due to friction between pellets or chips) on molding, thereby applying heavy load to the molding machine and disturbing smooth molding. Besides, the resulting molded articles tend to have unmelted agglomerates and poor transparency, appearance or tactility. The crystallinity of the copolyesters is more preferably in a range of 25 to 35%, which insures smooth solid phase polymerization to increase the productivity of the copolyesters and smooth melt molding to obtain high-quality molded articles.

It is further desirable that the copolyesters of the present invention have a cold-crystallization temperature of not more than 150°C and, at the same time, a heat of crystallization at cold crystallization of not more than 20 J/g. If the cold-crystallization temperature exceeds 150°C or if the heat of crystallization at cold crystallization exceeds 20 J/g, spherulites will grow rapidly, so that the obtained molded articles tend to become whitened and have poor transparency. Further on extrusion blow molding, parisons tend to solidify too early, leading to difficult shaping. It is more preferred that the cold-crystallization temperature be not more than 140°C and that the heat of crystallization at cold crystallization be not more than 15 J/g, in order to retard the rate of formation of spherulites sufficiently, to obtain with good shapability molded articles having excellent transparency. The cold-crystallization temperature and the heat of crystallization at cold crystallization herein mean the values determined by differential scanning calorimetry and the details are as set forth in Examples to be described later herein.

The copolyesters of the present invention can be produced in a short period of time and at good productivity by:
(1) subjecting to esterification or transesterification starting materials comprising:
   (i) terepthalic acid or derivatives thereof;
   (ii) ethylene glycol;
   (iii) a bifunctional compound to introduce bifunctional compound units (a₁), (a₂) or (a₃) into the resulting copolyester; and
   (iv) a multi-functional compound to introduce multifunctional compound units (b₁);
   (v) at least one monofunctional compound to introduce monofunctional compound units (c), selected from the group consisting of monocarboyxlic acids, monohydric alcohols and ester-forming derivatives of the foregoing;
      ① the content of the bifunctional compound in the starting materials being such that:
         for the copolyester (A), the ratio between bifunctional compound units (a₁) derived from the bifunctional compound and total constituting units of the copolyester becomes 1 to 4 mole % based on the moles of the total constituting units, and
         for the copolyesters (B) and (E), the ratio between bifunctional compound units (a2) or (a₃) derived from the bifunctional compound and total constituting units of the copolyester becomes 0.5 to 7 mole % based on the moles of the total constituting units;
      ② the content of the multi-functional compound in the starting materials being such that:
         the ratio between multi-functional compound units (b₁) derived from the multi-functional compound and total constituting units of the copolyesters becomes 0.005 to 1 mole % based on the moles of the total constituting units, and
      ③ the ratio between the monofunctional compound units (c) derived from the monofunctional compound and total constituting units based on the moles of the total constituting units satisfying the above-described formula (α );
(2) melt polycondensing the ester obtained in the above step (1) to prepare a polyester prepolymer; and
(3) subjecting the polyester prepolymer obtained in the above step (2) to solid phase polymerization.

For the above processes for producing the copolyesters, there can be used as the bifunctional compound, multi-functional compound and monofunctional compound, the above-described bifunctional compounds for introducing the bifunctional compound units (a₁), (a₂) or (a₃), multi-functional compounds for introducing the multi-functional compound units (b₁) and monofunctional compounds for introducing the monofunctional compound units (c), respectively.

On production of the copolyesters, it is recommended to mix the reaction components such that the molar ratio of (total diol components):(total dicarboxylic acid components) becomes 1.1:1 to 1.5:1 and, that the molar ratio of (multi-functional compound component):(total dicarboxylic acid components) is 0.0001:1 to 0.02:1 and that of (monofunctional compound component) :(multi-functional compound component) is {0.1 x (p - 2)}: 1 to {20 x (p - 2)}:1 (p is as defined above). Then the mixture is subjected to esterification or transesterification.

It is also recommended to carry out the above esterification or transesterification, generally, under atmospheric pressure to an absolute pressure of about 3 kg/cm² and at a temperature of 230 to 300°C, while distilling off the water or alcohol that formed. After the reaction, additives such as polycondensation catalyst and coloring preventing agent are as necessary added. Thereafter, melt polycondensation is conducted, generally, under a reduced pressure of not more than 5 mmHg and at a temperature of 200 to 300°C until a polyester prepolymer having the desired viscosity is obtained. On this occasion, the polyester prepolymer desirably has an intrinsic viscosity of 0.40 to 0.75 dl/g and an MFR exceeding 15.0 g/10 min, in view of handleability of the polyester prepolymer and like factors.

Where a polycondensation catalyst is used for the above melt polycondensation, any catalyst for producing copolyesters in general may be used. Examples of the catalyst are antimony compounds, e.g. antimony oxide; germanium compounds, e.g. germanium oxide; titanium compounds, e.g. tetramethoxytitanium, tetraethoxytitanium, tetra-n-propoxytitanium, tetraisopropoxytitanium and tetrabutoxytitanium; and tin compounds, e.g. di-n-butyltin dilaurate, di-n-butyltin oxide and dibutyltin diacetate. These catalysts may be used singly or in combination of 2 or more. With use of a polycondensation catalyst, its amount is desirably in a range of 0.002 to 0.8% by weight based on the weight of the dicarboxylic acid component.

Where a coloring preventing agent is used, there can be used phosphorus compounds, e.g. phosphorous acid, phosphoric acid, trimethyl phosphite, triphenyl phosphite, tridecyl phosphite, trimethyl phosphate, tridecyl phosphate and triphenyl phosphate. These phosphorus compounds may be used singly or in combination of 2 or more. With use of a coloring preventing agent comprising any one of the above phosphorus compounds, its amount is desirably in a range of 0.001 to 0.5% by weight based on the weight of the dicarboxylic acid component.

It is recommended, in order to suppress coloring of copolyesters due to thermal decomposition, to add a cobalt compound such as cobalt acetate, in an amount of 0.001 to 0.5% by weight based on the weight of the dicarboxylic acid component, more preferably 0.05 to 0.3% by weight on the same basis.

Presence of a large amount of diethylene glycol in the copolyesters causes, as described above, the copolyesters to have a decreased glass transition temperature. Then, the heat resistance worsens and discoloration occurs and hence bottles molded from such copolyesters have poor heat resistance, strength and color shade. It is therefore also desirable to conduct the above esterification or transesterification and/or melt polycondensation in the presence of an agent that can suppress byproduction of diethylene glycol, e.g. tetraalkylammonium hydroxides such as tetraethylammonium hydroxide and organic amines such as triethanolamine and triethylamine, which can reduce the content of diethylene glycol in the copolyesters.

Then, the polyester prepolymer obtained by the above polycondensation is formed into chips or pellets having a die-, cylindrical or any optional shapes, which are, after being pre-dried at a temperature of generally not more than 190°C, subjected to solid phase polymerization until the intrinsic viscosity, MFR and like indexes reach the desired values, to yield the desired copolyester. The solid phase polymerization is desirably conducted under vacuum or a reduced pressure or under an atmosphere of an inert gas such as nitrogen. It is desirable, during the solid phase polymerization, to fluidize, by appropriate means such as tumbling process or gas fluidized bed process, the chips or pellets of the polyester prepolymer, in order that they will not stick together. The solid phase polymerization is desirably conducted generally at a temperature of 180 to 240°C, more preferably 190 to 230°C. Furthermore, it is recommended to set the temperature for the solid phase polymerization at, within the above range, at least 15°C, preferably at least 20°C lower than the melting point of the copolyester to produce (one obtained finally), in view of prevention of sticking between chips or pellets. The solid phase polymerization is desirably conducted for, generally, about 5 to 40 hours in view of productivity and the like.

Carrying out the above series of steps can produce the copolyesters of the present invention in a short period of time and at a high productivity.

The copolyesters of the present invention have excellent melt moldability, transparency, heat resistance and mechanical properties. They can therefore be molded by extrusion blow molding, injection-extrusion blow molding, extrusion molding, injection molding or like melt molding processes into various molded articles. The copolyesters of the present invention are suited for molding accompanying melt extrusion, in particular extrusion blow molding. The copolyesters of the present invention can, when processed by melt molding, in particular those accompanying melt extrusion, e.g. extrusion blow molding, injection-extrusion blow molding, extrusion molding and injection molding, yield with good productivity molded articles having excellent dimensional precision, transparency, heat resistance, moisture resistance and chemical resistance. In particular, on extrusion blow molding of the copolyesters of the present invention, parisons extruded have good drawdown property, so that the drawdown time is maintained within a suitable range and the parisons have a uniform diameter. Besides, a good blow moldability is achieved without causing troubles on molding, thereby producing hollow molded articles having good shape and dimensional precision smoothly and with good productivity. The obtained hollow molded articles can yield extruded blow molded articles having excellent transparency, heat resistance, moisture resistance, chemical resistance and like properties.

Melt molding of the copolyesters of the present invention can be conducted following conventional procedures for each of melt molding processes used for thermoplastic resins in general, e.g. extrusion blow molding, injection-extrusion molding, extrusion molding and injection molding, and is not particularly limited with respect to concrete content or conditions of the procedure. In particular, on extrusion blow molding of the copolyesters of the present invention, the type of extrusion blow molding is not specifically limited. That is, in the same manner as in known extrusion blow molding, the copolyesters of the present invention can be melt extrusion molded into cylindrical parisons, which are, while being in a softened state, inserted into a die for blowing and then air or like gases is blown into the die to swell the parisons into the desired hollow shapes defined by the shape of the die cavity. In this case, it is desirable to adjust the melt extrusion temperature within a range of (melting point of copolyester + 10°C) to (melting point of copolyester + 70°C), in view of moldability.

The shaped articles of the present invention may be of any shape, with no specific limitation, and they can assume, according to each use, the shape of, for example, hollow article, tube, plate, sheet, film, rod and die. The shaped articles have any size with no specific restrictions. Among these, the present invention is particularly suitably applied to hollow articles obtained by extrusion blow molding.

Further the shaped articles obtained from the copolyesters of the present invention may be formed of the copolyesters alone or have the shape of laminates with other plastics, metals, fibers, fabrics or like other materials, or may be of a shape other than the laminates, in combination with the above other materials. In particular, where the shaped articles of the present invention are extrusion blow molded articles, they can be formed into single-layer hollow articles (e.g. hollow containers) comprising the copolyesters of the present invention only or multilayer hollow articles formed of the copolyesters of the present invention in combination with other plastics such as polyethylene, polypropylene, ethylene-vinyl alcohol copolymer or polyethylene terephthalate (PET). More concretely, mentions are made of 3-layer bottles having a construction of PET layer/the copolyester layer/PET layer, 5-layer bottles with PET layer/the copolyester layer/PET layer/the copolyester layer/PET layer. The shaped articles of the present invention are, however, not limited to these examples.

The copolyesters of the present invention may, as necessary, incorporate other thermoplastic resins and various additives conventionally used for polyester resins in general, e.g. coloring agents such as dyes and pigments, stabilizers such as UV absorbers, antistatic agents, flame retardants, flame retardant auxiliaries, lubricants, plasticizers and inorganic fillers.

The copolyesters of the present invention have a high melt viscosity and the non-Newtonian characteristics of exhibiting low viscosity at high shear rate and high viscosity at low shear rate. The copolyesters also have the excellent features on molding of suffering no melt fracture such as shark-skin flow, having the crystallization suppressed and generating no agglomerates. The copolyesters of the present invention have therefore excellent melt moldability and can be melt molded very smoothly by extrusion blow molding, injection-extrusion blow molding, extrusion molding, injection molding or like melt molding processes. By these molding processes, the copolyesters give high-quality molded articles having excellent transparency, surface conditions, appearance and tactility, as well as excellent mechanical properties such as impact strength, dimensional precision, heat resistance, moisture resistance and chemical resistance.

The copolyesters of the present invention have, in particular, high melt viscosity and good melt viscosity characteristics suited for, among the above melt molding processes, those accompanying melt extrusion, in particular extrusion blow molding. On extrusion blow molding of the copolyesters of the present invention, good parisons are formed. The drawdown time is maintained within a suitable range and the parisons have a uniform diameter. Besides, good blow moldability is achieved without causing troubles on molding, thereby producing, smoothly and with -good productivity, hollow molded articles having good shape with no distortion or deformation and good dimensional precision. The copolyesters of the present invention can be markedly suitably used for extrusion blow molding of large-size hollow articles via relatively long parisons having a length of at least 30 cm.

The processes for producing copolyesters of the present invention can produce, with good productivity and economically, the copolyesters having the above features in a short period of time, in particular in a shortened solid phase polymerization time.

### EXAMPLES

Other features of the invention will become more apparent in the course of the detailed descriptions of exemplified embodiments which are given for illustration of the invention and are not intended to be limiting thereof. In the Examples and Comparative Examples that follow, the content of each of the structural units and properties of polyesters (copolyesters or homopolyesters) and evaluations of the drawdown property and blow moldability of parisons on extrusion blow molding of polyesters and the transparency, generation of gels, generation of agglomerates, falling breakage height and falling impact strength of molded articles (bottles) obtained by the extrusion blow molding were carried out in accordance with the following methods.

### (1) Content of each structural unit in polyester

Polyester sample was subjected to methanolysis and constituting structural components are separated by high-performance liquid chromatography. The components obtained were each subjected to quantitative determination by spectrochemical analysis in ultraviolet and visible region, refractive index analysis and infrared absorption (IR) spectrometry to give the content of each component. The content values were identified by ¹H-NMR spectrometry with a solvent of deuterated trifluoroacetic acid.

### (2) Intrinsic viscosity of polyester

Determined by measurements on 1/1 by weight mixed solvent of phenol and tetrachloroethane with Ubelohde viscosimeter (HRK-3, made by Hayashi Seisakusho) at 30°C.

### (3) Melt flow rate (MFR) of prepolymer or polyester

Measured with Melt Indexer L244 (made by Takara Kogyo KK). Concretely, a cylinder having an inner diameter of 9.5 mm and a length of 162 mm was filled with chips of a prepolymer or polyester (final product) sample, which were melted at 270°C (210°C in Comparative Examples 4, 13, 15, 20, 25, 27 and 29, where the copolyesters-were amorphous). The melt was uniformly loaded with a 2,160-g plunger having a diameter of 9.48 mm and the flow-out rate (g/10 min) of the prepolymer or polyester extruded through a 2.1 mm-dia. orifice was measured and taken as the melt flow rate.

### (4) Melt viscosities (η 1 and η 2) of polyester

The melt viscosity at a shear rate of 0.1 rad/sec (η 1) at a temperature of 270°C and that at a shear rate of 100 rad/sec (η 2) at a temperature of 270°C were dynamically measured with a mechanical spectrometer (RMS-800, made by Reometrics Co.). Here the temperature was set at 210°C for the copolyesters obtained in Comparative Examples 4, 13, 15, 20, 25, 27 and 29, since they were amorphous.

### (5) Shark-skin critical shear stress (σ ss) and shear stress at a shear rate of 100 /sec (σ 100) of polyester

A tester (CAPILLOGRAPH made by Toyo Seiki Co.) was used and polyester sample was extruded through its capillary nozzle having a diameter of 2 mm and a length of 10 mm at a temperature of 270°C into a strand while the shear rate was continuously changed. The shear rate at which the surface of the strand became roughened (when the 10-point average surface coarseness exceeded 1.5 µRz) was recorded and taken as the shark-skin critical shear stress (σ ss) (dyne/cm²). The same apparatus was used for determining the shear stress at a shear rate of 100 /sec (σ 100) (dyne/cm²). Here the temperature was set at 210°C for the copolyesters obtained in Comparative Examples 4, 13, 15, 20, 25, 27 and 29, since they were amorphous.

### (6) Crystallinity (χ c) of polyester

The density (d) at 25°C of polyester was measured. The density (da) of completely amorphous PET (polyethylene terephthalate) was set at 1.335 and that (dc) of completely crystalline PET (polyethylene terephthalate) at 1.501. The crystallinity (χ c) was calculated by the following formula (γ ) :$\text{χ c (%) = {dc(d - da)/d(dc -da)} x 100}$

### (7) Glass transition temperature (Tg) and melting point (Tm) of polyester

Measured in accordance with JIS K7121 by differential scanning calorimeter (DSC) with a thermal analysis system (Mettler TA3000, made by Mettler Co.) at a temperature elevation rate of 10°C/min.

### (8) Cold crystallization temperature (Tcc) and cold crystallization heat (ΔHcc) of polyester

Measured in accordance with JIS K7121 by differential scanning calorimeter (DSC) with a thermal analysis system (Mettler TA3000, made by Mettler Co.). Sample was maintained at a temperature of (melting point + 40°C) for 5 minutes and then subjected to measurement at a temperature decreasing rate of 5°C/min.

### (9) Terminal carboxyl group concentration (CEG) of polyester

Sample (0.2 g) was dissolved in 10 ml of benzyl alcohol heated to 215°C. Chloroform (10 ml) was added to the solution and the resulting solution was titrated with sodium hydroxide in benzyl alcohol.

### (10) Draw-down tendency of parison on extrusion blow molding

### (i) Draw-down time (sec) of parisons

Sample was extruded through an extrusion blow molding machine (hollow molding machine, Type BM-304•J2 made by Placo Co.) at an extrusion temperature of 270°C (210°C for the copolyesters obtained in Comparative Examples 4, 13, 15, 20, 25, 27 and 29, since they were amorphous) through an annular orifice into cylindrical parisons. The cylindrical parisons were, while being in a softened state, cut and bottom-formed by pinching with a blow die, and the cuts were then blow molded into bottles (designed capacity: 1,800 ml, designed weight: 80 g) for soft drinks. The above extrusion blow molding machine used here was so designed as to pinch off with the die and blow at a time point where the parison drew down by 35 cm. The time required for the 35-cm drawdown was thus measured and taken as the drawdown time.

With the extrusion blow molding machine used here, drawdown times within a range of 15 to 25 seconds showed good moldability. Drawdown times of less than 15 seconds, meaning severe drawdown, cause the parisons to assume a nonuniform shape, and such parisons become, after blowing, defectives with large thickness dispersion, become impossible to insert into blow dies and cause clogging at their hollow part. On the other hand, with the drawdown time exceeding 25 seconds, the productivity of shaped articles (bottles) decreases and the polyester, having too high a melt viscosity, cannot be blown uniformly. Further in this case, there tend to occur unbonding at the pinch-off part of bottles, generation of weld lines and breakage of the molding machine due to increased torque.

### (ii) Difference between the maximum and minimum diameters of parison

Polyester sample was extruded with the above extrusion blow molding machine at a temperature of 270°C (210°C for the copolyesters obtained in Comparative Examples 4, 13, 15, 20, 25, 27 and 29, since they were amorphous) into a cylindrical parison, and the parison was, when its length reached 35 cm, measured for the maximum diameter (outer diameter) and minimum diameter (inner diameter), from which the difference was obtained.

The annular die of the extrusion nozzle of the above extrusion blow molding machine used here have a diameter of 3.5 cm. The parison extruded therethrough tends to be attenuated as it goes apart from the die, due to severe drawdown as caused by its self-weight. A difference between the maximum and minimum diameters of a parison of not more than 1 cm ensures, generally, smooth extrusion blow molding operation. On the other hand, if the difference exceeds 1 cm, the parison will, after blowing, generate thickness unevenness, thereby producing defectives or, in extreme cases, clog and become unblowable.

### (iii) Overall evaluation of drawdown property of parison

Overall evaluation of drawdown property of parison was made in terms of the drawdown time, the difference between the maximum and minimum diameters of parison and the productivity of bottles, in accordance with the criteria shown in Table 1 below. On this occasion, the productivity of bottles was judged good, from the cost factor, when at least 120 pieces of bottles was producible per hour with less than 10 pieces of defectives in 100 pieces. The defective herein means that there occurred at least one trouble selected from the group consisting of:
a) Extruded parison cannot be inserted into blow die due to severe drawdown;
b) Parison clogs at its hollow part;
c) Unbonding at the pinch-off part due to high viscosity; and
d) Deformation or breakage of bottle due to nonuniform blow.

**Table 1**

| Criteria of overall evaluation of parison drawdown property ○ (good): satisfies all of the following conditions | |
|---|---|
| (a) | Draw-down time is in a range of 15 to 25 seconds. |
| (b) | Difference between the maximum and minimum diameters of parison is not more than 1 cm. |
| (c) | Production of bottles is at least 120 pieces per hour and defective bottles are in less than 10 pieces in 100 pieces. |

| Δ (marginal): satisfies any one of the following conditions | |
|---|---|
| (a) | Draw-down time is at least 10 seconds and less than 15 seconds, or is more than 25 seconds and not more than 60 seconds. |
| (b) | Difference between the maximum and minimum diameters of parison is more than 1 cm and not more than 2 cm. |
| (c) | Production of bottles is at least 60 pieces and less than 120 pieces per hour and defective bottles are in at least 10 pieces and less than 30 pieces in 100 pieces. |

| × (bad): satisfies any one of the following conditions | |
|---|---|
| (a) | Draw-down time is less than 10 seconds or exceeds 60 seconds. |
| (b) | Difference between the maximum and minimum diameters of parison exceeds 2 cm. |
| (c) | Production of bottles is less than 60 pieces and defective bottles are in at least 30 pieces in 100 pieces. |

### (11) Blow moldability on extrusion blow molding

### (i) Average wall thickness of bottle

A bottle obtained by molding was divided from the top down to the bottom into 5 pieces, each of which was then divided into 4 pieces at the same pitch in the circumferential direction of bottle. On the total of 20 pieces the wall thicknesses were measured and the average of 20 measurements was calculated. The average wall thickness is desirably in a range of 0.3 to 0.7 mm from the viewpoint of appearance, tactility and bottle strength.

### (ii) Thickness unevenness of bottle

Of the wall thicknesses of bottle body part obtained in the above measurement (i), the difference between the maximum and minimum thicknesses was obtained for evaluation. The thickness difference is desirably less than 0.30 mm, because otherwise there generate very thin and/or broken parts, so that the appearance and/or tactility become poor.

### (iii) Overall evaluation of blow moldability

Conducted in accordance with the evaluation criteria shown in Table 2 below.

**Table 2**

| Overall evaluation criteria for blow moldability | |
|---|---|
| ○ (good) | Average wall thickness is in a range of 0.30 to 0.70 mm and thickness unevenness is less than 0.30 mm. |
| × (bad) | Average wall thickness is less than 0.30 mm or exceeds 0.70 mm, or thickness unevenness is at least 0.30 mm. |

### (12) Transparency of bottle

### (i) Haze value

The body of bottle was divided, from the top, middle down to bottom, into 6 parts, which were then each divided into 4 pieces in the circumferential direction into 24 pieces. They were tested with a Poic integrating sphere type light transmittance-total light reflectance tester (SEP-HS 30D-R type, made by Nihon Seimitsu Kogaku KK) for haze value of each piece. The average of the 24 measurements was taken as the haze value of bottle. With a haze value exceeding 8, the transparency becomes poor due to whitening by generation of spherulites or light scattering by gel-like irregular matter. The haze value is desirably not more than 4, which ensures good transparency.

### (ii) b-value

The body of bottle was cut to small pieces (square piece of 1 cm x 1 cm), which were measured with a color difference meter (SM-4, made by Suga Instruments KK) by reflection method. With the b-value exceeding 8, the bottle shows a yellowish tone and becomes of poor appearance. The b-value is desirably not more than 4 in view of color tone.

### (iii) Overall evaluation of bottle transparency

Conducted in accordance with the evaluation criteria shown in Table 3 below.

**Table 3**

| Overall evaluation criteria for transparency of bottle | |
|---|---|
| ○ (good) | Haze value is not more than 4 and b-value is not more than 4. |
| Δ (marginal) | Haze value exceeds 4 and is not more than 8, or b-value exceeds 4 and is not more than 8. |
| × (bad) | Haze value exceeds 8, or b-value exceeds 8. |

### (13) Generation of gels on bottle

A 1-g sample was cut from the body of bottle and kept in 10 ml of hexafluoroisopropanol at 30°C for 5 hours to dissolve. The solution was filtered through 4G glass filter and insoluble gels were collected. The gels were dried by heating at 100°C for 60 minutes and weighed. The % % by weight of the gels based on the sample weight (1g) was taken as the generation of gels, which was evaluated according to the criteria shown in Table 4 below.

**Table 4**

| Evaluation criteria for generation of gels on bottle | |
|---|---|
| ⓞ (excellent) | Gel generation is not more than 2.5%. |
| ○ (good) | Gel generation exceeds 2.5% and is not more than 5%. |
| Δ (marginal) | Gel generation exceeds 5% and is not more than 10%. |
| × (bad) | Gel generation exceeds 10%. |

### (14) Generation of agglomerates on bottle

A 10 cm x 10 cm sample was cut from the center of the body of bottle. The number of agglomerates on the sample was visually counted and evaluation was made according to the criteria shown in Table 5 below.

**Table 5**

| Criteria for generation of agglomerates on bottle | |
|---|---|
| ⓞ (excellent) | No. of agglomerates was not more than 2 pieces/100 cm². |
| ○ (good) | No. of agglomerates exceeds 2 pieces/100 cm² and not more than 5 pieces/100 cm². |
| Δ (marginal) | No. of agglomerates exceeds 5 pieces/100 cm² and not more than 10 pieces/100 cm². |
| × (bad) | No. of agglomerates exceeds 10 pieces/100 cm². |

### (15) Falling impact strength of bottle

Ten bottles were completely filled with water and stoppered. At first, a bottle was dropped from the height of 50 cm and, if not broken, then from 60 cm, i.e. from 10 cm higher point. The procedure was repeated to obtain the height at which the bottle broke. The average of heights at which 10 bottles broke was taken as the falling breakage height. Evaluation of the falling impact strength was made in accordance with the criteria shown in Table 6 below.

**Table 6**

| Evaluation criteria for falling impact strength of bottle | |
|---|---|
| ⓞ (excellent) | The breakage height is at least 120 cm. |
| ○ (good) | The breakage height is at least 100 cm and is less than 120 cm. |
| × (bad) | The breakage height is less than 100 cm. |

### Example 1

(1) A slurry was prepared from 100.00 parts by weight of terephthalic acid, 48.73 parts by weight of ethylene glycol, 4.34 parts by weight of 1,4-cyclohexanedimethanol, 0.116 part by weight of trimellitic anhydride and 0.104 part by weight of 2-naphthoic acid. To the slurry, 0.020 part by weight of germanium dioxide, 0.015 part by weight of phosphorus acid, 0.015 part by weight of cobalt acetate and 0.015 part by weight of tetraethylammonium hydroxide were added. The resulting slurry was heated, under a pressure (absolute pressure: 2.5 kg/cm²), to a temperature of 250°C, to conduct esterification to an esterification ratio of 95%, to produce a low-polymerization-degree compound. The compound thus obtained was, under a reduced pressure of 1 mmHg and at a temperature of 270°C, melt polycondensed, to yield a copolyester prepolymer having an intrinsic viscosity of 0.70 dl/g. The prepolymer was extruded through a nozzle into a strand, which was then cut into cylindrical chips (diameter: 2.5 mm, length: about 3.5 mm). The prepolymer had a melt flow rate (MFR) at 270°C of 30 g/10 min.
(2) The copolyester prepolymer chips thus obtained were, after being pre-dried at a temperature of 150°C for 5 hours, subjected to solid phase polymerization under a reduced pressure of 0.1 mmHg at 210°C for 29 hours, to yield a high molecular copolyester.
(3) The copolymer obtained in the above (2) was tested for the content of each structural units by the afore-described method. The content of terephthalic acid units, ethylene glycol units, 1,4-cyclohexanedimethanol units, trimellitic acid units, naphthoic acid units or diethylene glycol units was as shown in Table 8 below.
(4) The copolymer obtained in the above (2) was also tested for the physical properties in accordance with the afore-described methods, to show, as shown in Table 8 below, an intrinsic viscosity of 1.12 dl/g, an MFR at 270°C of 1.5 g/10 min and melt viscosities at the same temperature and at a shear rate of 0.1 rad/sec (η 1) and at a shear rate of 100 rad/sec (η 2) of 1.29 x 10⁵ poises and 1.39 x 10⁴ poises, respectively, which led to a value of (1/3)log₁₀ (η 2/η 1) of -0.32.
   The copolyester was further tested for the shark-skin critical shear stress (σ ss) at 270°C and the shear stress (σ 100) at a shear rate of 100 /sec, to show 6.7 x 10⁶ dyne/cm² and 3.1 x 10⁶ dyne/cm², respectively.
   The copolyester was further tested for the crystallinity (χ c), glass transition temperature (Tg), melting point (Tm), cold crystallization temperature (Tcc) and cold crystallization heat (ΔHcc), to show, as shown in Table 8 below, 31%, 78°C, 238°C, 128°C and 9 J/g, respectively.
(5) The copolyester was extrusion blow molded through an extrusion blow molding machine (hollow molding machine Type BM-304•J2, made by Placo Co.) into bottles (designed capacity: 1,800 ml, designed weight: 80 g). The intermediate product parisons were tested for drawdown property and blow moldability, and the resulting bottles for transparency, generation of gels, falling breakage height and falling impact strength, in accordance with the above-described methods, to give the results shown in Table 13 below.

### Examples 2 through 4

There were used terephthalic acid and ethylene glycol in amounts as shown in Table 8. In addition, 1,4-cyclohexanedimethanol, trimellitic anhydride and 2-naphthoic acid or 2,4,6-trimethoxybenzoic acid were used as an alicyclic or aliphatic bifunctional compound for the alicyclic or aliphatic bifunctional compound units (a₁), a multifunctional compound for the multi-functional compound units (b₁) and a monofunctional compound for the monofunctional compound units (c), respectively, in amounts as shown in Table 8. With these, esterification and melt polycondensation were conducted in the same manner as in Example 1, to prepare copolyester prepolymer chips. The series of the copolyester prepolymers obtained were each subjected to solid phase polymerization under the conditions of temperature and time as shown in Table 8, to yield copolyesters.

The copolyesters thus obtained were each tested for the content of structural units and properties in the same manner. The results are shown in Table 8 below.

The copolyesters obtained in these Examples 2 through 4 were each extrusion blow molded in the same manner into bottles. The drawdown property and blow moldability of the parisons and the transparency, generation of gels, falling breakage height and falling impact strength of the obtained bottles were determined or evaluated by the above-described methods. The results are shown in Table 13 below.

### Examples 5 through 8

There were used terephthalic acid and ethylene glycol in amounts as shown in Table 9. In addition, 1,4-cyclohexanedimethanol, and 1,3-propanediol or 2-butyl-2-ethyl-1,3-propanediol, trimethylolpropane or trimellitic anhydride, and stearic acid, 2-naphthoic acid, polyethylene glycol monomethyl ether or stearyl alcohol were used as an alicyclic or aliphatic bifunctional compound for the alicyclic or aliphatic bifunctional compound units (a₁), a multi-functional compound for the multi-functional compound units (b₁) and a monofunctional compound for the monofunctional compound units (c), respectively, in amounts as shown in Table 9. With these, esterification and melt polycondensation were conducted in the same manner as in Example 1, to prepare copolyester prepolymer chips. The series of the copolyester prepolymers obtained were each subjected to solid phase polymerization under the conditions of temperature and time as shown in Table 9, to yield copolyesters. The copolyesters thus obtained were each tested for the content of structural units and properties in the same manner. The results are shown in Table 9 below.

The copolyesters obtained in these Examples 5 through 8 were each extrusion blow molded in the same manner into bottles. The drawdown property and blow moldability of the parisons and the transparency, generation of gels, falling breakage height and falling impact strength of the obtained bottles were determined or evaluated by the above-described methods. The results are shown in Table 13 below.

### Examples 9 and 10

There were used terephthalic acid and ethylene glycol in amounts as shown in Table 10. In addition, 1,4-cyclohexanedimethanol, and pentaerythrithol or trimethylolpropane, and m-anisic acid or benzoic acid, as an alicyclic or aliphatic bifunctional compound for the alicyclic or aliphatic bifunctional compound units (a₁), a multi-functional compound for the multi-functional compound units (b₁) and a monofunctional compound for the monofunctional compound units (c), respectively, in amounts as shown in Table 10. With these, esterification and melt polycondensation were conducted in the same manner as in Example 1, to prepare copolyester prepolymer chips. The copolyester prepolymers obtained were each subjected to solid phase polymerization under the conditions of temperature and time as shown in Table 10, to yield copolyesters. The copolyesters thus obtained were each tested for the content of structural units and properties in the same manner. The results are shown in Table 10 below.

The copolyesters obtained in these Examples 9 and 10 were each extrusion blow molded in the same manner into bottles. The drawdown property and blow moldability of the parisons and the transparency, generation of gels, falling breakage height and falling impact strength of the obtained bottles were determined or evaluated by the above-described methods. The results are shown in Table 13 below.

### Comparative Examples 1 through 4

There were used terephthalic acid and ethylene glycol in amounts as shown in Table 11. In addition, 1,4-cyclohexanedimethanol, and trimellitic anhydride or trimethylolpropane, and 2-naphthoic acid or benzoic acid, as an alicyclic or aliphatic bifunctional compound for the alicyclic or aliphatic bifunctional compound units (a₁), a multi-functional compound for the multi-functional compound units (b₁) and a monofunctional compound for the monofunctional compound units (c), respectively, in amounts as shown in Table 11. With these, esterification and melt polycondensation were conducted in the same manner as in Example 1, to prepare copolyester prepolymer chips. The copolyester prepolymers obtained were each subjected to solid phase polymerization under the conditions of temperature and time as shown in Table 11 (in Comparative Example 4, where the copolyester prepolymer chips were amorphous, the chips were subjected to the below-described extrusion blow molding as they were, without undergoing solid phase polymerization), to yield copolyesters. The copolyesters thus obtained were each tested for the content of structural units and properties in the same manner (in Comparative Example 4, the tests were conducted at 210°C for the above reason). The results are shown in Table 11 below.

The copolyesters obtained in these Comparative Examples 1 through 4 were each extrusion blow molded in the same manner as in Example 1 into bottles (in Comparative Example 4, the extrusion blow molding was conducted at 210°C for the above reason). The drawdown property and blow moldability of the parisons and the transparency, generation of gels, falling breakage height and falling impact strength of the obtained bottles were determined or evaluated by the above-described methods. The results are shown in Table 13 below.

### Comparative Example 5

There were used terephthalic acid and ethylene glycol in amounts as shown in Table 12. In addition, 1,4-cyclohexanedimethanol was used as an alicyclic or aliphatic bifunctional compound for the alicyclic or aliphatic bifunctional compound units (a₁) in an amount as shown in Table 12, but no multi-functional compound for the multi-functional compound units (b₁) or monofunctional compound for the monofunctional compound units (c) was used. With these, esterification and melt polycondensation were conducted in the same manner as in Example 1, to prepare copolyester prepolymer chips. The copolyester prepolymer obtained was subjected to solid phase polymerization under the conditions of temperature and time as shown in Table 12, to yield a copolyester. The copolyester thus obtained was tested for the content of structural units and properties in the same manner. The results are shown in Table 12 below.

The copolyester obtained in this Comparative Example 5 was extrusion blow molded in the same manner as in Example 1 into bottles. The drawdown property and blow moldability of the parisons and the transparency, generation of gels, falling breakage height and falling impact strength of the obtained bottles were determined or evaluated by the above-described methods. The results are shown in Table 13 below.

In Tables 8 through 12 that follow, compounds are shown by coding, the content of which are as shown in Table 7 below.

**Table 7**

| Code | Compound |
|---|---|
| TPA | Terephthalic acid |
| EG | Ethylene glycol |
| DEG | Diethylene glycol |
| PD | 1,3-Propanediol |
| BEPD | 2-Butyl-2-ethyl-propanediol |
| CHDM | 1,4-Cyclohexane dimethanol |
| CHDC | 1,4-Cyclohexanedicarboxylic acid |
| TMA | Trimellitic anhydride |
| TMP | Trimethylolpropane |
| PENTA | Pentaerythritol |
| NA | 2-Naphthoic acid |
| TMOBA | 2,4,6-Trimethoxybenzoic acid |
| STOH | Stearyl alcohol |
| STA | Stearic acid |
| APEG | Polyethylene glycol monomethyl ether (molecular weight: 1,000) |
| BA | Benzoic acid |
| AA | m-Anisic acid |

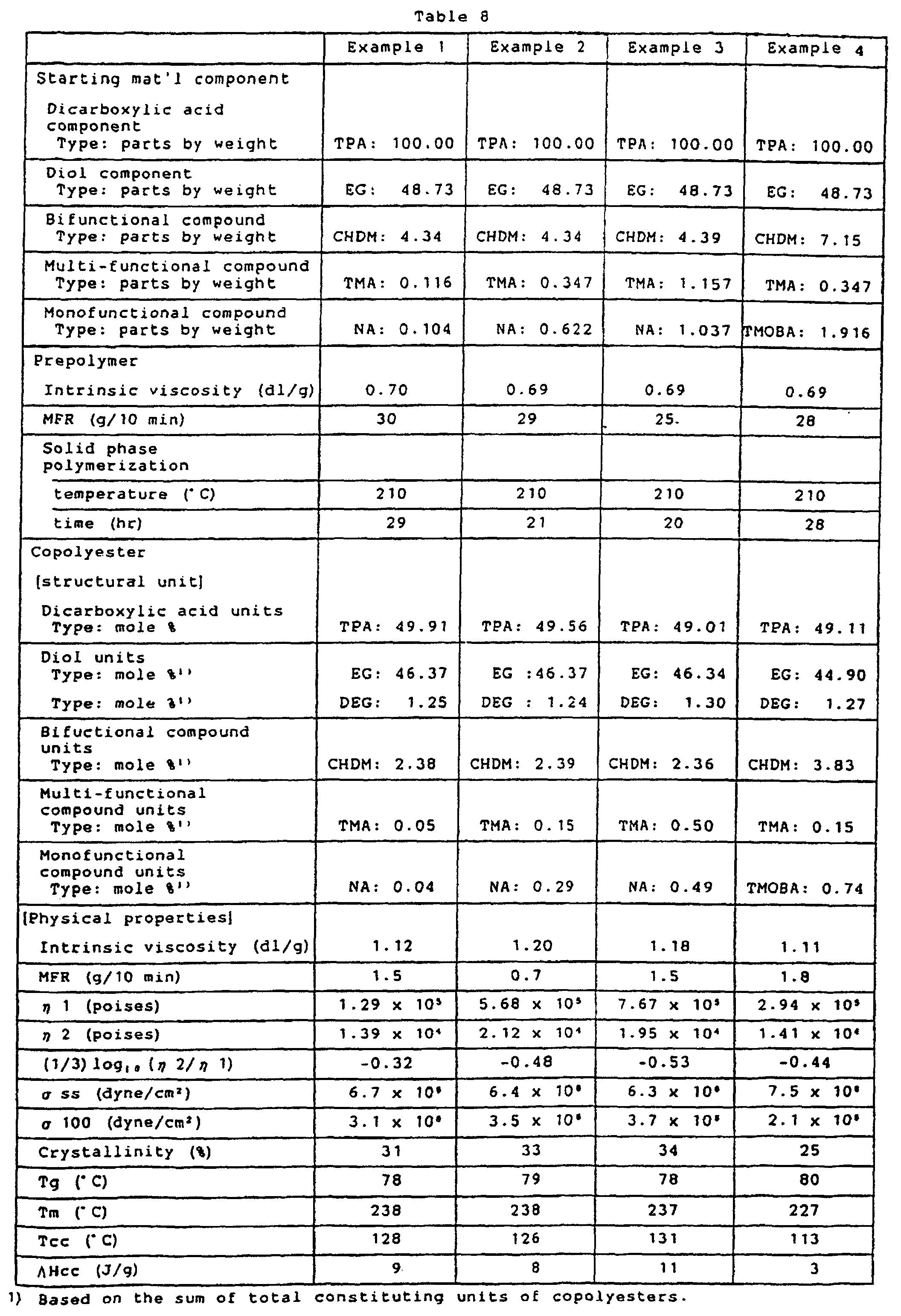

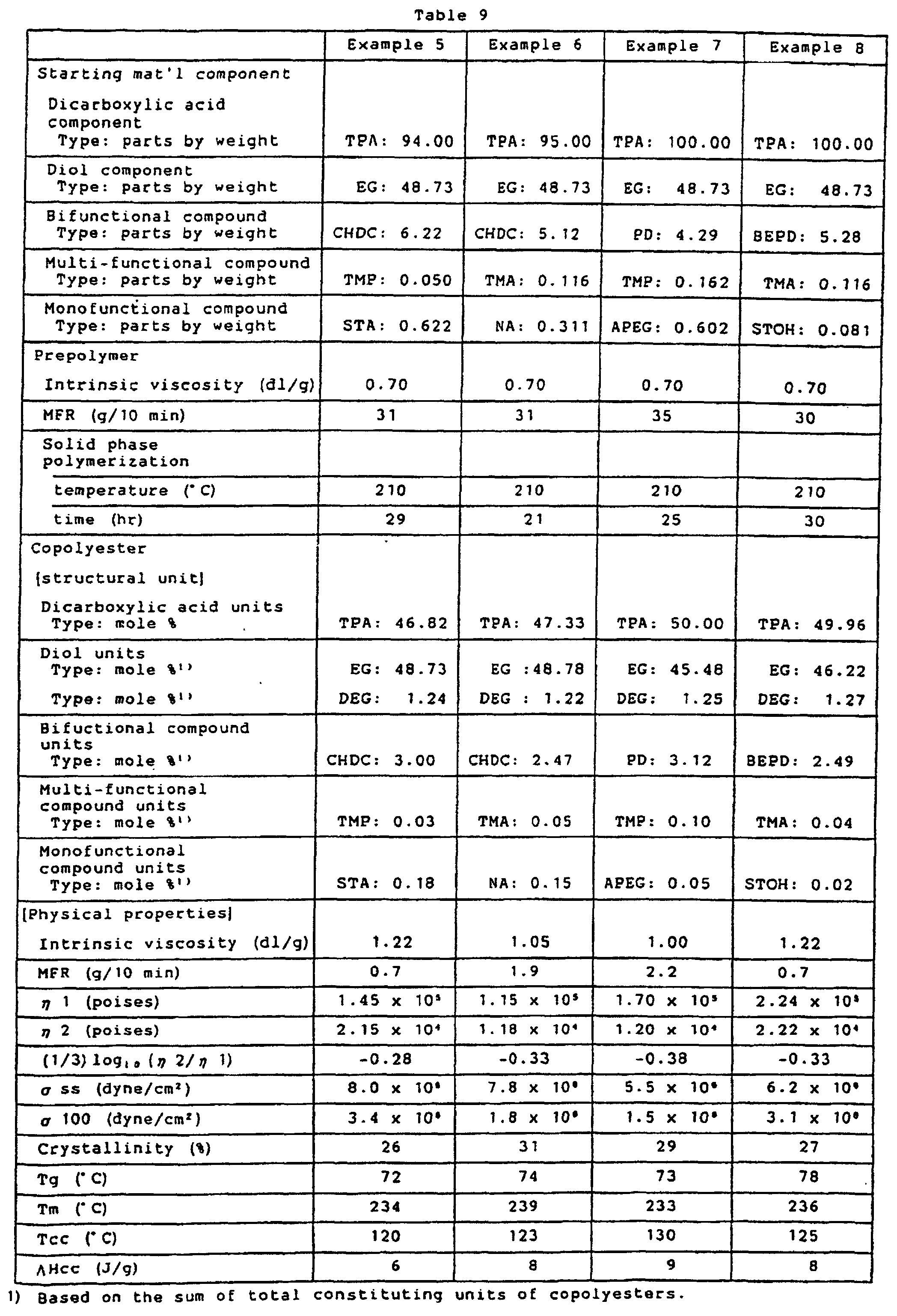

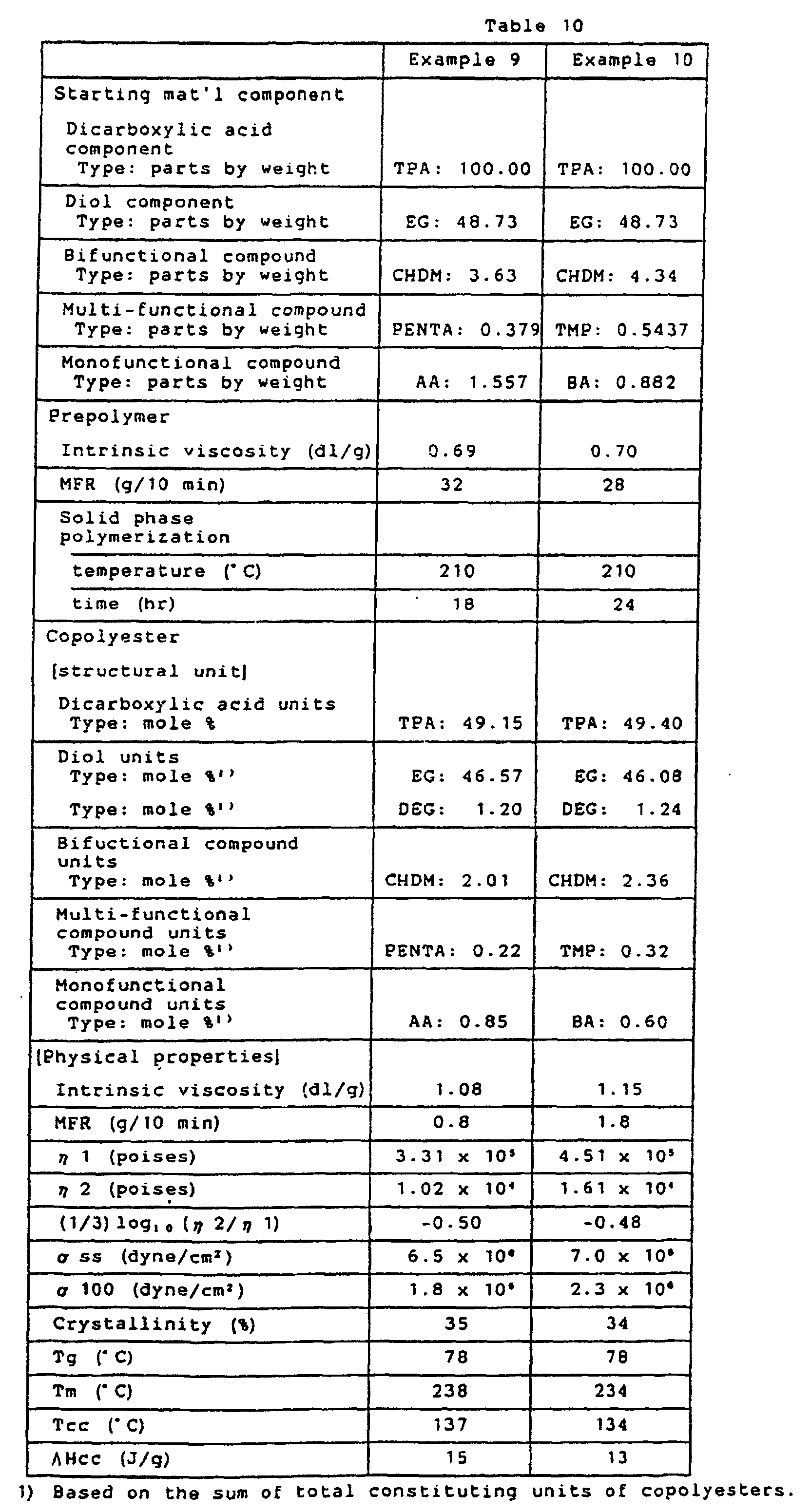

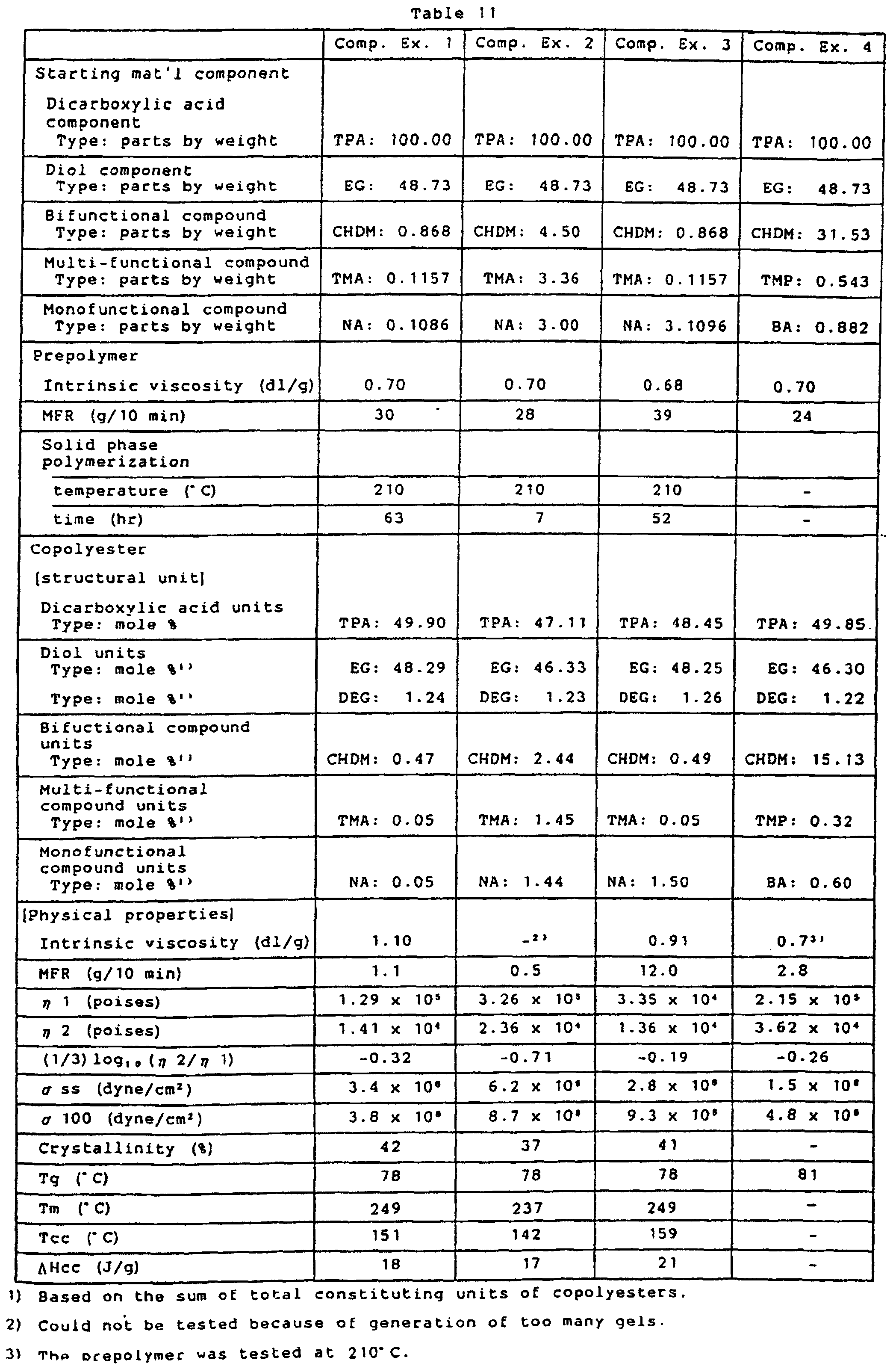

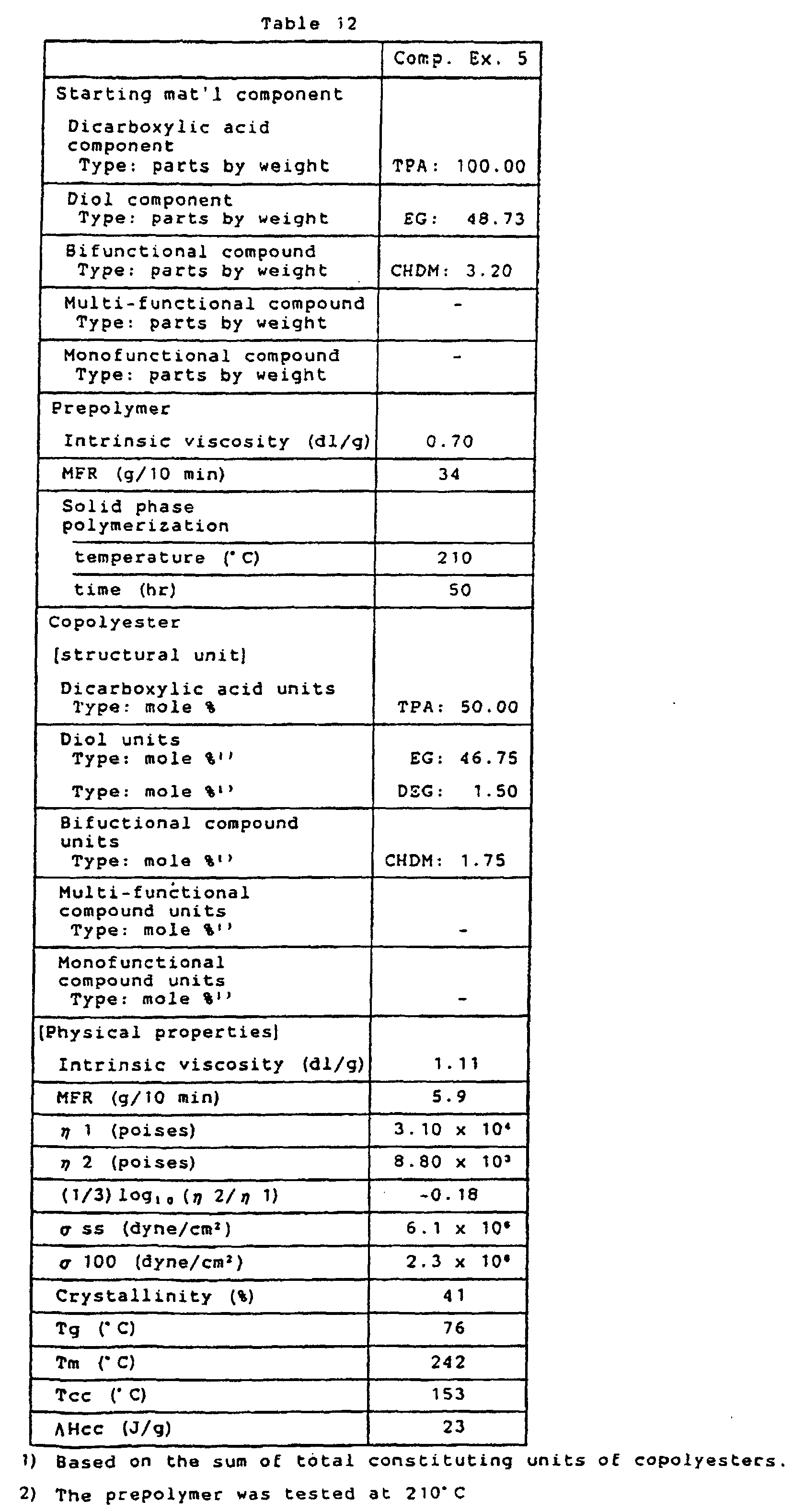

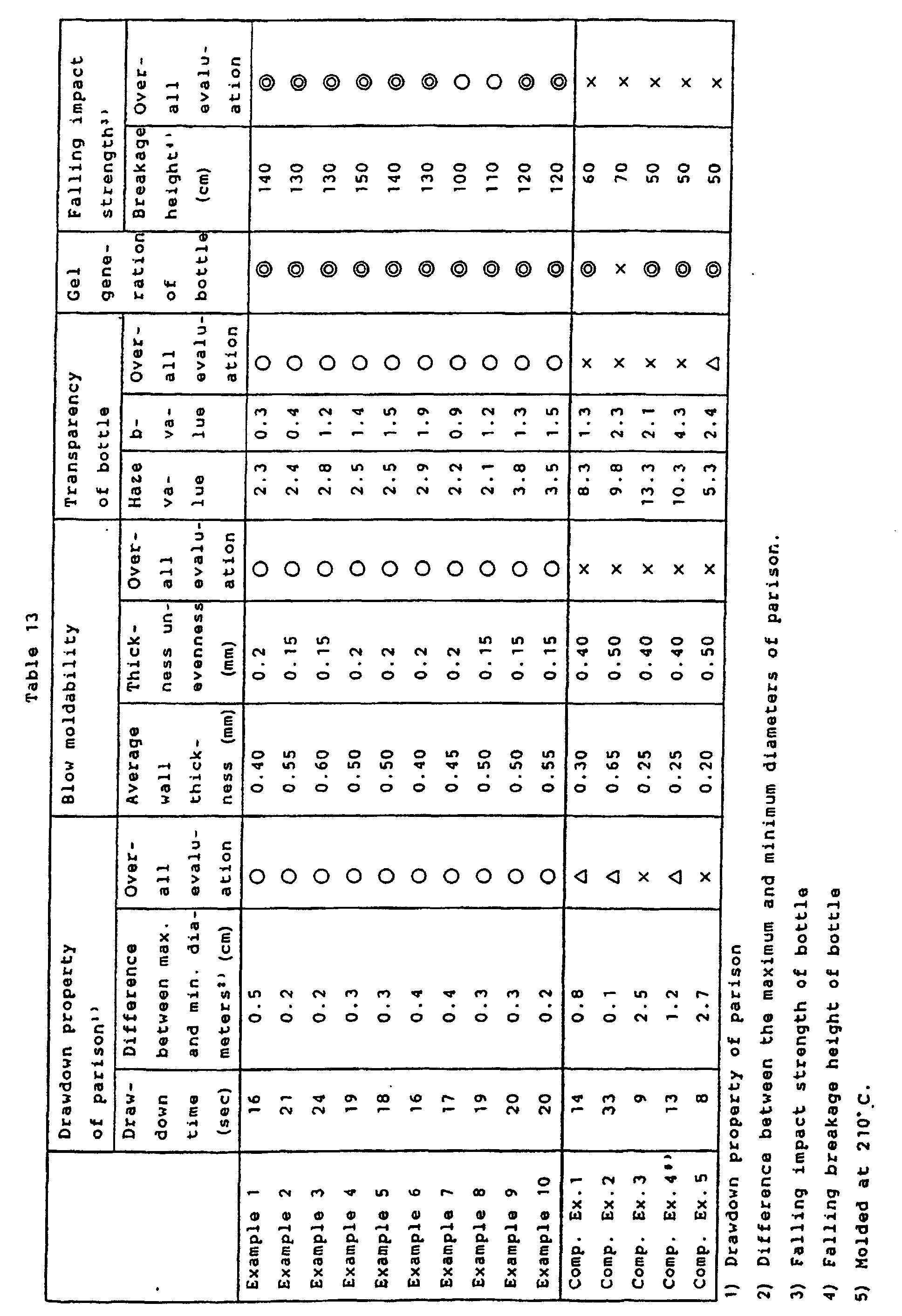

The following is understood from Tables 8 through 10 and Table 13.

The copolyesters of Examples 1 through 10, consisting essentially of terephthalic acid units and ethylene glycol units and further containing units (a₁) from an alicyclic or aliphatic bifunctional compound and units (b₁) from a multi-functional compound in amounts of 1 to 4 mole % and 0.005 to 1 mole %, respectively, based on the moles of total constituting units of the copolyesters and units (c) from a monofunctional compound in an amount satisfying the above formula (α), and having an intrinsic viscosity suited for melt molding such as extrusion blow molding, can be produced smoothly by solid phase polymerization in a short period of time of less than 30 hours. In any of the Examples, on producing bottles by extrusion blow molding of the obtained copolyester, the drawdown time of extruded parisons is in a range of 16 to 24 seconds, the difference between the maximum and minimum diameters of parisons is not more than 0.5 cm, the production of bottles is at least 120 pieces per hour with the defectives being less than 10 pieces per 100 pieces, the obtained bottles having an average wall thickness of 0.30 to 0.7 mm and thickness unevenness of less than 0.3 mm, thus proving excellent blow moldability. Furthermore the bottles obtained in Examples 1 through 10 have a haze value of not more than 4 and a b-value of less than 2, thus proving excellent transparency and surface neatness. The bottles have a gel generation of not more than 2.5% and a falling breakage height of at least 100 cm, thus proving to have excellent falling impact strength.

On the other hand, the results of Tables 11 and 13 show that the copolyesters of Comparative Examples 1 through 3, consisting essentially of terephthalic acid units and ethylene glycol units and containing amounts deviated from the ranges specified in the present invention of units (a₁) from an alicyclic or aliphatic bifunctional compound, units (b₁) from a multi-functional compound or units (c) from a monofunctional compound had poor drawdown property of parisons. On producing bottles by extrusion blow molding of these copolyesters, the obtained bottles had a thickness unevenness of at least 0.3 mm, thus proving poor blow moldability. Furthermore, the bottles had a haze value of at least 5, thus proving poor transparency. The bottles had a falling breakage height of 50 to 70 cm, thus proving to have low quality. The solid phase polymerization in Comparative Examples 1 and 3 took as long time as 63 hours and 52 hours, respectively, which means that the productivity was very low.

The results of Tables 11 and 13 show that the copolyester of Comparative Example 4, consisting essentially of terephthalic acid units and ethylene glycol units and, although containing units (a₁) from an alicyclic or aliphatic bifunctional compound, units (b₁) from a multi-functional compound and units (c) from a monofunctional compound, having a content of the alicyclic or aliphatic bifunctional compound units of more than 4 mole % based on the moles of total constituting units of the copolyester, was amorphous. The degree of polymerization of the copolyester could therefore not be increased by solid phase polymerization. The copolyester could not show a high melt viscosity at a temperature of 270°C, so that extrusion blow molding was impossible at this temperature. Extrusion molding was hence conducted at a temperature of 210°C, at which molding was narrowly possible. The resulting parisons had poor drawdown property. On producing bottles, the obtained bottles had a thickness unevenness of 0.4 mm, thus proving to have poor blow moldability. Furthermore, the bottles obtained in Comparative Example 4, having been molded at a low temperature, had a marked finely roughened surface, thereby showing a haze value of 10.3, which means poor transparency, and having poor tactility. The bottles had a falling breakage height of 50 cm, thus proving to have low falling impact strength and low quality.

The results of Tables 11 and 13 show that the copolyester of Comparative Example 5, consisting essentially of terephthalic acid units and ethylene glycol units and, although containing units (a₁) from an alicyclic or aliphatic bifunctional compound, containing no units (b₁) from a multi-functional compound or units (c) from a monofunctional compound had poor drawdown property of parisons. On producing bottles by extrusion blow molding of the copolyester, the obtained bottles had a thickness unevenness of 0.5 mm, thus proving poor blow moldability. Furthermore, the bottles had a haze value of 4.1, thus proving to have a little poor transparency. The bottles had a falling breakage height of 50 cm, thus proving to have low falling impact strength and low quality. The solid phase polymerization in Comparative Examples 5 took as long time as 72, which means that the productivity was very low.

### Examples 11 and 12 and Comparative Examples 6 and 7

There were used terephthalic acid and ethylene glycol in amounts as shown in Table 14. In addition, there were used 1,4-cyclohexanedimethanol, trimellitic anhydride and benzoic acid in amounts as shown, as an alicyclic or aliphatic bifunctional compound for the alicyclic or aliphatic bifunctional compound units (a₁), an multi-functional compound for the multi-functional compound units (b₁) and an monofunctional compound for the monofunctional compound units (c), respectively. With these, esterification and melt polycondensation were conducted in the same manner as in Example 1, to prepare copolyester prepolymer chips. The copolyester prepolymers obtained were subjected to solid phase polymerization under the conditions of temperature and time as shown in Table 14, to yield copolyesters. The copolyesters thus obtained were tested for the content of structural units and properties in the same manner. The results are shown in Table 14 below.

The copolyesters obtained in these Examples 11 and 12 and Comparative Examples 6 and 7 were extrusion blow molded in the same manner as in Example 1 into bottles. The drawdown property and blow moldability of the parisons and the transparency, generation of gels, falling breakage height and falling impact strength of the obtained bottles were determined or evaluated by the above-described methods. The results are shown in Table 15 below.

In Tables 14, compounds are shown by coding, the content of which are as shown in the above Table 7.

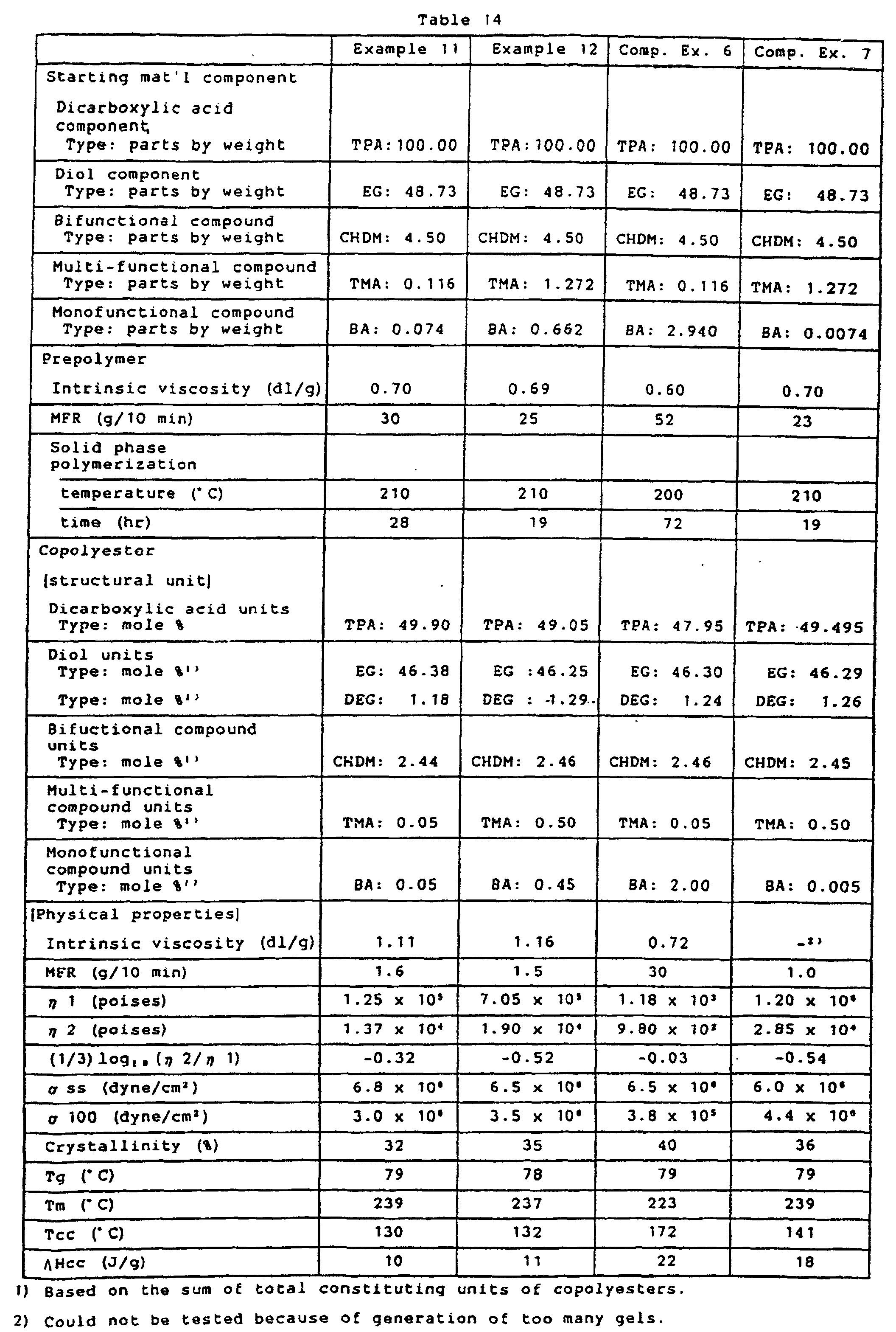

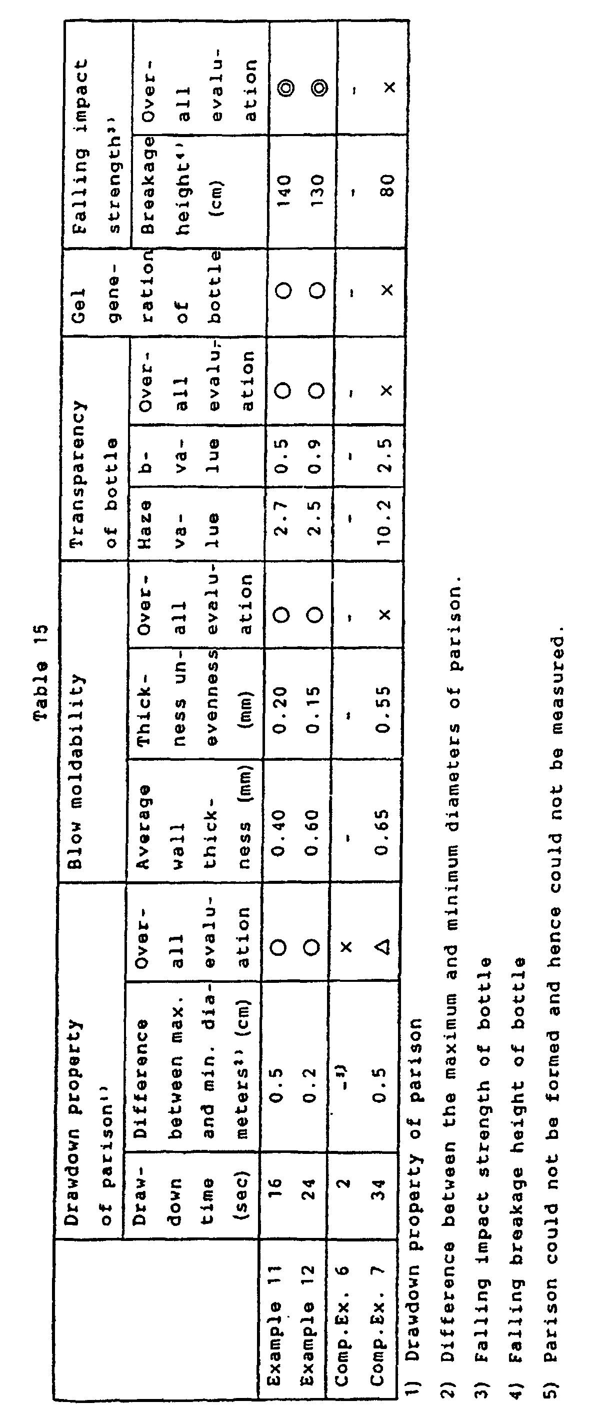

The following is understood from Tables 14 and 15.

The copolyesters of Examples 11 and 12, consisting essentially of terephthalic acid units and ethylene glycol units and further containing units (a₁) from an alicyclic or aliphatic bifunctional compound and units (b₁) from a multi-functional compound in amounts of 1 to 4 mole % and 0.005 to 1 mole %, respectively, based on the moles of total constituting units of the copolyesters and units (c) from a monofunctional compound in an amount satisfying the above formula (α) can, like those in Examples 1 through 10, be produced smoothly by solid phase polymerization in a a short period of time of not more than 30 hours to have an intrinsic viscosity suited for melt molding such as extrusion blow molding. On producing bottles by extrusion blow molding of the copolyesters in Examples 11 and 12, the drawdown time and blow moldability were excellent like in Examples 1 through 10. The obtained bottles had excellent transparency and surface neatness, generated very few gels and had a high falling impact strength.

On the other hand, the copolyester of Comparative Example 6, consisting essentially of terephthalic acid units and ethylene glycol units and further containing units (a₁) from an alicyclic or aliphatic bifunctional compound and units (b₁) from a multi-functional compound in an amount of 1 to 4 mole % and 0.005 to 1 mole % and, although containing units (c) from a monofunctional compound, having a content of the monofunctional compound units (c) exceeding the range of the formula (α), had a low viscosity, since the degree of polymerization could not be increased to a sufficient level by melt polymerization and solid phase polymerization. The copolyester, when subjected to extrusion blow molding, could not form a parison, thereby failing to yield molded articles.

The copolyester of Comparative Example 7, consisting essentially of terephthalic acid units and ethylene glycol units and further containing units (a₁) from an alicyclic or aliphatic bifunctional compound and units (b₁) from a multi-functional compound in an amount of 1 to 4 mole % and 0.005 to 1 mole % and, although containing units (c) from a monofunctional compound, having a content of the monofunctional compound units (c) of less than the range of the formula (α), had problems on extrusion blow molding. That is, there occurred severe uneven extrusion and the parison was difficult to form. On producing bottles by extrusion blow molding of the copolyester, the obtained bottles had a thickness unevenness of at least 0.3 mm, thus proving poor blow moldability. Furthermore, the bottles had a haze value of at least 5, thus proving to have poor transparency. The bottles had many agglomerates due to gelation and had a falling breakage height of 80 cm, thus proving to have low falling impact strength and low quality.

### Example 13

(1) A slurry was prepared from 100.00 parts by weight of terephthalic acid, 48.73 parts by weight of ethylene glycol, 5.75 parts by weight of 2,2-bis[4-(2-hydroxyethoxy)phenyl]-propane, 0.081 part by weight of trimethylolpropane and 0.015 part by weight of benzoic acid. To the slurry, 0.020 part by weight of germanium dioxide, 0.015 part by weight of phosphorus acid, 0.015 part by weight of cobalt acetate and 0.015 part by weight of tetraethylammonium hydroxide were added. The resulting slurry was heated, under a pressure (absolute pressure: 2.5 kg/cm²), to a temperature of 250°C, to conduct esterification to an esterification ratio of 95%, to produce a low-polymerization-degree compound. The compound thus obtained was, under a reduced pressure of 1 mmHg and at a temperature of 270°C, melt polycondensed, to yield a copolyester prepolymer having an intrinsic viscosity of 0.70 dl/g. The prepolymer was extruded through a nozzle into a strand, which was then cut into cylindrical chips (diameter: about 2.5 mm, length: about 3.5 mm). The prepolymer had a melt flow rate (MFR) at 270°C of 32 g/10 min.
(2) The copolyester prepolymer chips thus obtained were, after being pre-dried at a temperature of 150°C for 5 hours, subjected to solid phase polymerization with a tumbling type vacuum solid phase polymerization apparatus under a reduced pressure of 0.1 mmHg at 210°C for 27 hours, to yield a high molecular copolyester.
(3) The copolyester obtained in the above (2) was tested for the content of each structural units by the afore-described method. The content of terephthalic acid units, ethylene glycol units, 2,2-bis [4-(2-hydroxyethoxy)phenyl]-propane units, trimethylolpropane units, benzoic acid units or diethylene glycol units was as shown in Table 17 below.
(4) The copolyester obtained in the above (2) was also tested for the physical properties in accordance with the afore-described methods, to show, as shown in Table 17 below, an intrinsic viscosity of 1.10 dl/g, an MFR at 270° C of 2.0 g/10 min and melt viscosities at the same temperature and at a shear rate of 0.1 rad/sec (η 1) and at a shear rate of 100 rad/sec (η 2) of 1.36 x 10⁵ poises and 1.40 x 10⁴ poises, respectively, which led to a value of (1/3)log₁₀ (η 2/η 1) of -0.33.
   The copolyester obtained in the above (2) was further tested for the shark-skin critical shear stress (σ ss) and shear stress (σ 100) at a shear rate of 100 /sec, at a temperature of 270°C, to show 5.0 x 10⁶ dyne/cm² and 2.6 x 10⁶ dyne/cm², respectively.
   The copolyester obtained in the above (2) was further tested for the (χ c), Tg, Tm, Tcc and ΔHcc, to show, as shown in Table 17 below, 33%, 79°C, 243°C, 143°C and 15 J/g, respectively.
   The copolyester obtained in the above (2) had a terminal carboxyl group concentration (CEG) of 12 µequivalent/g.
(5) The copolyester obtained in the above (2) was extrusion blow molded through an extrusion blow molding machine (hollow molding machine Type BM-304•J2, made by Placo Co.) into bottles (designed capacity: 1,800 ml, designed weight: 80 g). The intermediate product parisons were tested for drawdown property and blow moldability, and the resulting bottles for transparency, generation of gels, generation of agglomerates, falling breakage height and falling impact strength, in accordance with the above-described methods, to give the results shown in Table 22 below.

### Examples 14 through 16

There were used terephthalic acid and ethylene glycol in amounts as shown in Table 17 below. In addition, 2,2-bis [4-(2-hydroxyethoxy)phenyl]propane, and trimethylolpropane or trimellitic anhydride, and 2-naphthoic acid, benzoic acid or 2,4,6-trimethoxybenzoic acid were used as a bifunctional compound for the diol units (I) and/or diol units (II) having a benzene ring, a multi-functional compound for the multi-functional compound units (b₁) and a monofunctional compound for the monofunctional compound units (c), respectively, in amounts as shown in Table 17. With these, esterification and melt polycondensation were conducted in the same manner as in Example 13, to prepare copolyester prepolymer chips. The series of the copolyester prepolymers obtained were each subjected to solid phase polymerization under the conditions of temperature and time as shown in Table 17, to yield copolyesters.

The copolyesters thus obtained were each tested for the content of structural units and properties in the same manner as in Example 13. The results are shown in Table 17 below.

The copolyesters obtained in these Examples 14 through 16 were each extrusion blow molded in the same manner into bottles. The drawdown property and blow moldability of the parisons and the transparency, generation of gels, generation of agglomerates, falling breakage height and falling impact strength of the obtained bottles were determined or evaluated by the above-described methods. The results are shown in Table 22 below.

### Examples 17 through 20

There were used terephthalic acid and ethylene glycol in amounts as shown in Table 18. In addition, bis[4-(2-hydroxyethoxy)phenyl] sulfone or 1,4-bis(2-hydroxyethoxy)-benzene, and pentaerythritol, trimellitic anhydride or trimesic acid, and stearic acid, stearyl alcohol, m-anisic acid or benzoic acid were used as a bifunctional compound for the diol units (I) and/or diol units (II) having a benzene ring, a multi-functional compound for the multi-functional compound units (b₁) and a monofunctional compound for the monofunctional compound units (c), respectively, in amounts as shown in Table 18. With these, esterification and melt polycondensation were conducted in the same manner as in Example 13, to prepare copolyester prepolymer chips. The copolyester prepolymers obtained were each subjected to solid phase polymerization under the conditions of temperature and time as shown in Table 18, to yield copolyesters. The copolyesters thus obtained were each tested for the content of structural units and properties in the same manner. The results are shown in Table 18 below.

The copolyesters obtained in these Examples 17 through 20 were each extrusion blow molded in the same manner into bottles. The drawdown property and blow moldability of the parisons and the transparency, generation of gels, generation of agglomerates, falling breakage height and falling impact strength of the obtained bottles were determined or evaluated by the above-described methods. The results are shown in Table 22 below.

### Comparative Examples 8 through 11

There were used terephthalic acid and ethylene glycol in amounts as shown in Table 19. In addition, neopentyl glycol was added or not added, or isophthalic acid was added, as a bifunctional compound for bifunctional compound units. There was further used trimethylolpropane, trimellitic acid or pentaerythrithol in an amount as shown in Table 19, as a multi-functional compound for the multi-functional compound units (b₁). There was further used or not used benzoic acid or m-anisic acid in an amount as shown, as a monofunctional compound for the monofunctional compound units (c). With these, esterification and melt polycondensation were conducted in the same manner as in Example 13, to prepare copolyester prepolymer chips. The copolyester prepolymers obtained were each subjected to solid phase polymerization under the conditions of temperature and time as shown in Table 19, to yield copolyesters. The copolyesters thus obtained were each tested for the content of structural units and properties in the same manner as in Example 13. The results are shown in Table 19 below.

The copolyesters obtained in these Comparative Examples 8 through 11 were each extrusion blow molded in the same manner as in Example 13 into bottles. The drawdown property and blow moldability of the parisons and the transparency, generation of gels, generation of agglomerates, falling breakage height and falling impact strength of the obtained bottles were determined or evaluated by the above-described methods. The results are shown in Table 22 below.

### Comparative Examples 12 through 15

There were used terephthalic acid and ethylene glycol in amounts as shown in Table 20. In addition, no bifunctional compound for the diol units (I) and/or diol units (II) having a benzene ring was used or 2,2-bis[4-(2-hydroxyethoxy)phenylpropane was used as a bifunctional compound for the diol units (I) and/or diol units (II) having a benzene ring. No multi-functional compound for the multi-functional compound units (b₁) was used or trimethylolpropane was used in an amount as shown in Table 20, as a multi-functional compound for the multi-functional compound units (b₁). No monofunctional compound for the monofunctional compound units (c) was used or 2-naphthoic acid was used, in an amount as shown, as a monofunctional compound for the monofunctional compound units (c). With these, esterification and melt polycondensation were conducted in the same manner as in Example 13, to prepare copolyester prepolymer chips. The copolyester prepolymers obtained were each subjected to solid phase polymerization under the conditions of temperature and time as shown in Table 20, to yield copolyesters. Here, in Comparative Examples 13 and 15, where the copolyester chips were amorphous, solid phase polymerization was not conducted and the chips were subjected to the below-mentioned extrusion blow molding as they were.

The copolyesters thus obtained were each tested for the content of structural units and properties in the same manner as in Example 13. Here, as described above, the tests were conducted at 210°C in Comparative Examples 13 and 15. The results are shown in Table 20 below.

The copolyesters obtained in these Comparative Examples 12 through 15 were each extrusion blow molded in the same manner as in Example 13 into bottles. Here, as described above, the extrusion blow molding was conducted at 210°C in Comparative Examples 13 and 15. The drawdown property and blow moldability of the parisons and the transparency, generation of gels, generation of agglomerates, falling breakage height and falling impact strength of the obtained bottles were determined or evaluated by the above-described methods. The results are shown in Table 22 below.

### Comparative Examples 16 through 18

There were used terephthalic acid and ethylene glycol in amounts as shown in Table 21 below. In addition, 2,2-bis[4-(2-hydroxyethoxy)phenylpropane was used as a bifunctional compound for the diol units (I) and/or diol units (II) having a benzene ring. There was further used or not used trimellitic acid in an amount as shown in Table 21, as a multi-functional compound for the multi-functional compound units (b₁). There was further used or not used benzoic acid in an amount as shown, as a monofunctional compound for the monofunctional compound units (c). With these, esterification and melt polycondensation were conducted in the same manner as in Example 13, to prepare copolyester prepolymer chips. The copolyester prepolymers obtained were each subjected to solid phase polymerization under the conditions of temperature and time as shown in Table 21, to yield copolyesters. The copolyesters thus obtained were each tested for the content of structural units and properties in the same manner as in Example 13. The results are shown in Table 21 below.

The copolyesters obtained in these Comparative Examples 16 through 18 were each extrusion blow molded in the same manner as in Example 13 into bottles. The drawdown property and blow moldability of the parisons and the transparency, generation of gels, generation of agglomerates, falling breakage height and falling impact strength of the obtained bottles were determined or evaluated by the above-described methods. The results are shown in Table 22 below.

The content of the coding used in Tables 17 through 21 is as shown in Table 16 below.

**Table 16**

| Code | Compound |
|---|---|
| TPA | Terephthalic acid |
| EG | Ethylene glycol |
| DEG | Diethylene glycol |
| EOBPA | 2,2-Bis[4-(2-hydroxyethoxy)phenyl]propane |
| EOBPS | Bis[4-(2-hydroxyethoxy)phenyl] sulfone |
| BHEB | 1,4-Bis(2-hydroxyethoxy)benzene |
| NPG | Neopentyl glycol |
| IPA | Isophthalic acid |
| TMA | Trimellitic anhydride |
| TMSA | Trimesic acid |
| TMP | Trimethylolpropane |
| PENTA | Pentaerythritol |
| BA | Benzoic acid |
| NA | 2-Naphthoic acid |
| TMOBA | 2,4,6-Trimethoxybenzoic acid |
| STA | Stearic acid |
| STOH | Stearyl alcohol |
| AA | m-Anisic acid |

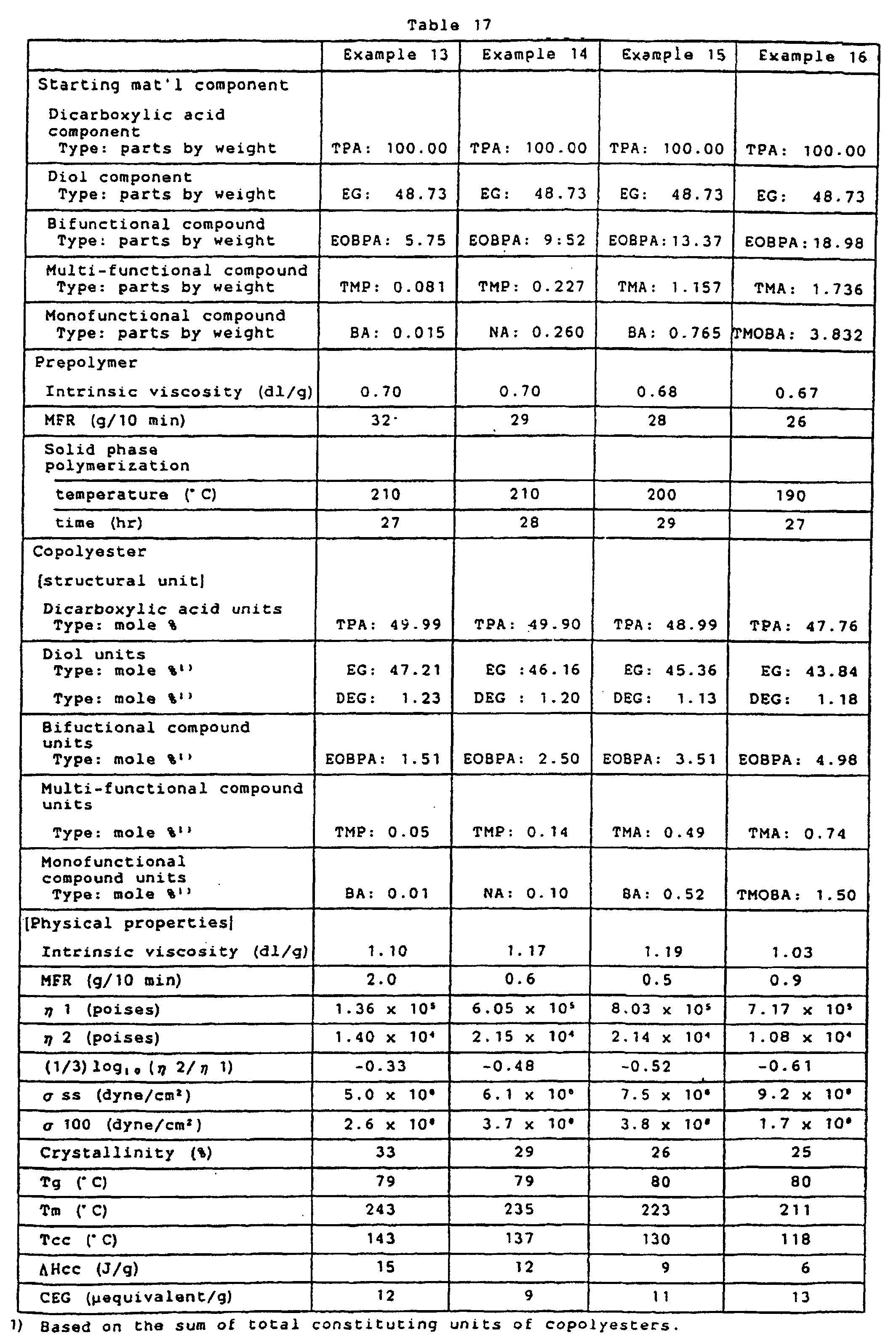

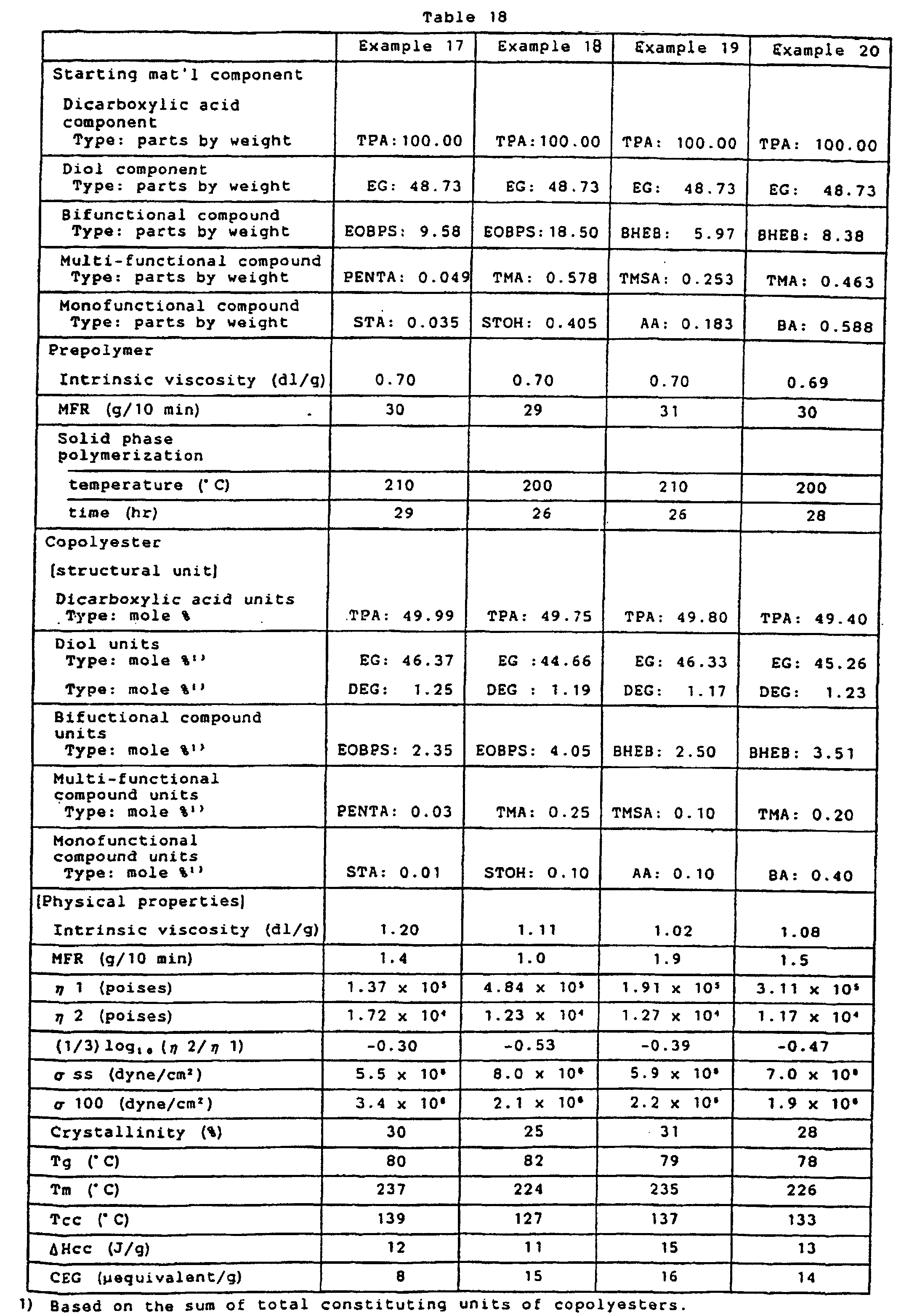

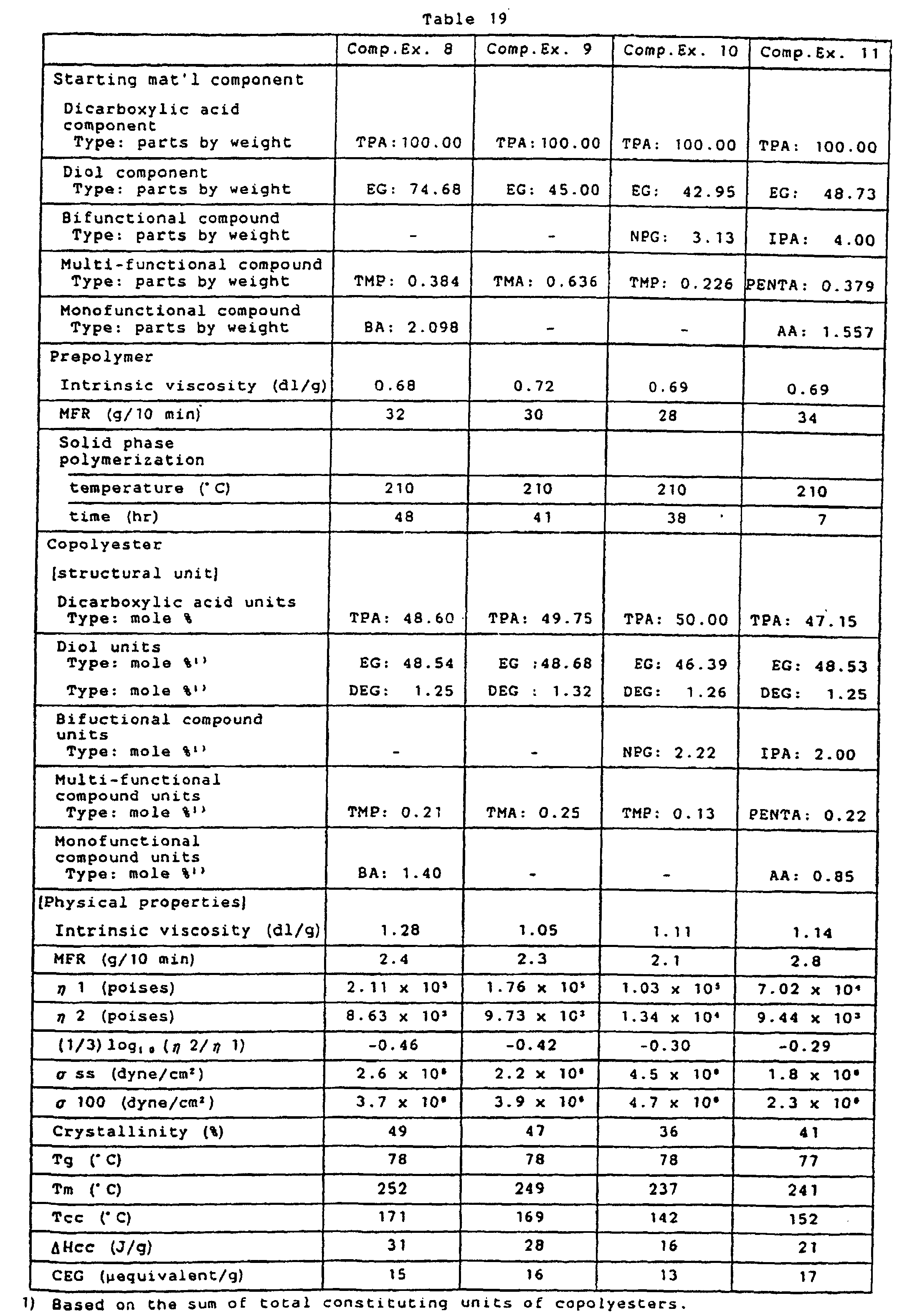

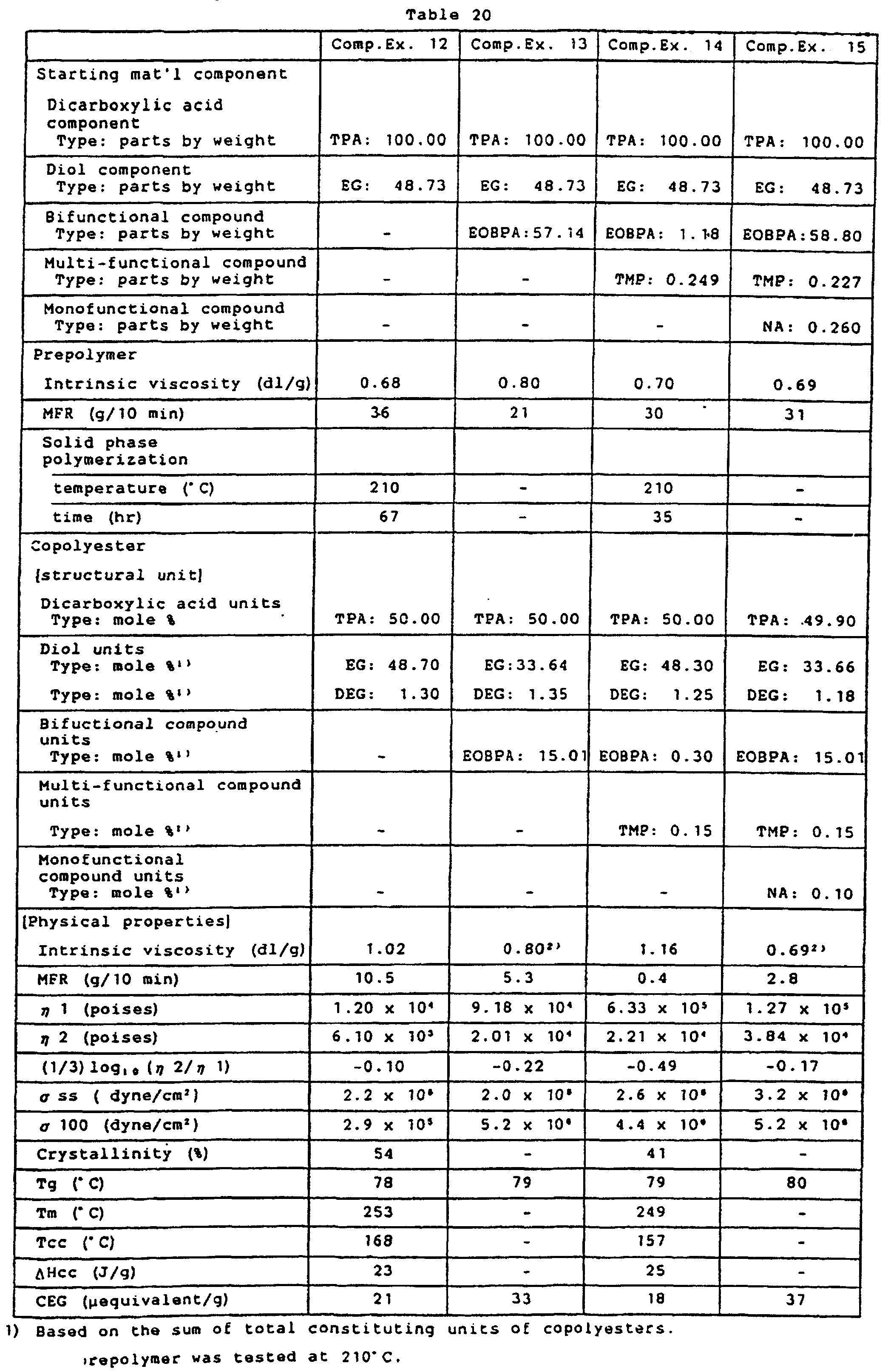

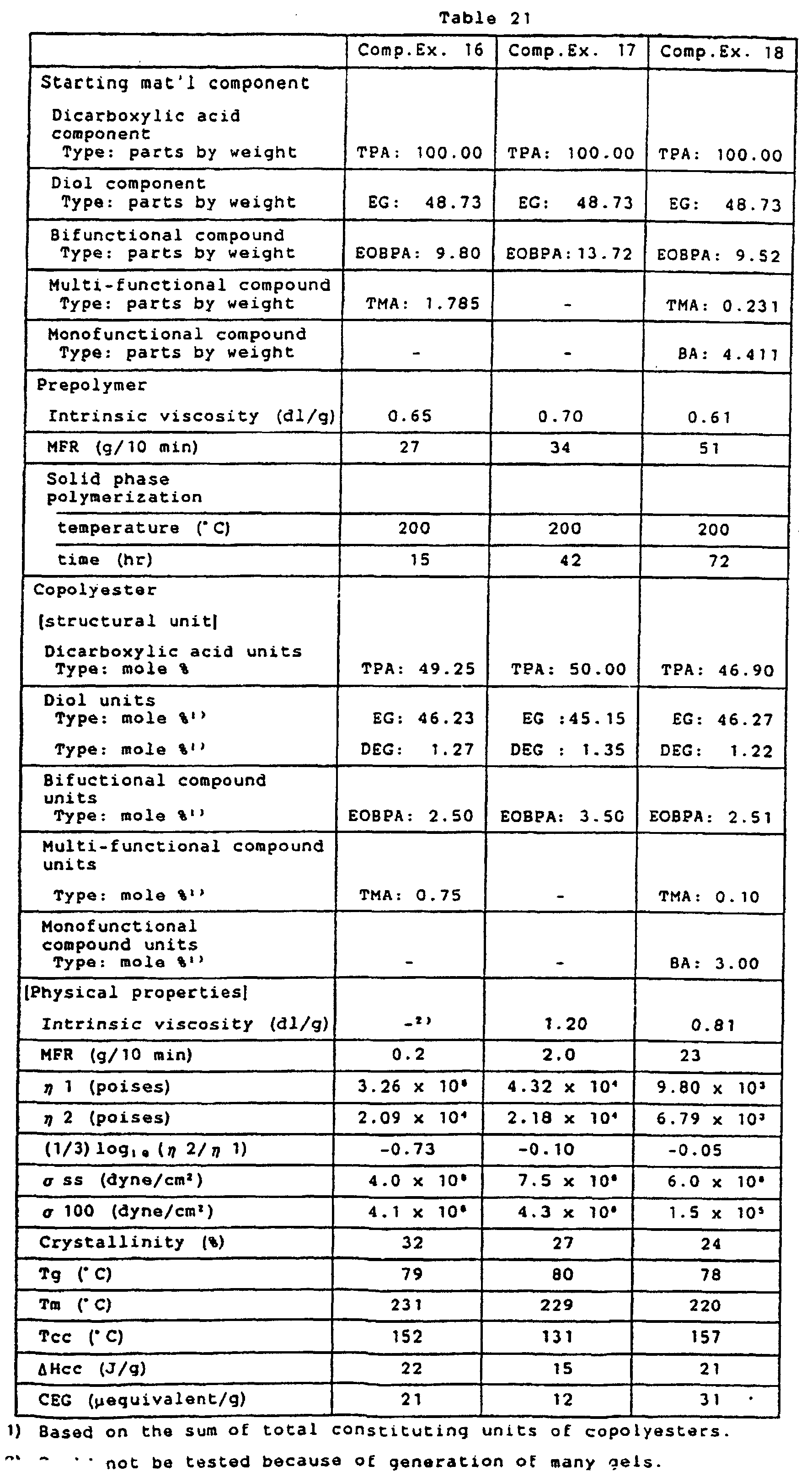

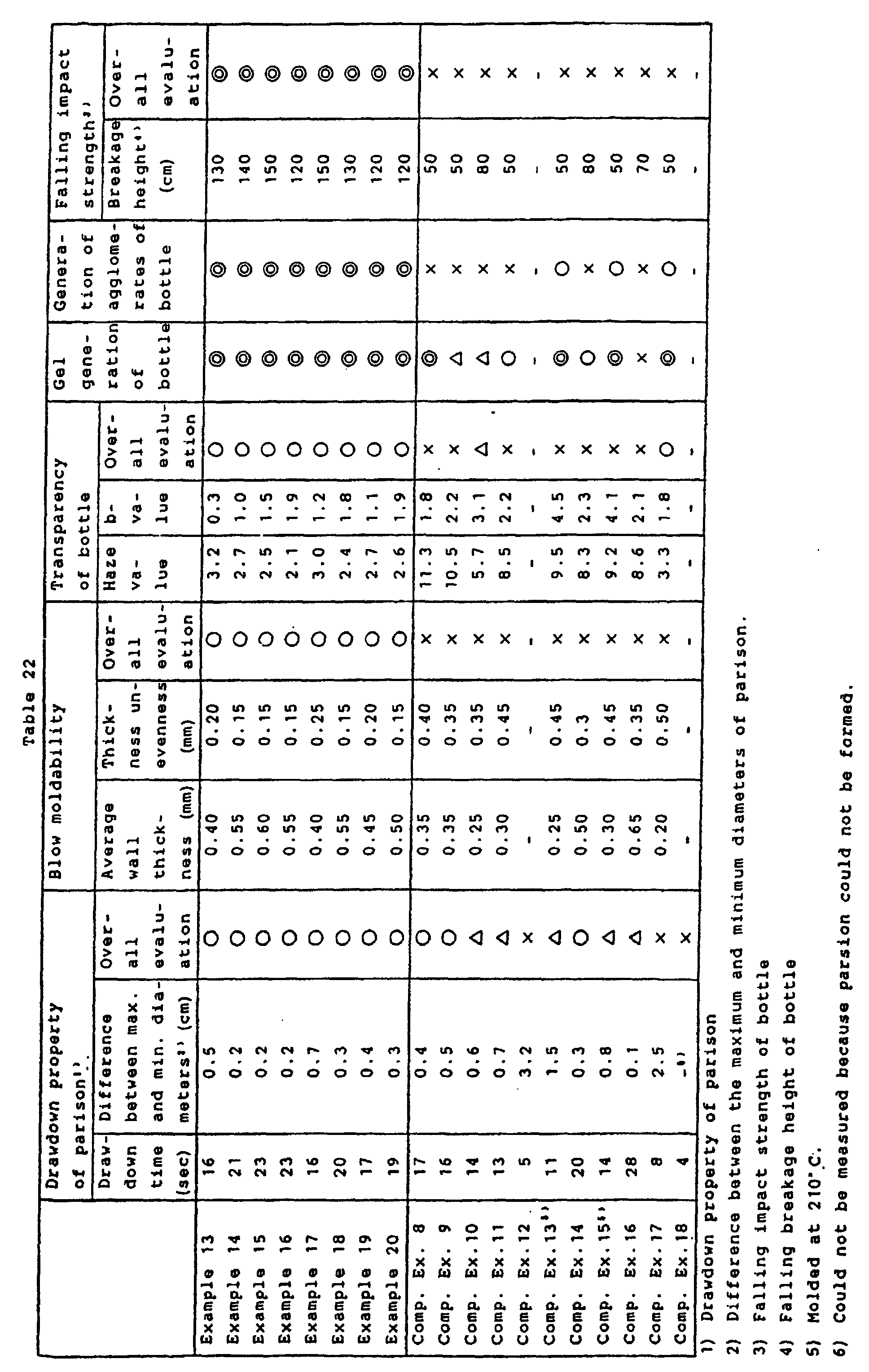

The following is understood from Tables 17, 18 and 22.

The copolyesters of Examples 13 through 20, consisting essentially of terephthalic acid units and ethylene glycol units and further containing diol units (I) and/or diol units (II) having a benzene ring and units (b₁) from a multi-functional compound in amounts of 0.5 to 7 mole % and 0.005 to 1 mole %, respectively, based on the moles of total constituting units of the copolyesters, and units (c) from a monofunctional compound in an amount satisfying the above formula (α), can be produced smoothly by solid phase polymerization in a short period of time of not more than 30 hours, to have an intrinsic viscosity suited for melt molding such as extrusion blow molding. On producing bottles by extrusion blow molding of the copolyesters obtained in Examples 13 through 20, the drawdown time of extruded parisons was in a proper range of 16 to 23 seconds, the difference between the maximum and minimum diameters of parisons was not more than 0.7 cm, the production of bottles was at least 120 pieces per hour with the defectives being less than 10 pieces per 100 pieces, which indicates excellent drawdown property of the parisons. The obtained bottles had an average wall thickness of 0.30 to 0.7 mm and thickness unevenness of less than 0.3 mm, thus proving to have excellent blow moldability. Furthermore, the bottles obtained in Examples 13 through 20 had a haze value of not more than 4 and a b-value of not more than 4, thus showing excellent transparency. The bottles have a gel generation of not more than 2.5% and a rate of generation of agglomerate of not more than 5 pieces/100 cm², both being very low. The bottles have a falling breakage height of at least 100 cm, thus proving to have excellent falling impact strength.

On the other hand, the following is understood from the results shown in Tables 19 and 22.

The copolyesters of Comparative Examples 8 and 9, consisting essentially of terephthalic acid units and ethylene glycol units and, while containing no diol units (I) and/or units (II) having a benzene ring, further containing only units (b₁) from a multi-functional compound or only units (b₁) from a multi-functional compound and units (c) from a monofunctional compound, require a solid phase polymerization time of as long as at least 40 hours and thus have poor productivity. On producing bottles by extrusion blow molding of the copolyesters, the obtained bottles had a thickness unevenness of at least 0.30 mm, thus proving to have poor blow moldability. Furthermore, the bottles had a haze value of at least 10, thus showing to have poor transparency. The bottles had a gel generation exceeding 5% (Comparative Example 9) and a rate of agglomerate generation exceeding 10 pieces/100 cm², thus proving to have poor appearance and tactility. The bottles had a falling breakage height of 50 cm, thus proving to have low falling impact strength.

The copolyester of Comparative Example 10, consisting essentially of terephthalic acid units and ethylene glycol units and, containing no diol units (I) and/or units (II) having a benzene ring but, instead, containing bifunctional compound units from neopentyl glycol, and further containing multi-functional compound units (b₁) from trimethylolpropane and no monofunctional compound units (c), required a solid phase polymerization time of as long as more than 30 hours and thus had poor productivity. On producing bottles by extrusion blow molding of the copolyester, the obtained bottles had a thickness unevenness of 0.35 mm, thus proving to have poor blow moldability. Furthermore, the bottles obtained had a haze value exceeding 4, thus proving to have poor transparency. The bottles had a gel generation exceeding 5% and a rate of generation of agglomerates exceeding 10 pieces/100 cm², thus showing poor appearance and tactility. The bottles had a falling breakage height of 80 cm, thus proving to have low falling impact strength and low quality.

The copolyester of Comparative Example 11, consisting essentially of terephthalic acid units and ethylene glycol units and containing no diol units (I) and/or units (II) having a benzene ring but, instead, containing bifunctional compound units from isophthalic acid, and further containing multi-functional compound units (b₁) from pentaerythritol and monofunctional compound units (c) from m-anisic acid gave, when extrusion blow molded, bottles having a thickness unevenness of 0.45 mm, thus proving to have poor blow moldability. Furthermore, the bottles obtained had a finely and markedly roughened surface and a haze value of 8.5, thus proving to have poor transparency and tactility. The bottles had a falling breakage height of 50 cm, thus proving to have low falling impact strength and low quality.

It is also understood from the results shown in Tables 20 and 22 as follows.

With the copolyester of Comparative Example 12, produced only from terephthalic acid and ethylene glycol and containing none diol units (I) and/or units (II) having a benzene ring, multi-functional compound units (b₁) and monofunctional compound units (c) (the polyester of Comparative Example 12 further contained diethylene glycol, which is, as described above, an undesirable copolymerization units, in an amount of 1.30 mole %), the resulting parison had a drawdown time of 5 seconds, with the difference between the maximum and minimum diameters being at least 3.0 cm, thus having markedly poor drawdown property. The extrusion blow molding itself was in fact difficult. Furthermore the solid phase polymerization required as long a time period as 67 hours, which indicates the low productivity of the polyester.

The copolyester of Comparative Examples 13 and 15, consisting essentially of terephthalic acid units and ethylene glycol units and, although containing diol units (I) and/or units (II) having a benzene ring, containing them in an amount exceeding 7 mole % based on the moles of total constituting units of the copolyesters, were amorphous. The degree of polymerization of the copolyesters could therefore not be increased by solid phase polymerization. The copolyesters could not show a high melt viscosity at a temperature of 270°C, so that extrusion blow molding was impossible at this temperature. Extrusion blow molding was hence conducted at a temperature of 210°C, at which molding was narrowly possible. The resulting parisons had poor drawdown property. On producing bottles, the obtained bottles have a thickness unevenness of 0.45 mm, thus proving to have poor blow moldability. Furthermore, the bottles obtained in Comparative Examples 13 and 15, having been molded at a low temperature, have a marked finely roughened surface, thereby showing a haze value exceeding 8, which means poor transparency, and having poor tactility. The bottles had a falling breakage height of 50 cm, thus proving to have low falling impact strength and low quality.

The copolyester of Comparative Example 14, consisting essentially of terephthalic acid units and ethylene glycol units and, although containing diol units (I) and/or units (II) having a benzene ring and multi-functional compound units (b₁), containing the former in an amount of less than 0.5 mole % based on the moles of total constituting units of the copolyesters, gave poor bottles as below, on extrusion blow molding. That is, the bottles had a thickness unevenness of 0.3 mm, thus indicating the poor blow moldability of the copolyester. The bottles had a haze value of at least 8 due to too high a rate of crystallization, thus having poor transparency. The bottles had a falling breakage height of 80 cm, thus having a low falling impact strength and low quality.

It is also understood from the results shown in Tables 21 and 22 as follows.

The copolyester of Comparative Example 16, consisting essentially of terephthalic acid units and ethylene glycol units and, although containing diol units (I) and/or units (II) having a benzene ring and multi-functional compound units (b₁), containing no monofunctional compound units (c), and having a content of diol units (I) and/or diol units (II) and multi-functional compound units (b₁), of more than 7 mole % and more than 1 mole %, respectively, based on the moles of total constituting units of the copolyester, gave, when extrusion blow molded, bottles having a thickness unevenness of 0.35 mm, thus proving to have poor blow moldability. The obtained bottles had a finely roughened surface and a haze value of at least 8, thus showing poor transparency. The bottles contained very many gels and unmelted agglomerates and a falling breakage height of 50 cm, thus having a low falling impact strength and low quality.

With the copolyester of Comparative Example 17, consisting essentially of terephthalic acid units and ethylene glycol units and, although containing diol units (I) and/or units (II) having a benzene ring, but containing neither multi-functional compound units (b₁) nor monofunctional compound units (c), the resulting parisons have poor drawdown property. The copolyester gave, on extrusion blow molding, bottles having an average wall thickness of 0.20 mm and a thickness unevenness of 0.50 mm, thus showing poor blow moldability. The obtained bottles had a very thin part at the central part of the body, and had a falling breakage height of 50 cm, thus having a low falling impact strength and low quality.

The copolyester of Comparative Example 18, consisting essentially of terephthalic acid units and ethylene glycol units and, although containing diol units (I) and/or units (II) having a benzene ring, multi-functional compound units (b₁) and monofunctional compound units (c), having a content of the monofunctional compound units (c) exceeding the range of the above formula (α) could not have its degree of polymerization increased by melt polymerization and solid phase polymerization and hence had a low viscosity. As a result, the copolyester, when subjected to extrusion blow molding, could not form parisons or give molded articles.

### Example 21

(1) A slurry was prepared from 97.00 parts by weight of terephthalic acid, 48.73 parts by weight of ethylene glycol, 3.90 parts by weight of 2,6-naphthalenedicarboxylic acid, 0.063 part by weight of trimethylolpropane and 0.016 part by weight of benzoic acid. To the slurry, 0.020 part by weight of germanium dioxide, 0.015 part by weight of phosphorus acid, 0.015 part by weight of cobalt acetate and 0.015 part by weight of tetraethylammonium hydroxide were added. The resulting slurry was heated, under a pressure (absolute pressure: 2.5 kg/cm²), to a temperature of 250° C, to conduct esterification to an esterification ratio of 95%, to produce a low-polymerization-degree compound. The compound thus obtained was, under a reduced pressure of 1 mmHg and at a temperature of 270°C, melt polycondensed, to yield a copolyester prepolymer having an intrinsic viscosity of 0.69 dl/g. The prepolymer was extruded through a nozzle into a strand, which was then cut into cylindrical chips (diameter: about 2.5 mm, length: about 3.5 mm). The prepolymer had a melt flow rate (MFR) at 270°C of 28 g/10 min.
(2) The copolyester prepolymer chips thus obtained were, after being pre-dried at a temperature of 150°C for 5 hours, subjected to solid phase polymerization with a tumbling type vacuum solid phase polymerization apparatus under a reduced pressure of 0.1 mmHg at 210°C for 24 hours, to yield a high molecular copolyester.
(3) The copolyester obtained in the above (2) was tested for the content of each structural units by the afore-described method. The content of terephthalic acid units, ethylene glycol units, 2,6-naphthalenedicarboxylic acid units, trimethylolpropane units, benzoic acid units or diethylene glycol units was as shown in Table 34 below.
(4) The copolyester obtained in the above (2) was also tested for the physical properties accordance to the afore-described methods, to show, as shown in Table 34 below, an intrinsic viscosity of 1.11 dl/g, an MFR at 270°C of 1.9 g/10 min and melt viscosities at the same temperature and at a shear rate of 0.1 rad/sec (η 1) and at a shear rate of 100 rad/sec (η 2) of 1.77 x 10⁵ poises and 1.70 x 10⁴ poises, respectively, which led to a value of (1/3)log₁₀(η 2/η 1) of -0.34.
   The copolyester obtained in the above (2) was further tested for the shark-skin critical shear stress (σ ss) and shear stress (σ 100) at a shear rate of 100 /sec, at a temperature of 270°C, to show 6.0 x 10⁶ dyne/cm² and 2.3 x 10⁶ dyne/cm², respectively.
   The copolyester obtained in the above (2) was further tested for the χ c, Tg, Tm, Tcc and ΔHcc, to show, as shown in Table 34 below, 30%, 79°C, 235°C, 138°C and 13 J/g, respectively.
   The copolyester obtained in the above (2) had a terminal carboxyl group concentration (CEG) of 12 µequivalent/g.
(5) The copolyester obtained in the above (2) was extrusion blow molded through an extrusion blow molding machine (hollow molding machine Type BM-304•J2, made by Placo Co.) into bottles (designed capacity: 1,800 ml, designed weight: 80 g). The intermediate product parisons were tested for drawdown property and blow moldability, and the resulting bottles for transparency, generation of gels, generation of agglomerates, falling breakage height and falling impact strength, in accordance with the above-described methods, to give the results shown in Table 30 below.

### Examples 22 through 24

There were used terephthalic acid and ethylene glycol in amounts as shown in Table 24 below. In addition, 2,6-naphthalenedicarboxylic acid, and trimethylolpropane or trimellitic anhydride, and 2-naphthoic acid, benzoic acid- or 2,4,6-trimethoxybenzoic acid were used as a bifunctional compound for the bifunctional compound units (a₃), a multi-functional compound for the multi-functional compound units (b₁) and a monofunctional compound for the monofunctional compound units (c), respectively, in amounts as shown in Table 24. With these, esterification and melt polycondensation were conducted in the same manner as in Example 21, to prepare copolyester prepolymer chips. The copolyester prepolymers obtained were each subjected to solid phase polymerization under the conditions of temperature and time as shown in Table 24, to yield copolyesters.

The copolyesters thus obtained were each tested for the content of structural units and properties in the same manner as in Example 21. The results are shown in Table 24 below.

The copolyssters obtained in these Examples 22 through 24 were each extrusion blow molded in the same manner into bottles. The drawdown property and blow mcldability of the parisons and the transparency, generation of gels, generation of agglomerates, falling breakage height and falling impact strength of the obtained bottles were determined or evaluated by the above-described methods. The results are shown in Table 30 below.

### Examples 25 through 28

There were used terephthalic acid and ethylene glycol in amounts as shown in Table 25. In addition, 4,4'-biphenyldicarboxylic acid, and pentaerythritol, trimellitic anhydride or trimethylolpropane, and stearic acid, stearyl alcohol, m-anisic acid or benzoic acid were used as a bifunctional compound for the bifunctional compound units (a₃), a multi-functional compound for the multi-functional compound units (b₁) and a monofunctional compound for the monofunctional compound units (c), respectively, in amounts as shown in Table 25. With these, esterification and melt polycondensation were conducted in the same manner as in Example 21, to prepare copolyester prepolymer chips. The copolyester prepolymers obtained were subjected to solid phase polymerization under the conditions of temperature and time as shown in Table 25, to yield copolyesters.

The copolyesters thus obtained were tested for the content of structural units and properties in the same manner. The results are shown in Table 25 below.

The copolyesters obtained in these Examples 25 through 28 were extrusion blow molded in the same manner into bottles. The drawdown property and blow moldability of the parisons and the transparency, generation of gels, generation of agglomerates, falling breakage height and falling impact strength of the obtained bottles were determined or evaluated by the above-described methods. The results are shown in Table 30 below.

### Reference Examples 29 through 32

There were used terephthalic acid and ethylene glycol in amounts as shown in Table 26. In addition, 2,6-naphthalenedicarboxylic acid or 4,4'-biphenyldicarboxylic acid, and trimethylolpropane, trimellitic anhydride or pyromellitic anhydride were used in amounts as shown in Table 26, as a bifunctional compound for the bifunctional compound units (a₃) and a multi-functional compound for the multi-functional compound units (b₁), respectively, without using any monofunctional compound for the monofunctional compound units (c). With these, esterification and melt polycondensation were conducted in the same manner as in Example 21, to prepare copolyester prepolymer chips. The copolyester prepolymers obtained were subjected to solid phase polymerization under the conditions of temperature and time as shown in Table 26, to yield copolyesters.

The copolyesters thus obtained were tested for the content of structural units and properties in the same manner. The results are shown in Table 26 below.

The copolyesters obtained in these Examples 29 through 32 were extrusion blow molded in the same manner into bottles. The drawdown property and blow moldability of the parisons and the transparency, generation of gels, generation of agglomerates, falling breakage height and falling impact strength of the obtained bottles were determined or evaluated by the above-described methods. The results are shown in Table 30 below.

### Reference Examples 33 and 34

There were used terephthalic acid and ethylene glycol in amounts as shown in Table 27. In addition, 4,4'-biphenyldicarboxylic acid and trimellitic anhydride were used in amounts as shown in Table 27, as a bifunctional compound for the bifunctional compound units (a₃) and a multi-functional compound for the multi-functional compound units (b₁), respectively, without using any monofunctional compound for the monofunctional compound units (c). With these, esterification and melt polycondensation were conducted in the same manner as in Example 21, to prepare copolyester prepolymer chips. The copolyester prepolymers obtained were subjected to solid phase polymerization under the conditions of temperature and time as shown in Table 27, to yield copolyesters.

The copolyesters thus obtained were tested for the content of structural units and properties in the same manner. The results are shown in Table 27 below.

The copolyesters obtained in these Examples 33 and 34 were extrusion blow molded in the same manner into bottles. The drawdown property and blow moldability of the parisons and the transparency, generation of gels, generation of agglomerates, falling breakage height and falling impact strength of the obtained bottles were determined or evaluated by the above-described methods. The results are shown in Table 30 below.

### Comparative Examples 19 through 21

There were used terephthalic acid and ethylene glycol in amounts as shown in Table 28. In addition, 2,6-naphthalenedicarboxylic acid was used as a bifunctional compound for the bifunctional compound units (a₃), and no multi-functional compound for the multi-functional compound units (b₁) was used or trimethylolpropane was used as the multi-functional compound units (b₁) in amounts as shown in Table 28. Further no monofunctional compound for the multi-functional compound units (c) was used or benzoic acid was used as the monofunctional compound units (c) in an amount as shown in Table 28. With these, esterification and melt polycondensation were conducted in the same manner as in Example 21, to prepare copolyester prepolymer chips. The copolyester prepolymers obtained were subjected to solid phase polymerization under the conditions of temperature and time as shown in Table 21. to yield copolyesters (in Comparative Examples 19 and 21, where the obtained copolyester prepolymer chips were found to be amorphous, they were subjected to the below-described extrusion blow molding as they are, without being subjected to the solid phase polymerization).

The copolyesters thus obtained were each tested for the content of structural units and properties in the same manner as in Example 21 (in Comparative Examples 19 and 21, the determinations were made at 210°C for the above reason). The results are shown in Table 28 below.

The copolyesters obtained in these Comparative Examples 19 through 21 were each extrusion blow molded in the same manner as in Example 21 into bottles (in Comparative Examples 19 and 21, the extrusion blow molding was conducted at 210°C for the above reason). The drawdown property and blow moldability of the parisons and the transparency, generation of gels, generation of agglomerates, falling breakage height and falling impact strength of the obtained bottles were determined or evaluated by the above-described methods. The results are shown in Table 31 below.

### Comparative Example 22 through 24

There were used terephthalic acid and ethylene glycol in amounts as shown in Table 29. In addition, 2,6-naphthalenedicarboxylic acid was used as a bifunctional compound for the bifunctional compound units (a₃), and no multi-functional compound for the multi-functional compound units (b₁) was used or trimellitic acid or trimethylolpropane was used for the multi-functional compound units (b₁) in amounts as shown in Table 29. Further no monofunctional compound for the monofunctional compound units (c) was used or benzoic acid was used for the monofunctional compound units (c) in an amount as shown in Table 29. With these, esterification and melt polycondensation were conducted in the same manner as in Example 21, to prepare copolyester prepolymer chips. The copolyester prepolymers obtained were subjected to solid phase polymerization under the conditions of temperature and time as shown in Table 29, to yield copolyesters.

The copolyesters thus obtained were tested for the content of structural units and properties in the same manner as in Example 21. The results are shown in Table 28 below.

The copolyesters obtained in these Comparative Examples 22 through 24 were each extrusion blow molded in the same manner as in Example 21 into bottles. The drawdown property and blow moldability of the parisons and the transparency, generation of gels, generation of agglomerates, falling breakage height and falling impact strength of the obtained bottles were determined or evaluated by the above-described methods. The results are shown in Table 31 below.

The content of the coding used in Tables 24 through 29 is as shown in Table 23 below.

**Table 23**

| Code | Compound |
|---|---|
| TPA | Terephthalic acid |
| EG | Ethylene glycol |
| DEG | Diethylene glycol |
| NDCA | 2,6-Naphthalenedicarboxylic acid |
| BBA | 4,4'-Biphenyldicarboxylic acid |
| TMA | Trimellitic anhydride |
| PMA | Pyromellitic anhydride |
| TMP | Trimethylolpropane |
| PENTA | Pentaerythritol |
| BA | Benzoic acid |
| NA | 2-Naphthoic acid |
| TMOBA | 2,4,6-Trimethoxybenzoic acid |
| STA | Stearic acid |
| STOH | Stearyl alcohol |
| AA | m-Anisic acid |

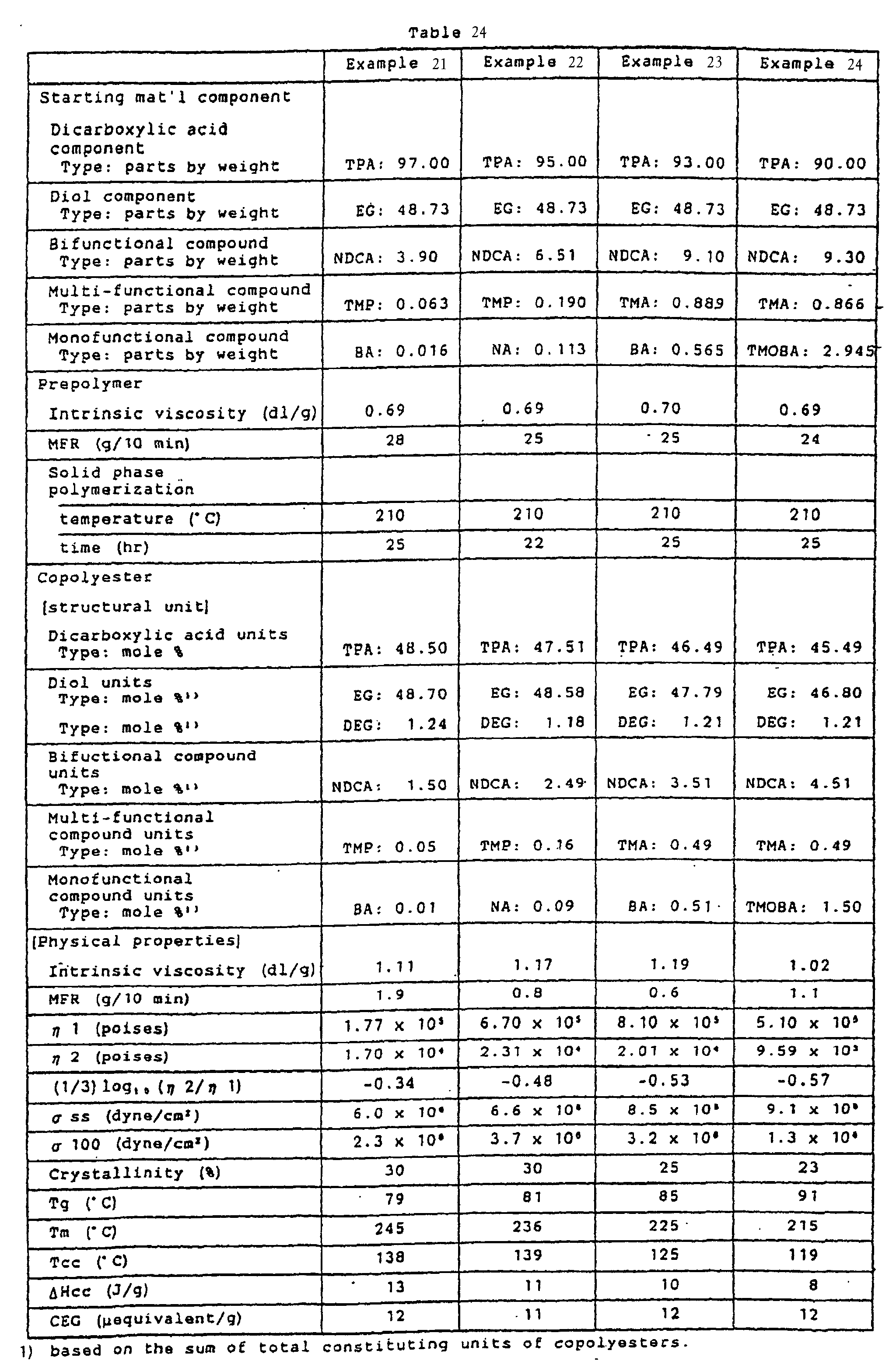

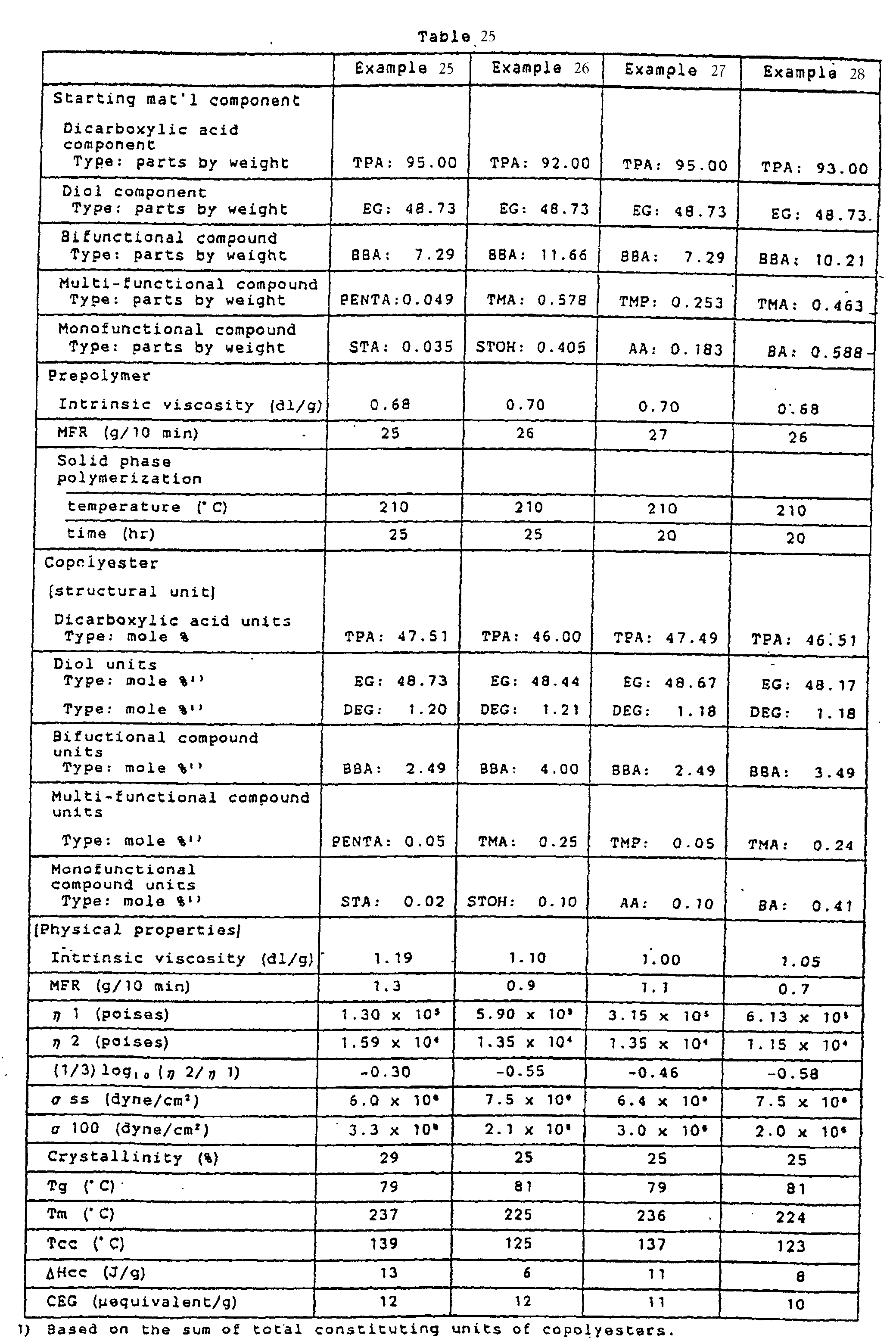

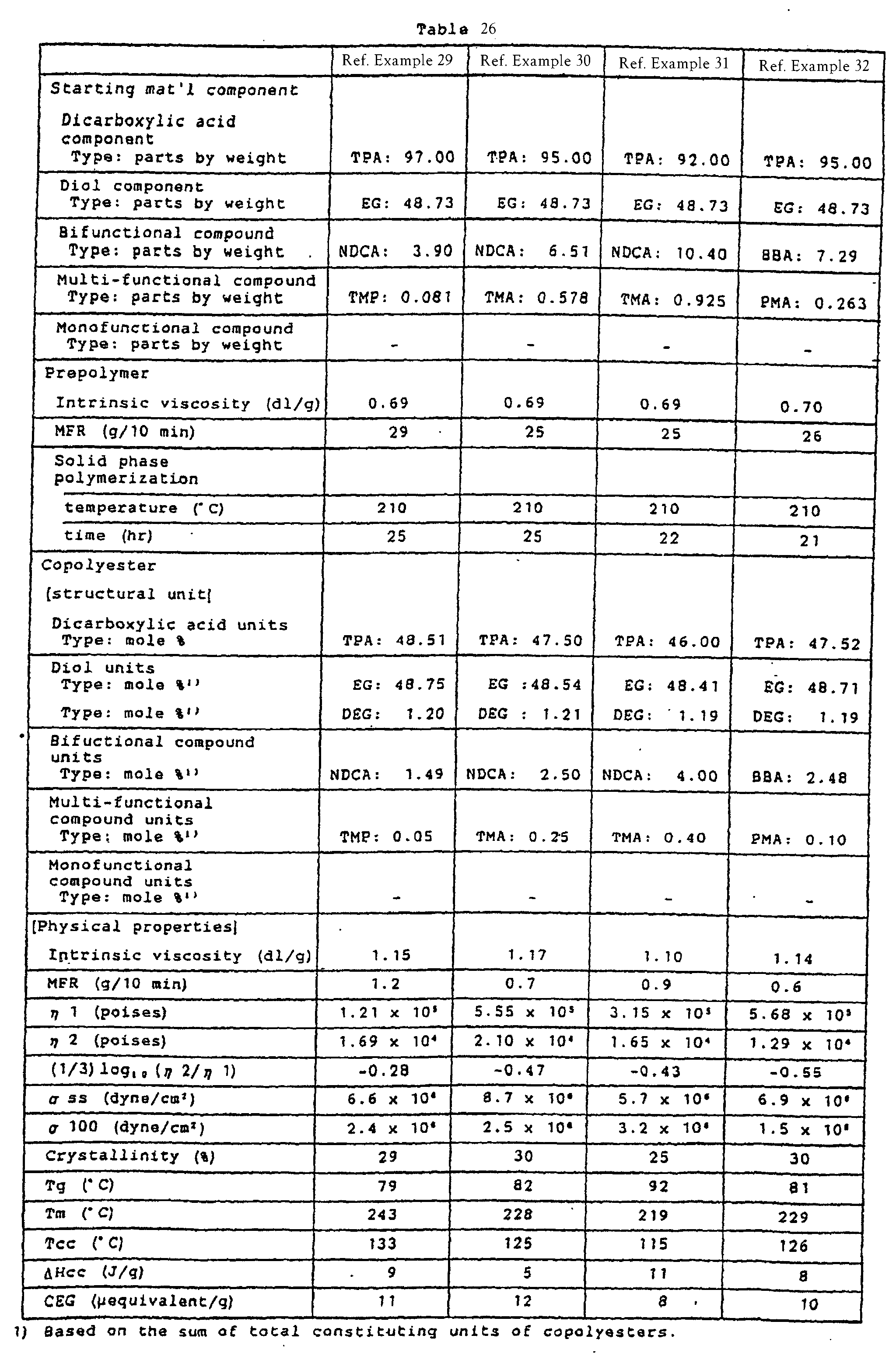

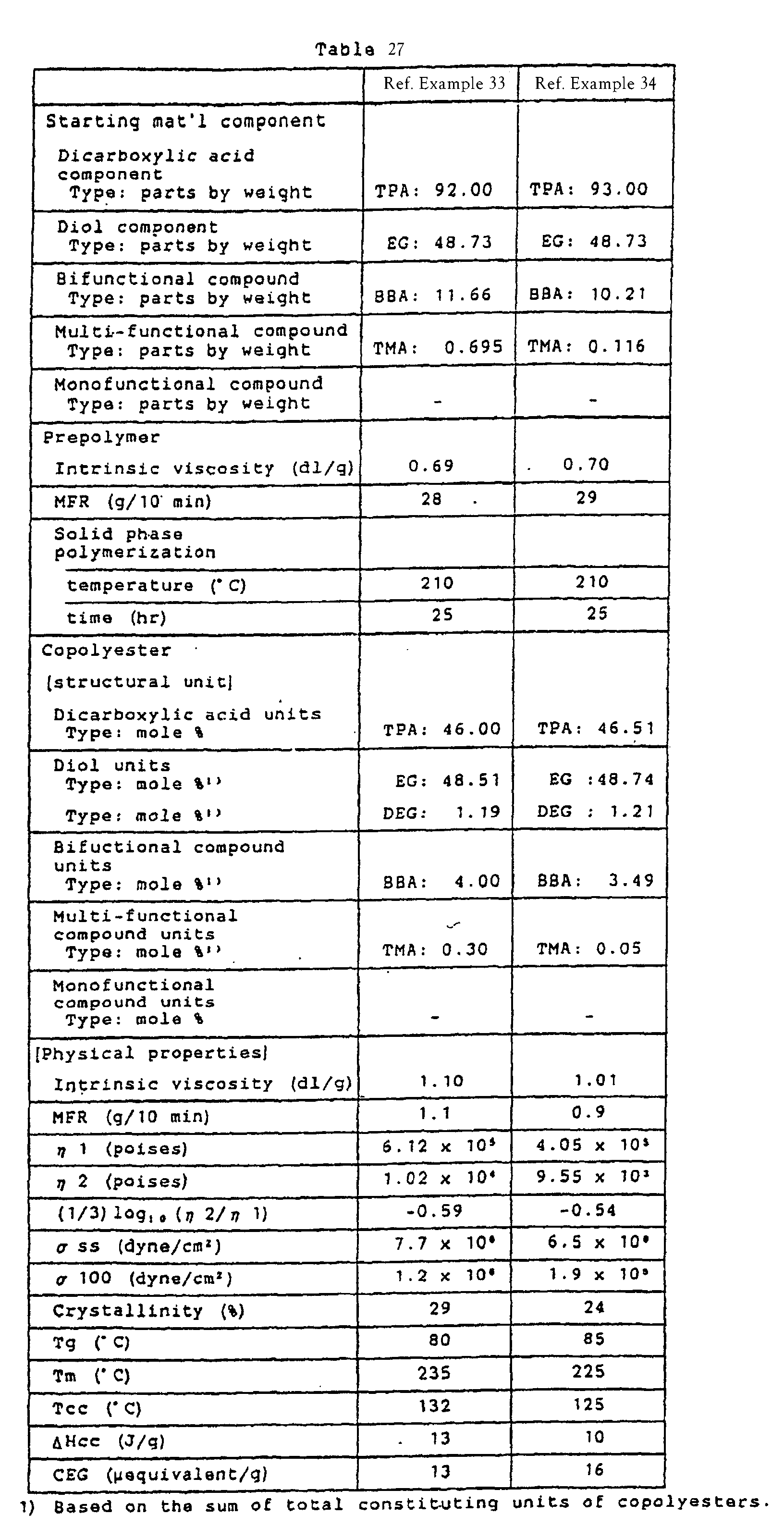

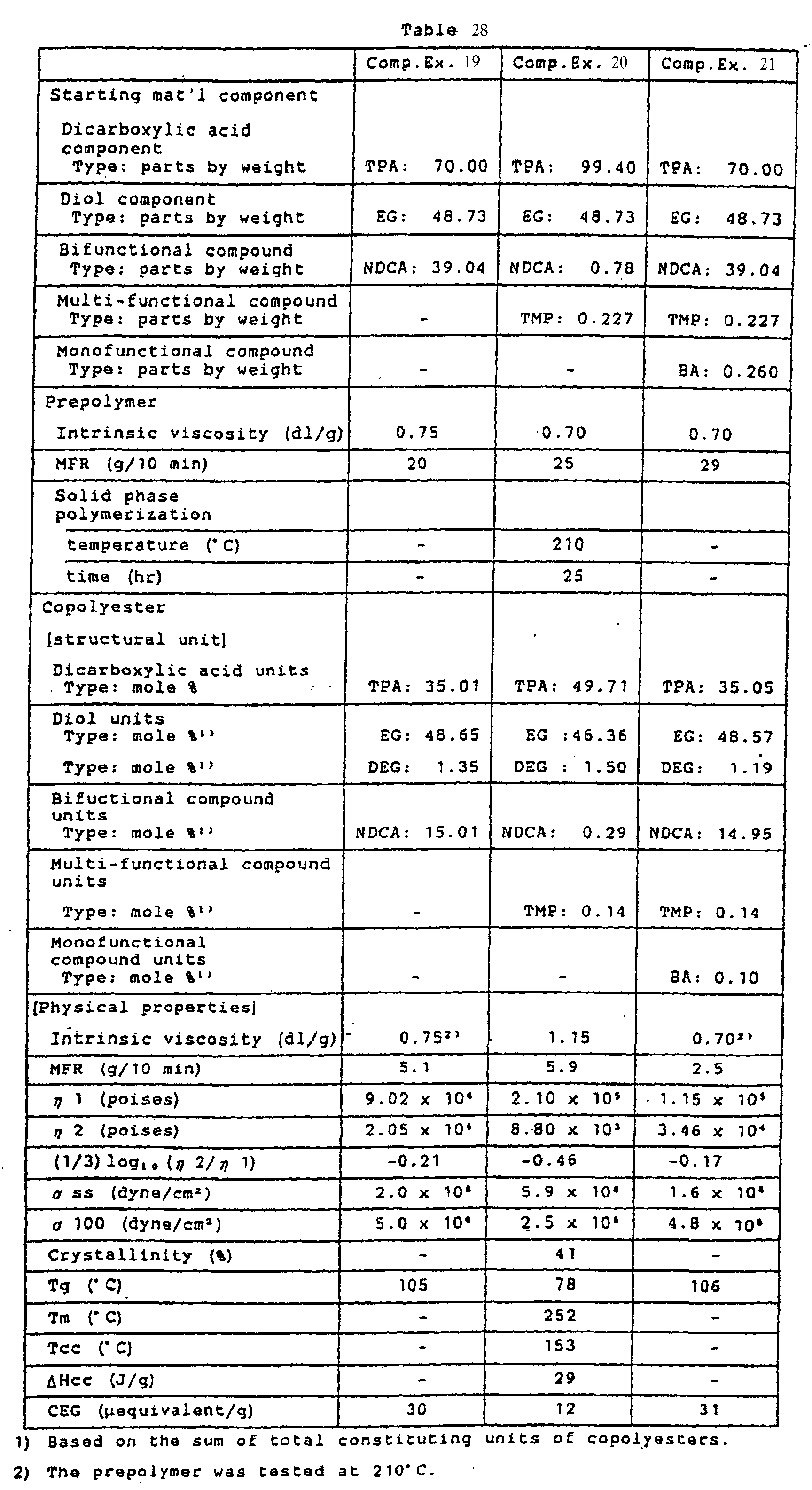

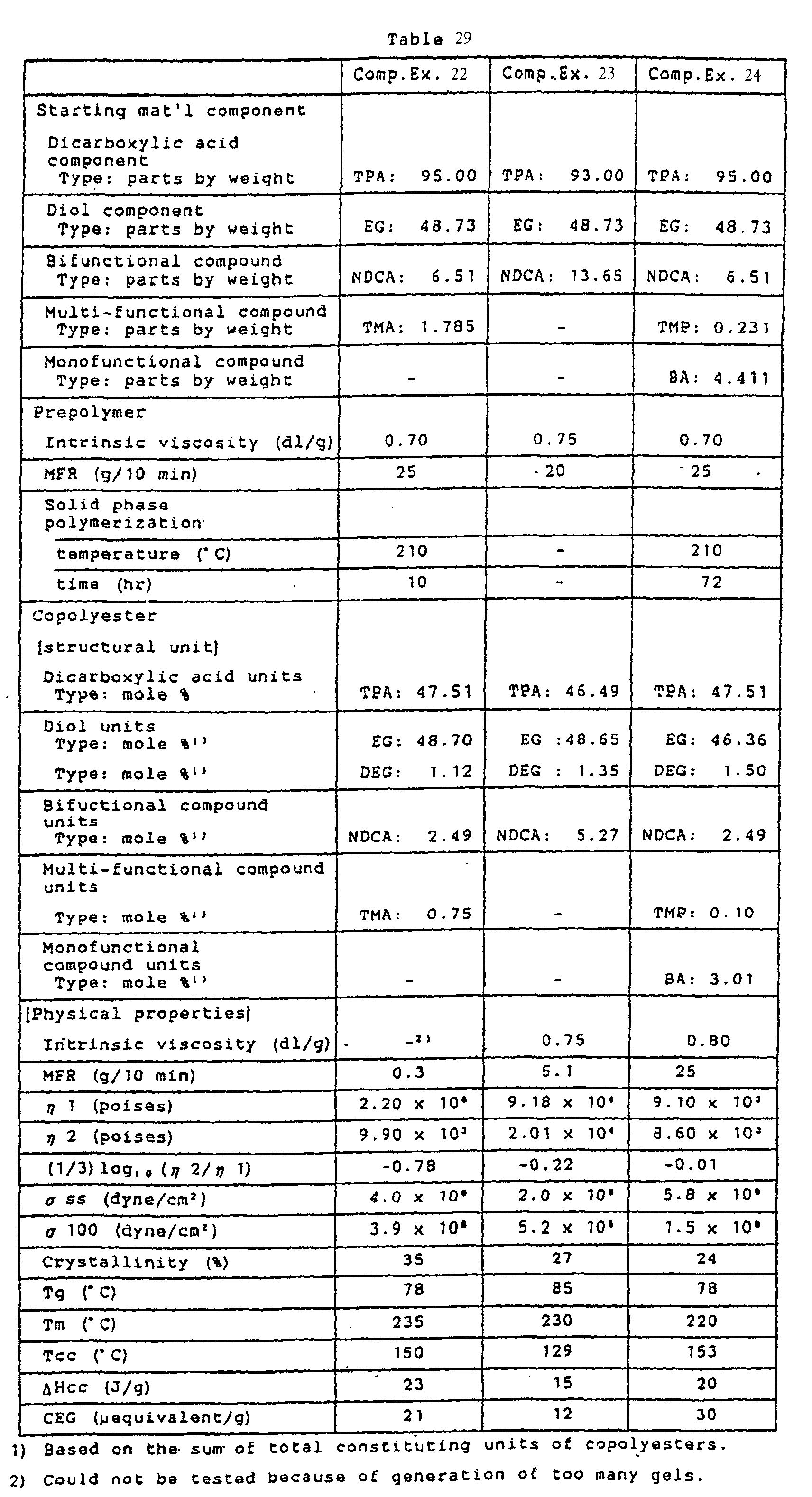

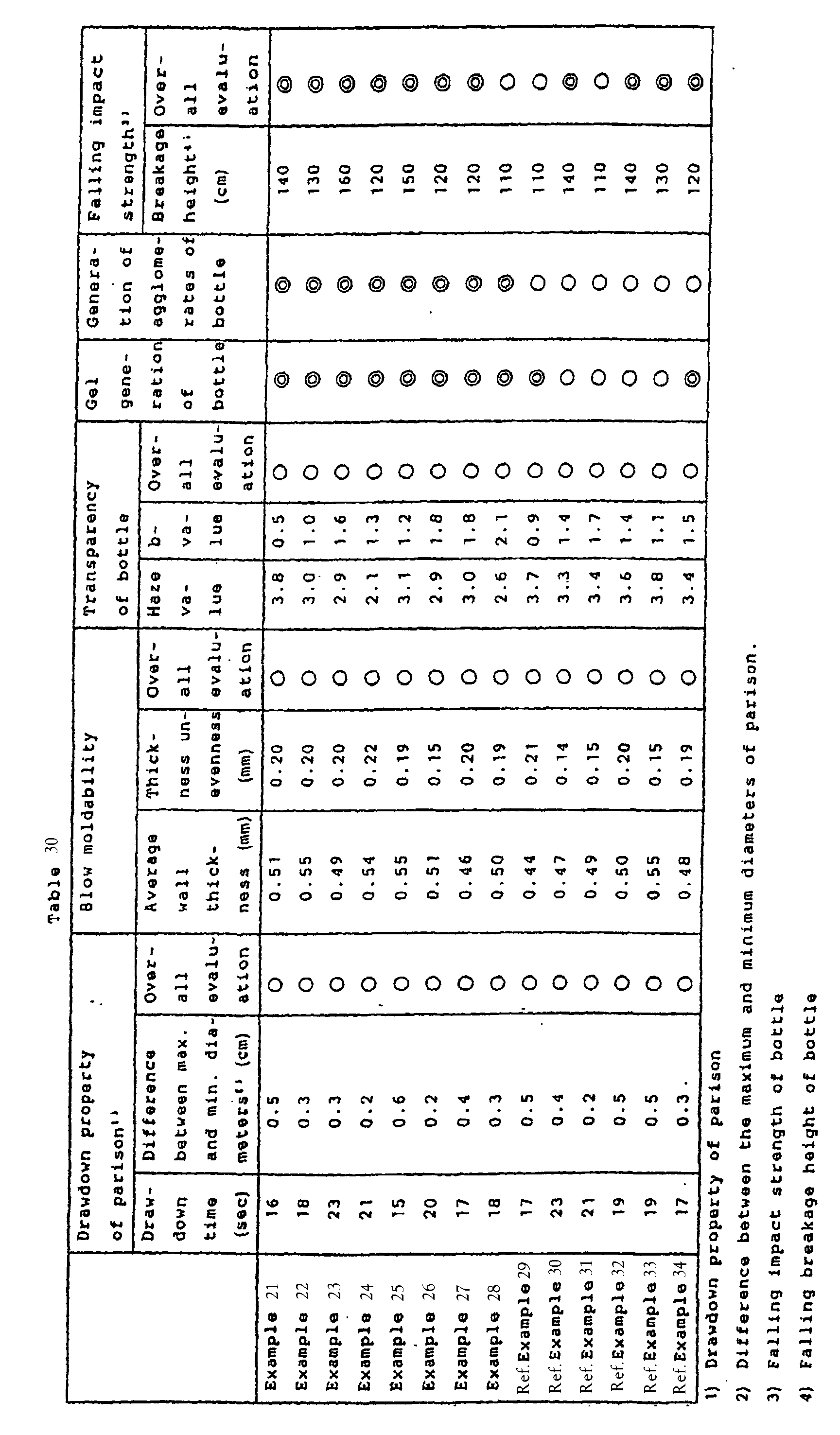

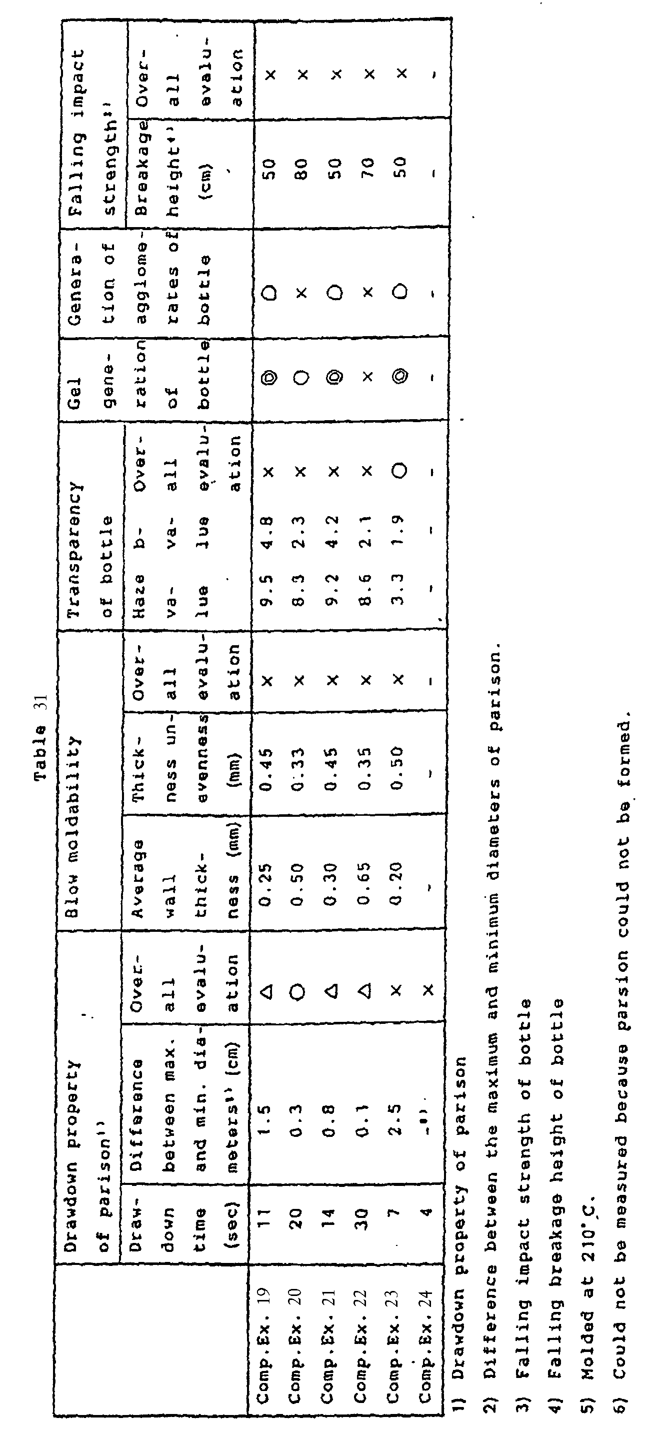

The following is understood from Tables 24 through 27, and 30.

The copolyesters of Examples 21 through 28, consisting essentially of terephthalic acid units and ethylene glycol units, and further containing bifunctional compound units (a₃) and the multi-functional compound units (b₁) in amounts of 0.5 to 7 mole % % and 0.005 to 1 mole %, respectively, based on the moles of total constituting units of the co-polyesters and containing the monofunctional compound units (c) in an amount satisfying the above formula (α), and the copolyesters of Reference Examples 40 through 45, consisting essentially of terephthalic acid units and ethylene glycol units and further containing bifunctional compound units (a₃) and the multi-functional compound units (b₁) in amounts of 0.5 to 7 mole % and 0.005 to 0.5 mole %, respectively, based on the moles of total constituting units of the copolyesters, can be produced smoothly by solid phase polymerization in a short period of time of not more than 30 hours, to have an intrinsic viscosity suited for melt molding such as extrusion blow molding. On producing bottles by extrusion blow molding of the copolyesters obtained in Examples and Reference Examples 21 through 34, the drawdown time of extruded parisons was in a proper range of 16 to 23 seconds, the difference between the maximum and minimum diameters of parisons was not more than 0.6 cm, the production of bottles was at least 120 pieces per hour with the defectives being less than 10 pieces per 100 pieces, which indicates the excellent drawdown property of the parisons. The obtained bottles had an average wall thickness of 0.3 to 0.7 mm and thickness unevenness of less than 0.3 mm, thus showing excellent blow moldability. Furthermore, the bottles obtained in Examples and Reference Examples 21 through 34 had a haze value of not more than 4 and a b-value of not more than 4, thus proving to have excellent transparency. The bottles had a gel generation of not more than 5% and a rate of generation of agglomerates of not more than 5 pieces/100 cm², both being very low. The bottles had a falling breakage height of at least 100 cm, thus proving to have excellent falling impact strength.

On the other hand, the following is understood from the results shown in Tables 28 and 31.

The copolyesters of Comparative Examples 19 and 21, consisting essentially of terephthalic acid units and ethylene glycol units and, although containing the bifunctional compound units (a₃), having a content of the bifunctional compound units (a₃) exceeding 7 mole % based on the moles of total constituting units of the copolyester, were amorphous. The degree of polymerization of the copolyesters could therefore not be increased by solid phase polymerization. The copolyesters could not show a high melt viscosity at a temperature of 270°C, so that extrusion blow molding was impossible at this temperature. Extrusion blow molding was hence conducted at a temperature of 210°C, at which the molding was narrowly possible. The resulting parisons had poor drawdown property. On producing bottles, the obtained bottles had a thickness unevenness of 0.45 mm, thus proving to have poor blow moldability. Furthermore, the bottles obtained in Comparative Examples 19 and 21, having been molded at a low temperature, had a markedly and finely roughened surface, thereby showing a haze value exceeding 8, which means poor transparency, and having poor tactility. The bottles had a falling breakage height of 50 cm, thus proving to have low falling impact strength and low quality.

The copolyester of Comparative Example 20, consisting essentially of terephthalic acid units and ethylene glycol units and, although containing the bifunctional compound units (a₃) and multi-functional compound units (b₁), having a content of the multi-functional compound units (b₁) of less than 0.5 mole % based on the moles of total constituting units of the copolyester, gave, when extrusion blow molded, bottles having a thickness unevenness of 0.33 mm, thus showing poor blow moldability. The obtained bottles, having a high rate of crystallization, had a haze value of at least 8, thus having poor transparency. The bottles had a falling breakage height of 80 cm, thus proving to have low falling impact strength and low quality.

The following is understood from the results shown in Tables 29 and 31.

The copolyester of Comparative Example 22, consisting essentially of terephthalic acid units and ethylene glycol units and, although containing the bifunctional compound units (a₃) and multi-functional compound units (b₁), containing no monofunctional compound units (c) and having a content of the multi-functional compound units (b₁) exceeding 0.5 mole % based on the moles of total constituting units of the copolyester, which deviates the range specified in .the present invention, gave, when extrusion blow molded, bottles having a thickness unevenness of 0.35 mm, thus showing poor blow moldability. The obtained bottles had a minutely roughened surface and had a haze value of at least 8, thus having poor transparency. The bottles had a large number of gels and unmelted agglomerates and had a falling breakage height of 70 cm, thus proving to have low falling impact strength and low quality.

The copolyester of Comparative Example 23, consisting essentially of terephthalic acid units and ethylene glycol units and, although containing the bifunctional compound units (a₃), containing neither multi-functional compound units (b₁) nor monofunctional compound units (c) , gave parisons having poor drawdown property. On production of bottles by extrusion blow molding, the obtained bottles had an average wall thickness of 0.20 mm and a thickness unevenness of 0.50 mm, thus showing poor blow moldability. The obtained bottles had a very small thickness at the central part of their body and had a falling breakage height of 50 cm, thus proving to have low falling impact strength and low quality.

The copolyester of Comparative Example 24, consisting essentially of terephthalic acid units and ethylene glycol units and, although containing the bifunctional compound units (a₃), multi-functional compound units (b₁) and monofunctional compound units (c), having a content of the monofunctional compound units (c) exceeding the range of the above formula (α) could not have its degree of polymerization increased to a sufficient level by melt polymerization and solid phase polymerization and hence had a low viscosity. The copolyester, when extrusion blow molded, could not form parisons, thereby yielding no shaped articles.

Obviously, numerous modifications and variations of the present invention are possible in light of the above teachings. It is therefore to be understood that within the scope of the appended claims the invention may be practiced otherwise than as specifically described herein.

## Claims

(1) A copolyester consisting essentially of terephthalic acid units and ethylene glycol units,
(2) said copolyester further comprising:
(i) at least one group of units (a₁) from an alicyclic or aliphatic bifunctional compound selected from the group consisting of alicyclic or aliphatic dicarboxylic acids, diols and hydroxycarboxylic acids other than ethylene glycol, in an amount of 1 to 4 mole % based on the moles of total constituting units of said copolyester;
(ii) units (b₁) from at least one multi-functional compound having at least 3 carboxyl groups, hydroxyl groups and/or ester-forming groups of the foreqoing, in an amount of 0.005 to 1 mole % based on the moles of total constituting units of said copolyester; and
(iii) units (c) from at least one monofunctional compound selected from the group consisting of monocarboxylic acids, monohydric alcohols and ester-forming derivatives of the foregoing, in an amount satisfying the following formula (α):${\text{{20 x (p - 2) x b}}_{\text{1}} {\text{} ≧ c ≧ {0.1 x (p - 2) x b}}_{\text{1}} \text{}}$ where:
b₁ = content (mole %) of units (b₁) from said multi-functional compound in said copolyester
c = content (mole %) of units (c) from said monofunctional compound in said copolyester
p = average number of functional groups of said multi-functional compound deriving said units (b₁) .

2. The copolyester according to Claim 1, wherein said units (a₁) from an alicyclic or aliphatic bifunctional compound is either cyclohexanedimethanol units or cyclohexanedicarboxylic acid units.

3. (1) A copolyester consisting essentially of terephthalic acid units and ethylene glycol units,
(2) said copolyester further comprising:
(i) at least one group of bifunctional compound units (a₂) selected from the group consisting of:
(a) diol units (I) each represented by the following formula (I) 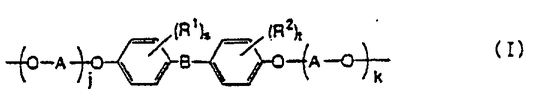 wherein A is a group represented by formula -CH₂CH₂- or formula -CH(CH₃)CH₂-, B is a divalent hydrocarbon group, a carbonyl group, a sulfonyl group, an oxygen atom or a direct bond (-), R¹ and R² are each, independently, an inert substituent, j and k are each independently an integer of 0 to 8 and s and t are each, independently, an integer of 0 to 4; and
(b) diol units (II) each represented by the following formula (II) 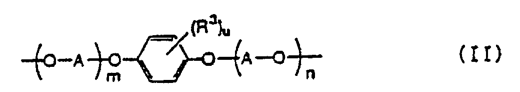 wherein A is a group represented by formula -CH₂CH₂- or formula -CH(CH₃)CH₂-, R³ is an inert substituent, m and n are each, independently, an integer of 0 to 8 and u is an integer of 0 to 4;
in an amount of 0.5 to 7 mole % based on the moles of total constituting units of said copolyester;
(ii) multi-functional compound units (b₁) derived from at least one multi-functional compound having at least 3 carboxyl groups, hydroxyl groups and/or ester-forming groups of the foregoing, in an amount of 0.005 to 1 mole % based on the moles of total constituting units of said copolyester; and
(iii) monofunctional compound units (c) derived from at least one monofunctional compound selected from the group consisting of monocarboxylic acids, monohydric alcohols and ester-forming derivatives of the foregoing, in an amount satisfying the following formula (α):${\text{{20 x (p - 2) x b}}_{\text{1}} {\text{} ≧ c ≧ {0.1 x (p - 2) x b}}_{\text{1}} \text{}}$ where:
b₁ = content (mole %) of units (b₁) from said multi-functional compound in said copolyester
c = content (mole %) of units (c) from said monofunctional compound in said copolyester
p = average number of functional groups of said multi-functional compound deriving said units (b₁).

4. (1) A copolyester consisting essentially of terephthalic acid units and ethylene glycol units,
(2) said copolyester further comprising:
(i) at least one group of bifunctional compound units (a₃) selected from the group consisting of units from a condensed ring type aromatic dicarboxylic acid and units from a ring assembly type aromatic dicarboxylic acid, in an amount of 0.5 to 7 mole % based on the moles of total constituting units of said copolyester;
(ii) multi-functional compound units (b₁) derived from at least one multi-functional compound having at least 3 carboxyl groups, hydroxyl group and/or ester-forming groups of the foregoing, in an amount of 0.005 to 1 mole % based on the moles of total constituting units of said copolyester; and
(iii) monofunctional compound units (c) from at least one monofunctional compound selected from the group consisting of monocarboxylic acids, monohydric alcohols and ester-forming derivatives of the foregoing, in an amount satisfying the following formula (α ):${\text{{20 x (p - 2) x b}}_{\text{1}} {\text{} ≧ c ≧ {0.1 x (p - 2) x b}}_{\text{1}} \text{}}$ where:
b₁ = content (mole %) of units (b₁) from said multi-functional compound in said copolyester
c = content (mole %) of units (c) from said monofunctional compound in said copolyester
p = average number of functional groups of said multi-functional compound deriving said units (b₁).

5. The copolyester according to Claim 4, wherein said bifunctional compound units (a₃) are 2,6-naphthalenedicarboxylic acid units and/or 4,4'-biphenyldicarboxylic acid units.

6. The copolyester according to any one of Claims 1 through 5, further having an intrinsic viscosity of 0.8 to 1.5 dl/g.

7. The copolyester according to any one of Claims 1 through 6, further having a melt viscosity (η 1) at a temperature of 270°C and at a shear rate of 0.1 rad/sec and a melt viscosity (η 2) at a temperature of 270°C and at a shear rate of 100 rad/sec of 5 x 10⁴ to 5 x 10⁶ poises and 5 x 10³ to 5 x 10⁵ poises, respectively, said melt viscosities (η 1) and (η 2) satisfying the formula (β )${\text{-0.7 ≦ (1/3) log}}_{\text{10}} \text{(η 2/η 1) ≦ -0.2}$

8. The copolyester according to any one of Claims 1 through 7, further having a shark-skin critical shear stress (σ ss) at a temperature of 270°C of at least 1 x 10⁶ dyne/cm² and a stear stress (σ 100) at a shear rate of 100 /sec and at a temperature of 270°C of not more than said shark-skin critical shear stress (σ ss).

9. A molded article comprising the copolyester according to any one of Claims 1 through 8.

10. The molded article according to Claim 9, being an extrusion blow molded article.

11. A process for producing molded articles, which comprises extrusion blow molding the copolyester according to any one of Claims 1 through 8.

12. A process for producing a copolyester according to any one of Claims 1 and 2 and Claims 6 through 8, which comprises:
(1) subjecting to esterification or transesterification starting materials consisting essentially of a dicarboxylic acid component comprising terephthalic acid or ester-forming derivatives thereof and a diol component comprising ethylene glycol, said starting materials further comprising:
(a) at least one alicyclic or aliphatic bifunctional compound selected from the group consisting of alicyclic or aliphatic dicarboxylic acids, hydroxycarboxylic acids and ester-forming derivatives of the foregoing and alicyclic or aliphatic diols other than ethylene glyccl;
(b) at least one multi-functional compound having at least 3 carboxyl groups, hydroxyl groups and/or ester-forming groups of the foregoing; and
(c) at least one monofunctional compound selected from the group consisting of monocarboxylic acids, monohydric alcohols and ester-forming derivatives of the foregoing;
① the content of said alicyclic or aliphatic bifunctional compound in said starting materials being such that the ratio between units (a₁) from said alicyclic or aliphatic bifunctional compound and total constituting units of the resulting copolyester becomes 1 to 4 mole % based on the moles of the total constituting units;
② the content of said multi-functional compound in said starting materials being such that the ratio between units (b₁) from said multi-functional compound and total constituting units of the resulting copolyester becomes 0.005 to 1 mole % based on the moles of the total constituting units; and
③ the content of said monofunctional compound in said starting materials being such that the ratio between units (c) from said monofunctional compound and total constituting units of the resulting copolyester based on the moles of total constituting units satisfies the following formula (α )${\text{{20 x (p - 2) x b}}_{\text{1}} {\text{} ≧ c ≧ {0.1 x (p - 2) x b}}_{\text{1}} \text{}}$ where:
b₁ = content (mole %) of units (b₁) from said multi-functional compound in the resulting copolyester
c = content (mole %) of units (c) from said monofunctional compound in the resulting copolyester
p = average number of functional groups of said multi-functional compound deriving said units (b₁);
(2) melt polycondensing the ester obtained in the above step (1) to prepare a polyester prepolymer; and
(3) subjecting said polyester prepolymer obtained in the above step (2) to solid phase polymerization.

13. A process for producing a copolyester according to any one of Claim 3 and Claims 6 through 8, which comprises:
(1) subjecting to esterification or transesterification starting materials consisting essentially of a dicarboxylic acid component comprising terephthalic acid or ester-forming derivatives thereof and a diol component comprising ethylene glycol, said starting materials further comprising:
(i) at least one bifunctional compound selected from the group consisting of:
(a) diols (III) represented by the following formula (III) 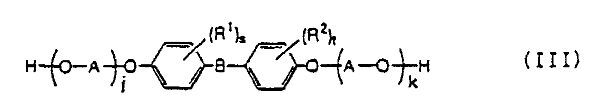 wherein A is a group represented by formula -CH₂CH₂- or formula -CH(CH₃)CH₂-, B is a divalent hydrocarbon group, a carbonyl group, a sulfonyl group, an oxygen atom or a direct bond (-), R¹ and R² are each, independently, an inert substituent, j and k are each independently an integer of 0 to 8 and s and t are each, independently, an integer of 0 to 4;
(b) diols (IV) represented by the following formula (IV) 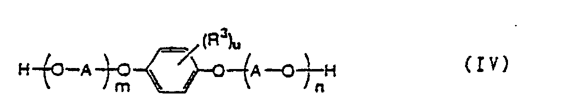 wherein A is a group represented by formula -CH₂CH₂- or formula -CH(CH₃)CH₂-, R³ is an inert substituent, m and n are each, independently, an integer of 0 to 8 and u is an integer of 0 to 4; and
(c) ester-forming derivatives of the above (a) and (b);
(ii) at least one multi-functional compound having at least 3 carboxyl groups, hydroxyl groups and/or ester-forming groups of the foregoing; and
(iii) at least one monofunctional compound selected from the group consisting of monocarboxylic acids, monohydric alcohols and ester-forming derivatives of the foregoing;
① the content of said bifunctional compound in said starting materials being such that the ratio between diol units (I) and/or diol units (II), and total constituting units of the resulting copolyester becomes 0.5 to 7 mole % based on the moles of the total constituting units;
② the content of said multi-functional compound in said starting materials being such that the ratio between units (b₁) from said multi-functional compound and total constituting units of the resulting copolyester becomes 0.005 to 1 mole % based on the moles of the total constituting units; and
③ the content of said monofunctional compound in said starting materials being such that the ratio between units (c) from said monofunctional compound and total constituting units of the resulting copolyester based on the moles of the total constituting units satisfies the following formula (α )${\text{{20 x (p - 2) x b}}_{\text{1}} {\text{} ≧ c ≧ {0.1 x (p - 2) x b}}_{\text{1}} \text{}}$ where:
b₁ = content (mole %) of units (b₁) from said multi-functional compound in the resulting copolyester
c = content (mole %) of units (c) from said monofunctional compound in the resulting copolyester
p = average number of functional groups of said multi-functional compound deriving said units (b₁);
(2) melt polycondensing the ester obtained in the above step (1) to prepare a polyester prepolymer; and
(3) subjecting said polyester prepolymer obtained in the above step (2) to solid phase polymerization.

14. A process for producing a copolyester according to any one of Claims 7 and 8, which comprises:
(1) subjecting to esterification or transesterification starting materials consisting essentially of a dicarboxylic acid component comprising terephthalic acid or ester-forming derivatives thereof and a diol component comprising ethylene glycol, said starting materials further comprising:
(i) at least one bifunctional compound selected from the group consisting of:
(a) diols (III) represented by the following formula (III) 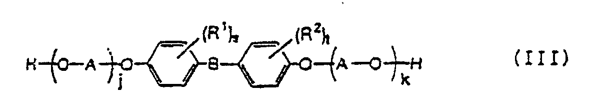 wherein A is a group represented by formula -CH₂CH₂- or formula -CH(CH₃)CH₂-, B is a divalent hydrocarbon group, a carbonyl group, a sulfonyl group, an oxygen atom or a direct bond (-), R¹ and R² are each, independently, an inert substituent, j and k are each independently an integer of 0 to 8 and s and t are each, independently, an integer of 0 to 4;
(b) diols (IV) represented by the following formula (IV) 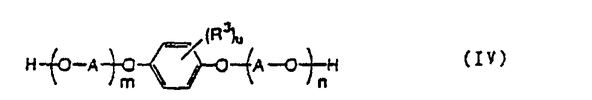 wherein A is a group represented by formula -CH₂CH₂- or formula -CH(CH₃)CH₂-, R³ is an inert substituent, m and n are each, independently, an integer of 0 to 8 and u is an integer of 0 to 4; and
(c) ester-forming derivatives of the above (a) and (b); and
(ii) at least one multi-functional compound having at least 3 carboxyl groups, hydroxyl groups and/or ester-forming groups of the foregoing, at least one of said groups being carboxyl group or ester-forming groups thereof;
① the content of said bifunctional compound in said starting materials being such that the ratio between diol units (I) and/or diol units (II), and total constituting units of the resulting copolyester becomes 0.5 to 7 mole % based on the moles of the total constituting units; and
② the content of said multi-functional compound in said starting materials being such that the ratio between units (b₂) from said multi-functional compound and total constituting units of the resulting copolyester becomes 0.005 to 0.5 mole % based on the moles of the total constituting units;
(2) melt polycondensing the ester obtained in the above step (1) to prepare a polyester prepolymer; and
(3) subjecting said polyester prepolymer obtained in the above step (2) to solid phase polymerization.

15. A process for producing a copolyester according to any one of Claims 7 and 8, which comprises:
(1) subjecting to esterification or transesterification starting materials consisting essentially of a dicarboxylic acid component comprising terephthalic acid or ester-forming derivatives thereof and a diol component comprising ethylene glycol, said starting materials further comprising:
(i) at least one bifunctional compound selected from the group consisting of:
(a) diols (III) represented by the following formula (III) 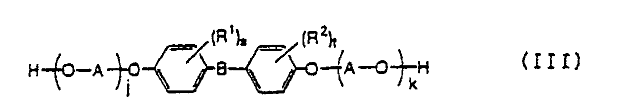 wherein A is a group represented by formula -CH₂CH₂- or formula -CH(CH₃)CH₂-, B is a divalent hydrocarbon group, a carbonyl group, a sulfonyl group, an oxygen atom or a direct bond (-), R¹ and R² are each, independently, an inert substituent, j and k are each independently an integer of 0 to 8 and s and t are each, independently, an integer of 0 to 4;
(b) diols (IV) represented by the following formula (IV) 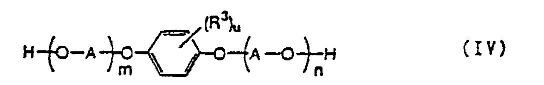 wherein A is a group represented by formula -CH₂CH₂- or formula -CH(CH₃)CH₂-, R³ is an inert substituent, m and n are each, independently, an integer of 0 to 8 and u is an integer of 0 to 4; and
(c) ester-forming derivatives of the above (a) and (b); and
(ii) at least one multi-functional aliphatic or alicyclic compound having at least 3 hydroxyl groups and/or ester-forming groups thereof;
① the content of said bifunctional compound in said starting materials being such that the ratio between diol units (I) and/or diol units (II), and total constituting units of the resulting copolyester becomes 0.5 to 7 mole % based on the moles of the total constituting units; and
② the content of said multi-functional compound in said starting materials being such that the ratio between units (b₃) from said multi-functional compound and total constituting units of the resulting copolyester becomes 0.005 to 0.5 mole % based on the moles of the total constituting units;
(2) melt polycondensing the ester obtained obtained in the above step (1) to prepare a polyester prepolymer; and
(3) subjecting said polyester prepolymer obtained in the above step (2) to solid phase polymerization.

16. A process for producing a copolyester according to any one of Claim 4 and Claims 5 through 8, which comprises:
(1) subjecting to esterification or transesterification starting materials consisting essentially of a dicarboxylic acid component comprising terephthalic acid or ester-forming derivatives thereof and a diol component comprising ethylene glycol, said starting materials further comprising:
(a) at least one bifunctional compound selected from condensed ring type aromatic dicarboxylic acids and ring assembly type aromatic dicarboxylic acids;
(b) at least one multi-functional compound having at least 3 carboxyl groups, hydroxyl groups and/or ester-forming groups of the foregoing; and
(c) at least one monofunctional compound selected from the group consisting of monocarboxylic acids, monohydric alcohols and ester-forming derivatives of the foregoing;
① the content of said bifunctional compound in said starting materials being such that the ratio between units (a₃) from said bifunctional compound and total constituting units of the resulting copolyester becomes 0.5 to 7 mole % based on the moles of the total constituting units;
② the content of said multi-functional compound in said starting materials being such that the ratio between units (b₁) from said multi-functional compound and total constituting units of the resulting copolyester becomes 0.005 to 1 mole % based on the moles of the total constituting units; and
③ the content of said monofunctional compound in said starting materials being such that the ratio between units
(c) from said monofunctional compound and total constituting units of the resulting copolyester based on the moles of the total constituting units satisfies the following formula (α )${\text{{20 x (p - 2) x b}}_{\text{1}} {\text{} ≧ c ≧ {0.1 x (p - 2) x b}}_{\text{1}} \text{}}$ where:
b₁ = content (mole %) of units (b₁) from said multi-functional compound in the resulting copolyester
c = content (mole %) of units (c) from said monofunctional compound in the resulting copolyester
p = average number of functional groups of said multi-functional compound deriving said units (b₁) ;
(2) melt polycondensing the ester obtained in the above step (1) to prepare a polyester prepolymer; and
(3) subjecting said polyester prepolymer obtained in the above step (2) to solid phase polymerization.

17. A process for producing a copolyester according to any one of Claims 5 through 8, which comprises:
(1) subjecting to esterification or transesterification starting materials consisting essentially of a dicarboxylic acid component comprising terephthalic acid or ester-forming derivatives thereof and a diol component comprising ethylene glycol, said starting materials further comprising:
(a) at least one bifunctional compound selected from condensed ring type aromatic dicarboxylic acids and ring assembly type aromatic dicarboxylic acids; and
(b) at least one multi-functional compound having at least 3 carboxyl groups, hydroxyl groups and/or ester-forming groups of the foregoing;
① the content of said bifunctional compound in said starting materials being such that the ratio between units (a₃) from said bifunctional compound and total constituting units of the resulting copolyester becomes 0.5 to 7 mole % based on the moles of the total constituting units; and
② the content of said multi-functional compound in said starting materials being such that the ratio between units (b₁) from said multi-functional compound and total constituting units of the resulting copolyester becomes 0.005 to 0.5 mole % based on the moles of the total constituting units;
(2) melt polycondensing the ester obtained in the above step (1) to prepare a polyester prepolymer; and
(3) subjecting said polyester prepolymer obtained in the above step (2) to solid phase polymerization.

## Patentansprüche

(1) Copolyester, im Wesentlichen bestehend aus Terephthalsäureeinheiten und Ethylenglycoleinheiten, wobei
(2) der Copolyester des Weiteren umfasst:
(i) mindestens eine Gruppe von Einheiten (a₁) aus einer alicyclischen oder aliphatischen bifunktionellen Verbindung ausgewählt aus alicyclischen oder aliphatischen Dicarbonsäuren, Diolen und Hydroxycarbonsäuren ausgenommen Ethylenglycol, in einer Menge von 1 bis 4 Molprozent, bezogen auf die Mole aller Struktureinheiten des Copolyesters;
(ii) Einheiten (b₁) aus mindestens einer multifunktionellen Verbindung, die mindestens 3 Carboxylgruppen, Hydroxylgruppen und/oder Ester-bildende Gruppen der vorgenannten Gruppen aufweist, in einer Menge von 0,005 bis 1 Molprozent, bezogen auf die Mole aller Struktureinheiten des Copolyesters; und
(iii) Einheiten (c) aus mindestens einer monofunktionellen Verbindung, ausgewählt aus Monocarbonsäuren, einwertigen Alkoholen und Ester-bildenden Derivaten der vorgenannten Verbindungen in einer Menge, die der folgenden Formel (α) genügt:${\text{{20x(p-2)xb}}_{\text{1}} {\text{}≧ c≧ {0,1x(p-2)xb}}_{\text{1}} \text{}}$ wobei:
b₁ = Menge (Molprozent) an Einheiten (b₁) aus der multifunktionellen Verbindung in dem Copolyester
c = Menge (Molprozent) an Einheiten (c) aus der monofunktionellen Verbindung in dem Copolyester
p = durchschnittliche Anzahl funktioneller Gruppen der multifunktionellen Verbindung, von der sich die Einheiten (b₁) ableiten.

2. Copolyester nach Anspruch 1, wobei die Einheiten (a₁) aus einer alicyclischen oder aliphatischen bifunktionellen Verbindung entweder Cyclohexandimethanoleinheiten oder Cyclohexandicarbonsäureeinheiten sind.

3. (1) Copolyester, im Wesentlichen bestehend aus Terephthalsäureeinheiten und Ethylenglycoleinheiten, wobei
(2) der Copolyester des Weiteren umfasst:
(i) mindestens eine Gruppe einer bifunktionellen Verbindungseinheit (a₂) ausgewählt aus:
(a) Dioleinheiten (I), die jeweils durch die folgende Formel (I) dargestellt werden 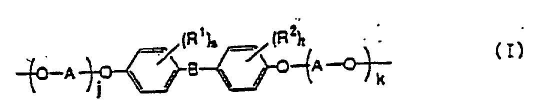 wobei A eine Gruppe der Formel -CH₂CH₂- oder der Formel -CH(CH₃)CH₂- ist, B eine zweiwertige Kohlenwasserstoffgruppe, eine Carbonylgruppe, eine Sulfonylgruppe, ein Sauerstoffatom oder eine direkte Bindung (-) ist, R¹ und R² jeweils unabhängig voneinander ein inerter Substituent sind, j und k jeweils unabhängig voneinander eine ganze Zahl von 0 bis 8 sind und s und t jeweils unabhängig voneinander eine ganze Zahl von 0 bis 4 sind; und
(b) Dioleinheiten (II), die jeweils durch die folgende Formel (II) dargestellt werden 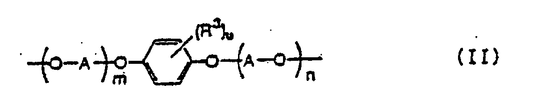 wobei A eine Gruppe der Formel -CH₂CH₂- oder der Formel -CH(CH₃)CH₂- ist, R³ ein inerter Substituent ist, m und n jeweils unabhängig voneinander eine ganze Zahl von 0 bis 8 sind und u eine ganze Zahl von 0 bis 4 ist;
in einer Menge von 0,5 bis 7 Molprozent, bezogen auf die Mole aller Struktureinheiten des Copolyesters;
(ii) multifunktionelle Verbindungseinheiten (b₁), die von mindestens einer multifunktionellen Verbindung abgeleitet sind, die mindestens 3 Carboxylgruppen, Hydroxylgruppen und/oder Ester-bildende Gruppen der vorher genannten Gruppen aufweist, in einer Menge von 0,005 bis 1 Molprozent, bezogen auf die Mole aller Struktureinheiten des Copolyesters; und
(iii) monofunktionelle Verbindungseinheiten (c), die von mindestens einer monofunktionellen Verbindung, ausgewählt aus Monocarbonsäuren, einwertigen Alkoholen und Ester-bildenden Derivaten der vorhergenannten Verbindungen abgeleitet sind, in einer Menge, die der folgenden Formel (α) genügt:${\text{{20 x (p - 2) x b}}_{\text{1}} {\text{} ≧ c ≧ {0,1 x (p - 2) x b}}_{\text{1}} \text{}}$ wobei:
b₁ = Menge (Molprozent) an Einheiten (b₁) aus der multifunktionellen Verbindung in dem Copolyester
c = Menge (Molprozent) an Einheiten (c) aus der monofunktionellen Verbindung in dem Copolyester
p = durchschnittliche Anzahl funktioneller Gruppen der multifunktionellen Verbindung, von der sich die Einheiten (b₁) ableiten.

4. (1) Copolyester, im Wesentlichen bestehend aus Terephthalsäureeinheiten und Ethylenglycoleinheiten, wobei
(2) der Copolyester des Weiteren umfasst:
(i) mindestens eine Gruppe einer bifunktionellen Verbindungseinheit (a₃) ausgewählt aus aromatischen Dicarbonsäureeinheiten mit kondensierten Ringen und aromatischen Dicarbonsäureeinheiten mit zusammengesetzten Ringen in einer Menge von 0,5 bis 7 Molprozent, bezogen auf die Mole aller Struktureinheiten des Copolyesters;
(ii) multifunktionelle Verbindungseinheiten (b₁), die von mindestens einer multifunktionellen Verbindung abgeleitet sind, die mindestens 3 Carboxylgruppen, Hydroxylgruppen und/oder Ester-bildende Gruppen der vorher genannten Gruppen aufweist, in einer Menge von 0,005 bis 1 Molprozent, bezogen auf die Mole aller Struktureinheiten des Copolyesters; und
(iii) monofunktionelle Verbindungseinheiten (c) aus mindestens einer monofunktionellen Verbindung, ausgewählt aus Monocarbonsäuren, einwertigen Alkoholen und Ester-bildenden Derivaten der vorhergenannten Verbindungen in einer Menge, die der folgenden Formel (α) genügt:${\text{{20 x (p-2) x b}}_{\text{1}} {\text{} ≧ c ≧ {0,1 x (p-2) x b}}_{\text{1}} \text{}}$ wobei:
b₁ = Menge (Molprozent) an Einheiten (b₁) aus der multifunktionellen Verbindung in dem Copolyester
c = Menge (Molprozent) an Einheiten (c) aus der monofunktionellen Verbindung in dem Copolyester
p = durchschnittliche Anzahl funktioneller Gruppen der multifunktionellen Verbindung, von der sich die Einheiten (b₁) ableiten.

5. Copolyester nach Anspruch 4, wobei die bifunktionellen Verbindungseinheiten (a₃) 2,6-Naphthalindicarbonsäureeinheiten und/oder 4,4'-Biphenyldicarbonsäureeinheiten sind.

6. Copolyester nach einem der Ansprüche 1 bis 5, der des Weiteren eine Eigenviskosität von 0,8 bis 1,5 dl/g hat.

7. Copolyester nach einem der Ansprüche 1 bis 6, der des Weiteren eine Schmelzviskosität (η 1) bei einer Temperatur von 270 °C und einer Schergeschwindigkeit von 0,1 rad/s und eine Schmelzviskosität (η 2) bei einer Temperatur von 270 °C und einer Schergeschwindigkeit von 100 rad/s von 5 x 10⁴ bis 5 x 10⁶ Poise bzw. 5 x 10³ bis 5 x 10⁵ Poise aufweist, wobei die Schmelzviskositäten (η 1) und (η 2) der Formel (β) genügen${\text{-0,7 ≦ (1/3) log}}_{\text{10}} \text{(η 2/η 1) ≦ -0,2}$

8. Copolyester nach einem der Ansprüche 1 bis 7, der des Weiteren eine "shark-skin" kritische Scherspannung (σ ss) bei einer Temperatur von 270 °C von mindestens 1 x 10⁶ Dyn/cm² und eine Scherspannung (σ 100) bei einer Schergeschwindigkeit von 100 rad/s und einer Temperatur von 270 °C hat, die nicht mehr als die "shark-skin" kritische Scherspannung (σ ss) beträgt.

9. Formkörper, umfassend den Copolyester nach einem der Ansprüche 1 bis 8.

10. Formkörper nach Anspruch 9, der ein Spritzblasformkörper ist.

11. Verfahren zur Herstellung von Formkörpern, das Spritzblasguss des Copolyesters nach einem der Verfahren 1 bis 8 umfasst.

12. Verfahren zur Herstellung eines Copolyesters nach einem der Ansprüche 1 und 2 und 6 bis 8, umfassend:
(1) Veresterung oder Umesterung der Ausgangsmaterialien, die im Wesentlichen aus einer Dicarbonsäurekomponente, umfassend Terephthalsäure oder ein Ester-bildendes Derivat davon, und einer Diolkomponente, umfassend Ethylenglycol, bestehen, wobei die Ausgangsmaterialien des Weiteren umfassen:
(a) mindestens eine alicyclische oder aliphatische bifunktionelle Verbindung, ausgewählt aus alicyclischen oder aliphatischen Dicarbonsäuren, Hydroxycarbonsäuren und Ester-bildenden Derivaten der vorher genannten Verbindungen, und alicyclische oder aliphatische Diole ausgenommen Ethylenglycol;
(b) mindestens eine multifunktionelle Verbindung, die mindestens 3 Carboxylgruppen, Hydroxylgruppen und/oder Ester-bildende Derivate der vorher genannten Gruppen aufweist; und
(c) mindestens eine monofunktionelle Verbindung ausgewählt aus Monocarbonsäuren, einwertigen Alkoholen und Ester-bildenden Derivaten der vorher genannten Verbindungen;
① die Menge der alicyclischen oder aliphatischen bifunktionellen Verbindung in den Ausgangsmaterialien ist so, dass das Verhältnis zwischen den Einheiten (a₁) aus der alicyclischen oder aliphatischen bifunktionellen Verbindung, und den gesamten Struktureinheiten des sich ergebenden Copolyesters 1 bis 4 Molprozent, bezogen auf die Mole aller Struktureinheiten beträgt;
② die Menge der multifunktionellen Verbindung in den Ausgangsmaterialien ist so, dass das Verhältnis zwischen den Einheiten (b₁) aus der multifunktionellen Verbindung und den gesamten Struktureinheiten des sich ergebenden Copolyesters 0,005 bis 1 Molprozent, bezogen auf die Mole aller Struktureinheiten beträgt; und
③ die Menge der monofunktionellen Verbindung in den Ausgangsmaterialien ist so, dass das Verhältnis zwischen den Einheiten (c) aus der multifunktionellen Verbindung und den gesamten Struktureinheiten des sich ergebenden Copolyesters, bezogen auf die Mole aller Struktureinheiten folgender Formel (α) genügt${\text{{20x(p-2)xb}}_{\text{1}} {\text{}≧ c ≧ {0,1x(p-2)xb}}_{\text{1}} \text{}}$ wobei:
b₁ = Menge (Molprozent) an Einheiten (b₁) aus der multifunktionellen Verbindung in dem sich ergebenden Copolyester
c = Menge (Molprozent) an Einheiten (c) aus der monofunktionellen Verbindung in dem sich ergebenden Copolyester
p = durchschnittliche Anzahl funktioneller Gruppen der multifunktionellen Verbindung, von der sich die Einheiten (b₁) ableiten.
(2) Schmelzpolykondensation des im vorherigen Schritt (1) erhaltenen Esters zur Herstellung eines Polyester-Präpolymers; und
(3) Unterziehen des im vorherigen Schritt (2) erhaltenen Polyester-Präpolymers einer Festphasen-Polymerisation.

13. Verfahren zur Herstellung eines Copolyesters nach einem der Ansprüche 3 und 6 bis 8, umfassend:
(1) Veresterung oder Umesterung der Ausgangsmaterialien, die im Wesentlichen aus einer Dicarbonsäurekomponente, umfassend Terephthalsäure oder ein Ester-bildendes Derivat davon und einer Diolkomponente, umfassend Ethylenglycol, bestehen, wobei die Ausgangsmaterialien des Weiteren umfassen: ,
(i) mindestens eine bifunktionelle Verbindung ausgewählt aus:
(a) Diolen (III) der folgenden Formel (III) 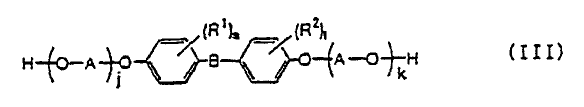 wobei A eine Gruppe der Formel -CH₂CH₂- oder der Formel -CH(CH₃)CH₂- ist, B eine zweiwertige Kohlenwasserstoffgruppe, eine Carbonylgruppe, eine Sulfonylgruppe, ein Sauerstoffatom oder eine direkte Bindung (-) ist, R¹ und R² jeweils unabhängig voneinander ein inerter Substituent sind, j und k jeweils unabhängig voneinander eine ganze Zahl von 0 bis 8 sind und s und t jeweils unabhängig voneinander eine ganze Zahl von 0 bis 4 sind;
(b) Diolen (IV) der folgenden Formel (IV) 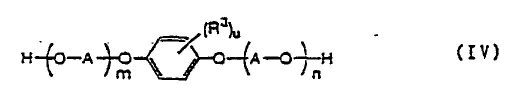 wobei A eine Gruppe der Formel -CH₂CH₂- oder der Formel -CH(CH₃)CH₂- ist, R³ ein inerter Substituent ist, m und n jeweils unabhängig voneinander eine ganze Zahl von 0 bis 8 sind und u eine ganze Zahl von 0 bis 4 ist; und
(c) Ester-bildende Derivate der oben genannten Verbindungen (a) und (b);
(ii) mindestens eine multifunktionelle Verbindung, die mindestens 3 Carboxylgruppen, Hydroxylgruppen und/oder Ester-bildende Gruppen der vorher genannten Gruppen aufweist; und
(iii) mindestens eine monofunktionelle Verbindung ausgewählt aus Monocarbonsäuren, einwertigen Alkoholen und Ester-bildenden Derivaten der vorher genannten Verbindungen;
① die Menge der bifunktionellen Verbindung in den Ausgangsmaterialien ist so, dass das Verhältnis zwischen den Dioleinheiten (I) und/oder Dioleinheiten (II) und den gesamten Struktureinheiten des sich ergebenden Copolyesters 0,5 bis 7 Molprozent, bezogen auf die Mole aller Struktureinheiten beträgt;
② die Menge der multifunktionellen Verbindung in den Ausgangsmaterialien ist so, dass das Verhältnis zwischen den Einheiten (b₁) aus der multifunktionellen Verbindung und den gesamten Struktureinheiten des sich ergebenden Copolyesters 0,005 bis 1 Molprozent, bezogen auf die Mole aller Struktureinheiten beträgt; und
③ die Menge der monofunktionellen Verbindung in den Ausgangsmaterialien ist so, dass das Verhältnis zwischen den Einheiten (c) aus der multifunktionellen Verbindung und den gesamten Struktureinheiten des sich ergebenden Copolyesters, bezogen auf die Mole aller Struktureinheiten folgender Formel (α) genügt${\text{{20 x (p - 2) x b}}_{\text{1}} {\text{} ≧ c ≧ {0,1x(p-2)xb}}_{\text{1}} \text{}}$ wobei:
b₁ = Menge (Molprozent) an Einheiten (b₁) aus der multifunktionellen Verbindung in dem sich ergebenden Copolyester
c = Menge (Molprozent) an Einheiten (c) aus der monofunktionellen Verbindung in dem sich ergebenden Copolyester
p = durchschnittliche Anzahl funktioneller Gruppen der multifunktionellen Verbindung, von der sich die Einheiten (b₁) ableiten.
(2) Schmelzpolykondensation des im vorherigen Schritt (1) erhaltenen Esters zur Herstellung eines Polyester-Präpolymers; und
(3) Unterziehen des im vorherigen Schritt (2) erhaltenen Polyester-Präpolymers einer Festphasen-Polymerisation.

14. Verfahren zur Herstellung eines Copolyesters nach einem der Ansprüche 7 und 8, umfassend:
(1) Veresterung oder Umesterung der Ausgangsmaterialien, die im Wesentlichen aus einer Dicarbonsäurekomponente, umfassend Terephthalsäure oder ein Ester-bildendes Derivat davon und einer Diolkomponente, umfassend Ethylenglycol, bestehen, wobei die Ausgangsmaterialien des Weiteren umfassen:
(i) mindestens eine bifunktionelle Verbindung, ausgewählt aus:
(a) Diolen (III) der folgenden Formel (III) 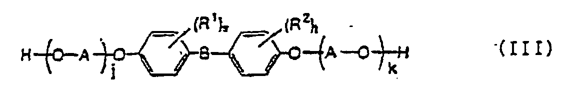 wobei A eine Gruppe der Formel -CH₂CH₂- oder der Formel -CH(CH₃)CH₂- ist, B eine zweiwertige Kohlenwasserstoffgruppe, eine Carbonylgruppe, eine Sulfonylgruppe, ein Sauerstoffatom oder eine direkte Bindung (-) ist, R¹ und R² jeweils unabhängig voneinander ein inerter Substituent sind, j und k jeweils unabhängig voneinander eine ganze Zahl von 0 bis 8 sind und s und t jeweils unabhängig voneinander eine ganze Zahl von 0 bis 4 sind;
(b) Diolen (IV) der folgenden Formel (IV) 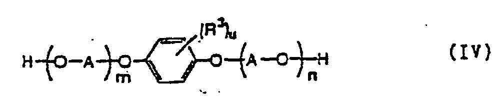 wobei A eine Gruppe der Formel -CH₂CH₂- oder der Formel -CH(CH₃)CH₂- ist, R³ ein inerter Substituent ist, m und n jeweils unabhängig voneinander eine ganze Zahl von 0 bis 8 sind und u eine ganze Zahl von 0 bis 4 ist; und
(c) Ester-bildende Derivate der oben genannten Verbindungen (a) und (b); und
(ii) mindestens eine multifunktionelle Verbindung, die mindestens 3 Carboxylgruppen, Hydroxylgruppen und/oder Ester-bildende Gruppen der vorher genannten Gruppen aufweist;
① die Menge der bifunktionellen Verbindung in den Ausgangsmaterialien ist so, dass das Verhältnis zwischen den Dioleinheiten (I) und/oder Dioleinheiten (II) und den gesamten Struktureinheiten des sich ergebenden Copolyesters 0,5 bis 7 Molprozent, bezogen auf die Mole aller Struktureinheiten beträgt; und
② die Menge der multifunktionellen Verbindung in den Ausgangsmaterialien ist so, dass das Verhältnis zwischen den Einheiten (b₂) aus der multifunktionellen Verbindung und den gesamten Struktureinheiten des sich ergebenden Copolyesters 0,005 bis 0,5 Molprozent, bezogen auf die Mole aller Struktureinheiten beträgt; und
(2) Schmelzpolykondensation des im vorherigen Schritt (1) erhaltenen Esters zur Herstellung eines Polyester-Präpolymers; und
(3) Unterziehen des im vorherigen Schritt (2) erhaltenen Polyester-Präpolymers einer Festphasen-Polymerisation.

15. Verfahren zur Herstellung eines Copolyesters nach einem der Ansprüche 7 und 8, umfassend:
(1) Veresterung oder Umesterung der Ausgangsmaterialien, die im Wesentlichen aus einer Dicarbonsäurekomponente, umfassend Terephthalsäure oder ein Ester-bildendes Derivat davon, und einer Diolkomponente, umfassend Ethylenglycol, bestehen, wobei die Ausgangsmaterialien des Weiteren umfassen:
(i) mindestens eine bifunktionelle Verbindung, ausgewählt aus:
(a) Diolen (III) der folgenden Formel (III) 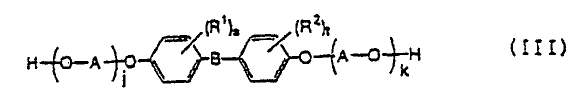 wobei A eine Gruppe der Formel -CH₂CH₂- oder der Formel -CH(CH₃)CH₂- ist, B eine zweiwertige Kohlenwasserstoffgruppe, eine Carbonylgruppe, eine Sulfonylgruppe, ein Sauerstoffatom oder eine direkte Bindung (-) ist, R¹ und R² jeweils unabhängig voneinander ein inerter Substituent sind, j und k jeweils unabhängig voneinander eine ganze Zahl von 0 bis 8 sind und s und t jeweils unabhängig voneinander eine ganze Zahl von 0 bis 4 sind;
(b) Diolen (IV) der folgenden Formel (IV) 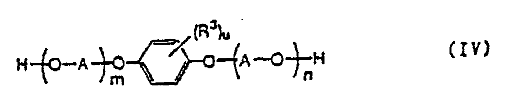 wobei A eine Gruppe der Formel -CH₂CH₂- oder der Formel -CH(CH₃)CH₂- ist, R³ ein inerter Substituent ist, m und n jeweils unabhängig voneinander eine ganze Zahl von 0 bis 8 sind und u eine ganze Zahl von 0 bis 4 ist; und
(c) Ester-bildende Derivate der oben genannten Verbindungen (a) und (b); und
(ii) mindestens eine multifunktionelle aliphatische oder alicyclische Verbindung, die mindestens 3 Hydroxylgruppen und/oder Ester-bildende Derivate davon aufweist;
① die Menge der bifunktionellen Verbindung in den Ausgangsmaterialien ist so, dass das Verhältnis zwischen den Dioleinheiten (I) und/oder Dioleinheiten (II) und den gesamten Struktureinheiten des sich ergebenden Copolyesters 0,5 bis 7 Molprozent, bezogen auf die Mole aller Struktureinheiten beträgt; und
② die Menge der multifunktionellen Verbindung in den Ausgangsmaterialien ist so, dass das Verhältnis zwischen den Einheiten (b₃) aus der multifunktionellen Verbindung und den gesamten Struktureinheiten des sich ergebenden Copolyesters 0,005 bis 0,5 Molprozent, bezogen auf die Mole aller Struktureinheiten beträgt;
(2) Schmelzpolykondensation des im vorherigen Schritt (1) erhaltenen Esters zur Herstellung eines Polyester-Präpolymers; und
(3) Unterziehen des im vorherigen Schritt (2) erhaltenen Polyester-Präpolymers einer Festphasen-Polymerisation.

16. Verfahren zur Herstellung eines Copolyesters nach einem der Ansprüche 4 und Ansprüche 5 bis 8, umfassend:
(1) Veresterung oder Umesterung der Ausgangsmaterialien, die im Wesentlichen aus einer Dicarbonsäurekomponente, umfassend Terephthalsäure oder ein Ester-bildendes Derivat davon und einer Diolkomponente, umfassend Ethylenglycol, bestehen, wobei die Ausgangsmaterialien des Weiteren umfassen:
(a) mindestens eine bifunktionelle Verbindung ausgewählt aus aromatischen Dicarbonsäuren mit kondensierten Ringen und aromatischen Dicarbonsäuren mit zusammengesetzten Ringen;
(b) mindestens eine multifunktionellen Verbindung, die mindestens 3 Carboxylgruppen, Hydroxylgruppen und/oder Ester-bildende Gruppen der vorher genannten Gruppen aufweist; und
(c) mindestens eine monofunktionelle Verbindung ausgewählt aus Monocarbonsäuren, einwertigen Alkoholen und Ester-bildenden Derivaten der vorhergenannten Verbindungen;
① die Menge der bifunktionellen Verbindung in den Ausgangsmaterialien ist so, dass das Verhältnis zwischen den Einheiten (a₃) aus der bifunktionellen Verbindung und den gesamten Struktureinheiten des sich ergebenden Copolyesters 0,5 bis 7 Molprozent, bezogen auf die Mole aller Struktureinheiten beträgt;
② die Menge der multifunktionellen Verbindung in den Ausgangsmaterialien ist so, dass das Verhältnis zwischen den Einheiten (b₁) aus der multifunktionellen Verbindung und den gesamten Struktureinheiten des sich ergebenden Copolyesters 0,005 bis 1 Molprozent, bezogen auf die Mole aller Struktureinheiten beträgt; und
③ die Menge der monofunktionellen Verbindung in den Ausgangsmaterialien ist so, dass das Verhältnis zwischen den Einheiten (c) aus der multifunktionellen Verbindung und den gesamten Struktureinheiten des sich ergebenden Copolyesters, bezogen auf die Mole aller Struktureinheiten folgender Formel (α) genügt${\text{{20x(p-2)xb}}_{\text{1}} {\text{}≧ c≧ {0,1x(p-2)xb}}_{\text{1}} \text{}}$ wobei:
b₁ = Menge (Molprozent) an Einheiten (b₁) aus der multifunktionellen Verbindung in dem sich ergebenden Copolyester
c = Menge (Molprozent) an Einheiten (c) aus der monofunktionellen Verbindung in dem sich ergebenden Copolyester
p = durchschnittliche Anzahl funktioneller Gruppen der multifunktionellen Verbindung, von der sich die Einheiten (b₁) ableiten.
(2) Schmelzpolykondensation des im vorherigen Schritt (1) erhaltenen Esters zur Herstellung eines Polyester-Präpolymers; und
(3) Unterziehen des im vorherigen Schritt (2) erhaltenen Polyester-Präpolymers einer Festphasen-Polymerisation.

17. Verfahren zur Herstellung eines Copolyesters nach einem der Ansprüche 5 bis 8, umfassend:
(1) Veresterung oder Umesterung der Ausgangsmaterialien, die im Wesentlichen aus einer Dicarbonsäurekomponente, umfassend Terephthalsäure oder ein Ester-bildendes Derivat davon und einer Diolkomponente, umfassend Ethylenglycol, bestehen, wobei die Ausgangsmaterialien des Weiteren umfassen:
(a) mindestens eine bifunktionelle Verbindung ausgewählt aus aromatischen Dicarbonsäuren mit kondensierten Ringen und aromatischen Dicarbonsäuren mit zusammengesetzten Ringen; und
(b) mindestens eine multifunktionelle Verbindung, die mindestens 3 Carboxylgruppen, Hydroxylgruppen und/oder Ester-bildende Gruppen der vorher genannten Gruppen aufweist;
① die Menge der bifunktionellen Verbindung in den Ausgangsmaterialien ist so, dass das Verhältnis zwischen den Einheiten (a₃) aus der bifunktionellen Verbindung und den gesamten Struktureinheiten des sich ergebenden Copolyesters 0,5 bis 7 Molprozent, bezogen auf die Mole aller Struktureinheiten beträgt; und
② die Menge der multifunktionellen Verbindung in den Ausgangsmaterialien ist so, dass das Verhältnis zwischen den Einheiten (b₁) aus der multifunktionellen Verbindung und den gesamten Struktureinheiten des sich ergebenden Copolyesters 0,005 bis 0,5 Molprozent, bezogen auf die Mole aller Struktureinheiten beträgt;
(2) Schmelzpolykondensation des im vorherigen Schritt (1) erhaltenen Esters zur Herstellung eines Polyester-Präpolymers; und
(3) Unterziehen des im vorherigen Schritt (2) erhaltenen Polyester-Präpolymers einer Festphasen-Polymerisation.

## Revendications

(1) Copolyester essentiellement constitué par des motifs acide téréphtalique et des motifs éthylène glycol,
(2) ledit copolyester comprenant en plus :
(i) au moins un groupe de motifs (a₁) provenant d'un composé bifonctionnel alicyclique ou aliphatique choisi dans le groupe constitué par des acides dicarboxyliques alicycliques ou aliphatiques, des diols et des acides hydroxycarboxyliques autres que l'éthylène glycol, en une quantité de 1 à 4% molaires, ramenée au nombre total de moles des motifs constitutifs dudit copolyester ;
(ii) des motifs (b₁) provenant d'au moins un composé multifonctionnel ayant au moins 3 groupes carboxyles, groupes hydroxyles et/ou groupes formant des esters des précédents, en une quantité de 0,005 à 1% molaires, ramenée au nombre total de moles des motifs constitutifs dudit copolyester ; et
(iii) des motifs (c) provenant d'au moins un composé monofonctionnel choisi dans le groupe constitué par des acides monocarboxyliques, des alcools monohydriques et des dérivés formant des esters des précédents, en une quantité satisfaisant la formule (α) suivante :${\text{{20 x (p - 2) x b}}_{\text{1}} {\text{} ≥ c ≥ {0,1 x (p - 2) x b}}_{\text{1}} \text{}}$ où : b₁ = teneur (% molaires) en motifs (b₁) provenant dudit composé multifonctionnel dans ledit copolyester,
c = teneur (% molaires) en motifs (c) provenant dudit composé monofonctionnel dans ledit copolyester,
p = nombre moyen de groupes fonctionnels dudit composé multifonctionnel dérivant desdits motifs b₁.

2. Copolyester selon la revendication 1, dans lequel lesdits motifs (a₁) provenant d'un composé bifonctionnel alicyclique ou aliphatique sont des motifs cyclohexanediméthanol ou bien des motifs acide cyclohexanedicarboxylique.

3. (1) Copolyester essentiellement constitué par des motifs acide téréphtalique et des motifs éthylène glycol,
(2) ledit copolyester comprenant en plus :
(i) au moins un groupe de motifs bifonctionnels (a₂) choisis dans le groupe constitué par :
(a) des motifs diols (I) représentés chacun par la formule (I) suivante : 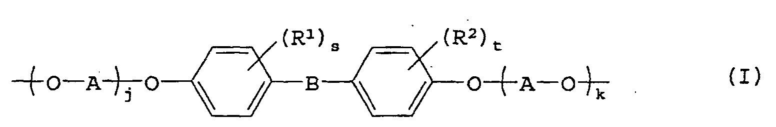 dans laquelle A est un groupe représenté par la formule -CH₂CH₂- ou la formule -CH(CH₃)CH₂-, B est un groupe hydrocarbure divalent, un groupe carbonyle, un groupe sulfonyle, un atome d'oxygène ou une liaison directe (-), R¹ et R² sont chacun indépendamment un substituant inerte, j et k sont chacun indépendamment un nombre entier valant de 0 à 8, et s et t sont chacun indépendamment un nombre entier valant de 0 à 4 ; et
(b) des motifs diols (II) représentés chacun par la formule (II) suivante : 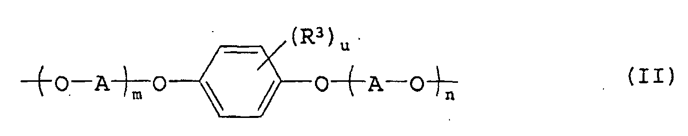 dans laquelle A est un groupe représenté par la formule -CH₂CH₂- ou la formule -CH(CH₃)CH₂-, R³ est un substituant inerte, m et n sont chacun indépendamment un nombre entier valant de 0 à 8, et u est un nombre entier valant de 0 à 4 ;
en une quantité de 0,5 à 7% molaires, ramenée au nombre total de moles des motifs constitutifs dudit copolyester ;
(ii) des motifs de composé multifonctionnel (b₁) provenant d'au moins un composé multifonctionnel ayant au moins 3 groupes carboxyles, groupes hydroxyles et/ou groupes formant des esters des précédents, en une quantité de 0,005 à 1% molaires, ramenée au nombre total de moles des motifs constitutifs dudit copolyester ; et
(iii) des motifs de composé monofonctionnel (c) provenant d'au moins un composé monofonctionnel choisi dans le groupe constitué par des acides monocarboxyliques, des alcools monohydriques et des dérivés formant des esters des précédents, en une quantité satisfaisant la formule (α) suivante :${\text{{20 x (p - 2) x b}}_{\text{1}} {\text{} ≥ c ≥ {0,1 x (p - 2) x b}}_{\text{1}} \text{}}$ où : b₁ = teneur (% molaires) en motifs (b₁) provenant dudit composé multifonctionnel dans ledit copolyester,
c = teneur (% molaires) en motifs (c) provenant dudit composé monofonctionnel dans ledit copolyester,
p = nombre moyen de groupes fonctionnels dudit composé multifonctionnel dérivant desdits motifs b₁.

4. (1) Copolyester essentiellement constitué par des motifs acide téréphtalique et des motifs éthylène glycol, (2) ledit copolyester comprenant en plus :
(i) au moins un groupe de motifs de composé bifonctionnel (a₃) choisis dans le groupe constitué par des motifs provenant d'un acide dicarboxylique aromatique du type à noyaux condensés et des motifs provenant d'un acide dicarboxylique aromatique du type à assemblage de noyaux cycliques assemblés, en une quantité de 0,5 à 7% molaires, ramenée au nombre total de moles des motifs constitutifs dudit copolyester ;
(ii) des motifs de composé multifonctionnel (b₁) provenant d'au moins un composé multifonctionnel ayant au moins 3 groupes carboxyles, groupes hydroxyles et/ou groupes formant des esters des précédents, en une quantité de 0,005 à 1% molaires, ramenée au nombre total de moles des motifs constitutifs dudit copolyester ; et
(iii) des motifs de composé monofonctionnel (c) provenant d'au moins un composé monofonctionnel choisi dans le groupe constitué par des acides monocarboxyliques, des alcools monohydriques et des dérivés formant des esters des. précédents, en une quantité satisfaisant la formule (α) suivante :${\text{{20 x (p - 2) x b}}_{\text{1}} {\text{} ≥ c ≥ {0,1 x (p - 2) x b}}_{\text{1}} \text{}}$ où : b₁ = teneur (% molaires) en motifs (b₁) provenant dudit composé multifonctionnel dans ledit copolyester,
c = teneur (% molaires) en motifs (c) provenant dudit composé monofonctionnel dans ledit copolyester,
p = nombre moyen de groupes fonctionnels dudit composé multifonctionnel dérivant lesdits motifs b₁.

5. Copolyester selon la revendication 4, dans lequel lesdits motifs de composé bifonctionnel (a₃) sont des motifs d'acide 2,6-naphtalènedicarboxylique et/ou des motifs d'acide 4,4'-biphényldicarboxylique.

6. Copolyester selon l'une quelconque des revendications 1 à 5, ayant en plus une viscosité intrinsèque de 0,8 à 1,5 dl/g.

7. Copolyester selon l'une quelconque des revendications 1 à 6, ayant en plus une viscosité à l'état fondu (η₁) à une température de 270°C et selon un angle de cisaillement de 0,1 rad s⁻¹ et une viscosité à l'état fondu (η₂) à une température de 270°C et selon un angle de cisaillement de 100 rad s⁻¹ de 5 x 10⁴ à 5 x 10⁶ poises et de 5 x 10³ à 5 x 10⁵ poises, respectivement, lesdites viscosités à l'état fondu (η₁) et (η₂) satisfaisant la formule (β) suivante :${\text{-0,7 ≤ (1/3) log}}_{\text{10}} {\text{(η}}_{\text{2}} {\text{/η}}_{\text{1}} \text{) ≤ -0,2}$

8. Copolyester selon l'une quelconque des revendications 1 à 7, ayant en plus une contrainte de fragilité de fusion au cisaillement critique (σ_{ff}) à une température de 270°C d'au moins 1 x 10⁶ dyne/cm² et une contrainte de cisaillement (σ₁₀₀) à une vitesse de cisaillement de 100/s et à une température de 270°C qui n'est pas supérieure à ladite contrainte de fragilité de fusion au cisaillement critique (σ_{ff}).

9. Article moulé comprenant le copolyester selon l'une quelconque des revendications 1 à 8.

10. Article moulé selon la revendication 9, qui est un article moulé par extrusion-soufflage.

11. Procédé de production d'articles moulés, comprenant le moulage par extrusion-soufflage du copolyester selon l'une quelconque des revendications 1 à 8.

12. Procédé de production d'un copolyester selon l'une quelconque des revendications 1 et 2 et 6 à 8, comprenant les étapes consistant à :
(1) soumettre à une estérification ou transestérification des matériaux de départ essentiellement constitués par un composant acide dicarboxylique, comprenant l'acide téréphtalique ou des dérivés formant des esters de celui-ci, et un composant diol comprenant l'éthylène glycol, lesdits matériaux de départ comprenant en plus :
(a) au moins un composé bifonctionnel alicyclique ou aliphatique choisi dans le groupe constitué par des acides dicarboxyliques alicycliques ou aliphatiques, des acides hydroxycarboxyliques et des dérivés formant des esters des précédents, et des diols alicycliques ou aliphatiques autres que l'éthylène glycol ;
(b) au moins un composé multifonctionnel ayant au moins 3 groupes carboxyles, groupes hydroxyles et/ou groupes formant des esters des précédents ; et
(c) au moins un composé monofonctionnel choisi dans le groupe constitué par des acides monocarboxyliques, des alcools monohydriques et des dérivés formant des esters des précédents ;
① la teneur dudit composé bifonctionnel alicyclique ou aliphatique dans lesdits matériaux de départ étant telle que le ratio des motifs (a₁) provenant dudit composé bifonctionnel alicyclique ou aliphatique sur le total des motifs constituant le copolyester ainsi obtenu prend une valeur de 1 à 4% molaires, ramenée au nombre total de moles des motifs constitutifs ;
② la teneur dudit composé multifonctionnel dans lesdits matériaux de départ étant telle que le ratio des motifs (b₁) provenant dudit composé multifonctionnel sur le total des motifs constituant le copolyester ainsi obtenu prend une valeur de 0,005 à 1% molaires, ramenée au nombre total de moles des motifs constitutifs ; et
③ la teneur dudit composé monofonctionnel dans lesdits matériaux de départ étant telle que le ratio des motifs (c) provenant dudit composé monofonctionnel sur le total des motifs constitutifs du copolyester ainsi obtenu, ramené au nombre total de moles des motifs constitutifs, satisfait la formule (α) suivante :${\text{{20 x (p - 2) x b}}_{\text{1}} {\text{} ≥ c ≥ {0,1 x (p - 2) x b}}_{\text{1}} \text{}}$ où : b₁ = teneur (% molaires) en motifs (b₁) provenant dudit composé multifonctionnel dans ledit copolyester,
c = teneur (% molaires) en motifs (c) provenant dudit composé monofonctionnel dans ledit copolyester résultant,
p = nombre moyen de groupes fonctionnels dudit composé multifonctionnel dérivant desdits motifs b₁ ;
(2) polycondenser à l'état fondu l'ester obtenu à l'étape (1) ci-dessus afin de préparer un prépolymère de polyester ; et
(3) soumettre ledit prépolymère de polyester obtenu à l'étape (2) ci-dessus à une polymérisation en phase solide.

13. Procédé de production d'un copolyester selon l'une quelconque des revendications 3 et 6 à 8, comprenant les étapes consistant à :
(1) soumettre à une estérification ou transestérification des matériaux de départ essentiellement constitués par un composant acide dicarboxylique, comprenant l'acide téréphtalique ou des dérivés formant des esters de celui-ci, et un composant diol comprenant l'éthylène glycol, lesdits matériaux de départ comprenant en plus :
(i) au moins un composé. bifonctionnel choisi dans le groupe constitué par :
(a) des diols (III) représentés par la formule (III) suivante : 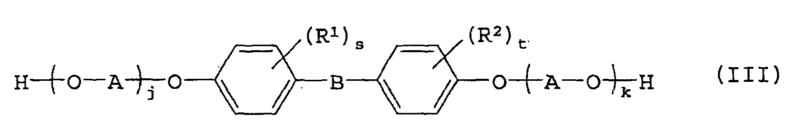 dans laquelle A est un groupe représenté par la formule -CH₂CH₂- ou la formule -CH(CH₃)CH₂-, B est un groupe hydrocarbure divalent, un groupe carbonyle, un groupe sulfonyle, un atome d'oxygène ou une liaison directe (-), R¹ et R² sont chacun indépendamment un substituant inerte, j et k sont chacun indépendamment un nombre entier valant de 0 à 8, et s et t sont chacun indépendamment un nombre entier valant de 0 à 4 ; et
(b) des diols (IV) représentés par la formule (IV) suivante : 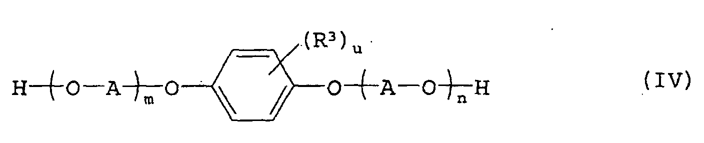 dans laquelle A est un groupe représenté par la formule -CH₂CH₂- ou la formule -CH(CH₃)CH₂-, R³ est un substituant inerte, m et n sont chacun indépendamment un nombre entier valant de 0 à 8, et u est un nombre entier valant de 0 à 4 ; et
(c) des dérivés formant des esters des composés (a) et (b) ci-dessus ;
(ii) au moins un composé multifonctionnel ayant au moins 3 groupes carboxyles, groupes hydroxyles et/ou groupes formant des esters des précédents ; et
(iii) au moins un composé monofonctionnel choisi dans le groupe constitué par des acides monocarboxyliques, des alcools monohydriques et des dérivés formant des esters des précédents ;
① la teneur dudit composé bifonctionnel dans lesdits matériaux de départ étant telle que le ratio des motifs diols (I) et/ou des motifs diols (II) sur le total des motifs constituant le copolyester ainsi obtenu prend une valeur de 0,5 à 7% molaires, ramenée au nombre total de. moles des motifs constitutifs ;
② la teneur dudit composé multifonctionnel dans lesdits matériaux de départ étant telle que le ratio des motifs (b₁) provenant dudit composé multifonctionnel sur le total des motifs constituant le copolyester ainsi obtenu prend une valeur de 0,005 à 1% molaires, ramenée au nombre total de moles des motifs constitutifs ; et
③ la teneur dudit composé monofonctionnel dans lesdits matériaux de départ étant telle que le ratio des motifs (c) provenant dudit composé monofonctionnel sur le total des motifs constitutifs du copolyester ainsi obtenu, ramené au nombre total de moles des motifs constitutifs, satisfait la formule (α) suivante :${\text{{20 x (p - 2) x b}}_{\text{1}} {\text{} ≥ c ≥ {0,1 x (p - 2) x b}}_{\text{1}} \text{}}$ où : b₁ = teneur (% molaires) en motifs (b₁) provenant dudit composé multifonctionnel dans ledit copolyester,
c = teneur (% molaires) en motifs (c) provenant dudit composé monofonctionnel dans ledit copolyester,
p = nombre moyen de groupes fonctionnels dudit composé multifonctionnel dérivant desdits motifs b₁.
(2) polycondenser à l'état fondu l'ester obtenu à l'étape (1) ci-dessus afin de préparer un prépolymère de polyester ; et
(3) soumettre ledit prépolymère de polyester obtenu à l'étape (2) ci-dessus à une polymérisation en phase solide.

14. Procédé de production d'un copolyester selon l'une quelconque des revendications 7 et 8, comprenant les étapes consistant à :
(1) soumettre à une estérification ou transestérification des matériaux de départ essentiellement constitués par un composant acide dicarboxylique, comprenant l'acide téréphtalique ou des dérivés formant des esters de celui-ci, et un composant diol comprenant l'éthylène glycol, lesdits matériaux de départ comprenant en plus :
(i) au moins un composé bifonctionnel choisi dans le groupe constitué par :
(a) des diols (III) représentés par la formule (III) suivante : 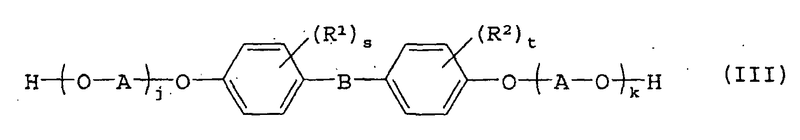 dans laquelle A est un groupe représenté par la formule -CH₂CH₂- ou la formule -CH(CH₃)CH₂-, B est un groupe hydrocarbure divalent, un groupe carbonyle, un groupe sulfonyle, un atome d'oxygène ou une liaison directe (-), R¹ et R² sont chacun indépendamment un substituant inerte, j et k sont chacun indépendamment un nombre entier valant de 0 à 8, et s et t sont chacun indépendamment un nombre entier valant de 0 à 4 ; et
(b) des diols (IV) représentés par la formule (IV) suivante : 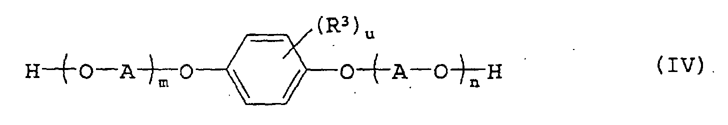 dans laquelle A est un groupe représenté par la formule -CH₂CH₂- ou la formule -CH(CH₃)CH₂-, R³ est un substituant inerte, m et n sont chacun indépendamment un nombre entier valant de 0 à 8, et u est un nombre entier valant de 0 à 4 ; et
(c) des dérivés formant des esters des composés (a) et (b) ci-dessus ;
(ii) au moins un composé multifonctionnel ayant au moins 3 groupes carboxyles, groupes hydroxyles et/ou groupes formant des esters des précédents, l'un au moins desdits groupes étant un groupe carboxyle ou des groupes formant des esters de celui-ci ; et
① la teneur dudit composé bifonctionnel dans lesdits matériaux de départ étant telle que le ratio des motifs diols (I) et/ou des motifs diols (II) sur le total des motifs constituant le copolyester ainsi obtenu prend une valeur de 0,5 à 7% molaires, ramenée au nombre total de moles des motifs constitutifs ; et
② la teneur dudit composé multifonctionnel dans lesdits matériaux de départ étant telle que le ratio des motifs (b₂) provenant dudit composé multifonctionnel sur le total des motifs constituant le copolyester ainsi obtenu prend une valeur de 0,005 à 0,5% molaires, ramenée au nombre total de moles des motifs constitutifs ;
(2) polycondenser à l'état fondu l'ester obtenu à l'étape (1) ci-dessus afin de préparer un prépolymère de polyester ; et
(3) soumettre ledit prépolymère de polyester obtenu à l'étape (2) ci-dessus à une polymérisation en phase solide.

15. Procédé de production d'un copolyester selon l'une quelconque des revendications 7 et 8, comprenant les étapes consistant à :
(1) soumettre à une estérification ou transestérification des matériaux de départ essentiellement constitués par un composant acide dicarboxylique, comprenant l'acide téréphtalique ou des dérivés formant des esters de celui-ci, et un composant diol comprenant l'éthylène glycol, lesdits matériaux de départ comprenant en plus :
(i) au moins un composé bifonctionnel choisi dans le groupe constitué par :
(a) des diols (III) représentés par la formule (III) suivante : 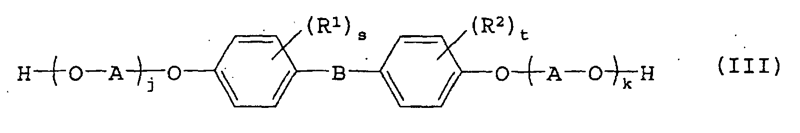 dans laquelle A est un groupe représenté par la formule -CH₂CH₂- ou la formule -CH(CH₃)CH₂-, B est un groupe hydrocarbure divalent, un groupe carbonyle, un groupe sulfonyle, un atome d'oxygène ou une liaison directe (-), R¹ et R² sont chacun indépendamment un substituant inerte, j et k sont chacun indépendamment un nombre entier valant de 0 à 8, et s et t sont chacun indépendamment un nombre entier valant de 0 à 4 ; et
(b) des diols (IV) représentés par la formule (IV) suivante : 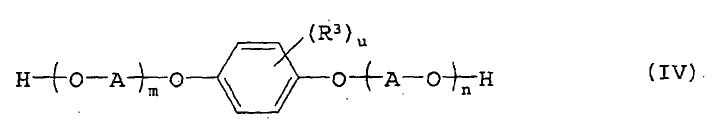 dans laquelle A est un groupe représenté par la formule -CH₂CH₂- ou la formule -CH(CH₃)CH₂-, R³ est un substituant inerte, m et n sont chacun indépendamment un nombre entier valant de 0 à 8, et u est un nombre entier valant de 0 à 4 ; et
(c) des dérivés formant des esters des composés (a) et (b) ci-dessus ; et
(ii) au moins un composé multifonctionnel aliphatique ou alicyclique ayant au moins 3 groupes hydroxyles et/ou groupes formant des esters de ceux-ci ;
① la teneur dudit composé bifonctionnel dans lesdits matériaux de départ étant telle que le ratio des motifs diols (I) et/ou des motifs diols (II) sur le total des motifs constituant le copolyester ainsi obtenu prend une valeur de 0,5 à 7% molaires, ramenée au nombre total de moles des motifs constitutifs ; et
② la teneur dudit composé multifonctionnel dans lesdits matériaux de départ étant telle que le ratio des motifs (b₃) provenant dudit composé multifonctionnel sur le total des motifs constituant le copolyester ainsi obtenu prend une valeur de 0,005 à 0,5% molaires, ramenée au nombre total de moles des motifs constitutifs ;
(2) polycondenser à l'état fondu l'ester obtenu à l'étape (1) ci-dessus afin de préparer un prépolymère de polyester ; et
(3) soumettre ledit prépolymère de polyester obtenu à l'étape (2) ci-dessus à une polymérisation en phase solide.

16. Procédé de production d'un copolyester selon l'une quelconque des revendications 4 et 5 à 8, comprenant les étapes consistant à :
(1) soumettre à une estérification ou transestérification des matériaux de départ essentiellement constitués par un composant acide dicarboxylique, comprenant l'acide téréphtalique ou des dérivés formant des esters de celui-ci, et un composant diol comprenant l'éthylène glycol, lesdits matériaux de départ comprenant en plus :
(a) au moins un composé bifonctionnel choisi dans le groupe constitué par des acides dicarboxyliques aromatiques du type à noyaux condensés et des acides dicarboxyliques aromatiques du type à assemblage de noyaux ;
(b) au moins un composé multifonctionnel ayant au moins 3 groupes carboxyles, groupes hydroxyles et/ou groupes formant des esters des précédents ; et
(c) au moins un composé monofonctionnel choisi dans le groupe constitué par des acides monocarboxyliques, des alcools monohydriques et des dérivés formant des esters des précédents ;
① la teneur dudit composé bifonctionnel dans lesdits matériaux de départ étant telle que le ratio des motifs (a₃) provenant dudit composé bifonctionnel sur le total des motifs constituant le copolyester ainsi obtenu prend une valeur de 0,5 à 7% molaires, ramenée au nombre total de moles des motifs constitutifs ;
② la teneur dudit composé multifonctionnel dans lesdits matériaux de départ étant telle que le ratio des motifs (b₁) provenant dudit composé multifonctionnel sur le total des motifs constituant le copolyester ainsi obtenu prend une valeur de 0,005 à 1% molaires, ramenée au nombre total de moles des motifs constitutifs ; et
③ la teneur dudit composé monofonctionnel dans lesdits matériaux de départ étant telle que le ratio des motifs (c) provenant dudit composé monofonctionnel sur le total des motifs constitutifs du copolyester ainsi obtenu, ramené au nombre total de moles des motifs constitutifs, satisfait la formule (α) suivante :${\text{{20 x (p - 2) x b}}_{\text{1}} {\text{} ≥ c ≥ {0,1 x (p - 2) x b}}_{\text{1}} \text{}}$ où : b₁ = teneur (% molaires) en motifs (b₁) provenant dudit composé multifonctionnel dans ledit copolyester,
c = teneur (% molaires) en motifs (c) provenant dudit composé monofonctionnel dans ledit copolyester,
p = nombre moyen de groupes fonctionnels dudit composé multifonctionnel dérivant desdits motifs b₁.
(2) polycondenser à l'état fondu l'ester obtenu à l'étape (1) ci-dessus afin de préparer un prépolymère de polyester ; et
(3) soumettre ledit prépolymère de polyester obtenu à l'étape (2) ci-dessus à une polymérisation en phase solide.

17. Procédé de production d'un copolyester selon l'une quelconque des revendications 5 à 8, comprenant les étapes consistant à :
(1) soumettre à une estérification ou transestérification des matériaux de départ essentiellement constitués par un composant acide dicarboxylique, comprenant l'acide téréphtalique ou des dérivés formant des esters de celui-ci, et un composant diol comprenant l'éthylène glycol, lesdits matériaux de départ comprenant en plus :
(a) au moins un composé bifonctionnel choisi dans le groupe constitué par des acides dicarboxyliques aromatiques du type à noyaux condensés et des acides dicarboxyliques aromatiques du type à assemblage de noyaux ; et
(b) au moins un composé multifonctionnel ayant au moins 3 groupes carboxyles, groupes hydroxyles et/ou groupes formant des esters des précédents ;
① la teneur dudit composé bifonctionnel dans lesdits matériaux de départ étant telle que le ratio des motifs (a₃) provenant dudit composé bifonctionnel sur le total des motifs constituant le copolyester ainsi obtenu prend une valeur de 0,5 à 7% molaires, ramenée au nombre total de moles des motifs constitutifs ; et
② la teneur dudit composé multifonctionnel dans lesdits matériaux de départ étant telle que le ratio des motifs (b₁) provenant dudit composé multifonctionnel sur le total des motifs constituant le copolyester ainsi obtenu prend une valeur de 0,005 à 0,5% molaires, ramenée au nombre total de moles des motifs constitutifs ;
(2) polycondenser à l'état fondu l'ester obtenu à l'étape (1) ci-dessus afin de préparer un prépolymère de polyester ; et
(3) soumettre ledit prépolymère de polyester obtenu à l'étape (2) ci-dessus à une polymérisation en phase solide.
